(19) Europäisches Patentamt
European Patent Office
Office européen des brevets

(11) EP 4 424 634 A1

(12) **EUROPEAN PATENT APPLICATION**
published in accordance with Art. 153(4) EPC

(43) Date of publication:
**04.09.2024 Bulletin 2024/36**

(21) Application number: **22887206.5**

(22) Date of filing: **28.10.2022**

(51) International Patent Classification (IPC):
***C01B 3/40*** (2006.01) ***C01B 3/56*** (2006.01)
***H01M 8/00*** (2016.01) ***H01M 8/04*** (2016.01)
***H01M 8/0612*** (2016.01) ***B01J 23/83*** (2006.01)

(52) Cooperative Patent Classification (CPC):
**B01J 23/83; C01B 3/40; C01B 3/56; H01M 8/00; H01M 8/04; H01M 8/0612**

(86) International application number:
**PCT/JP2022/040546**

(87) International publication number:
**WO 2023/074881 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2021 JP 2021176567**

(71) Applicants:
- **National Institute for Materials Science**
  **Tsukuba-shi, Ibaraki 305-0047 (JP)**
- **National University Corporation Shizuoka University**
  **Shizuoka-shi, Shizuoka 422-8529 (JP)**
- **EBARA CORPORATION**
  **Ota-ku,**
  **Tokyo 144-8510 (JP)**

(72) Inventors:
- **ABE, Hideki**
  **Tsukuba-shi, Ibaraki 305-0047 (JP)**
- **NISHIMURA, Chikashi**
  **Tsukuba-shi, Ibaraki 305-0047 (JP)**
- **NOHARA, Yukiko**
  **Tsukuba-shi, Ibaraki 305-0047 (JP)**
- **OKURA, Naoko**
  **Tsukuba-shi, Ibaraki 305-0047 (JP)**
- **FUKUHARA, Choji**
  **Hamamatsu-shi, Shizuoka 432-8561 (JP)**
- **WATANABE, Ryo**
  **Hamamatsu-shi, Shizuoka 432-8561 (JP)**
- **AKAISHI, Mamoru**
  **Tokyo 144-8510 (JP)**
- **TOYOSHIBA, Kenta**
  **Tokyo 144-8510 (JP)**

(74) Representative: **Wimmer, Hubert**
**Wagner & Geyer Partnerschaft mbB**
**Patent- und Rechtsanwälte**
**Gewürzmühlstrasse 5**
**80538 München (DE)**

(54) **HYDROGEN PRODUCTION METHOD AND HYDROGEN PRODUCTION DEVICE**

(57) A hydrogen production method that reduces carbon dioxide emissions outside the system is provided.

A hydrogen production method including: performing a dry reforming reaction to obtain a synthesis gas containing carbon monoxide and hydrogen from a source gas containing methane and carbon dioxide in the presence of a dry reforming catalyst; performing a solid carbon capture reaction by reacting the synthesis gas in the presence of a catalyst for capturing solid carbon to generate solid carbon from the carbon monoxide in the synthesis gas, thereby obtaining the solid carbon and a processed gas; and separating the processed gas into an emission gas and hydrogen to obtain hydrogen, wherein a content molar ratio $CO/CO_2$ of a content of the carbon monoxide to a content of the carbon dioxide in the synthesis gas, reaction temperature $T_1$ (°C) of the dry reforming reaction, and reaction temperature $T_2$ (°C) of the solid carbon capture reaction satisfy the following condition (1):
[Formula 1]

EP 4 424 634 A1

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2+(-0.130) \times$ T,+40.0
Gradient = $(1.69 \times 10^{-4}) \times (T_1)^2+(-0.205) \times T_1+62.2$

Fig. 3

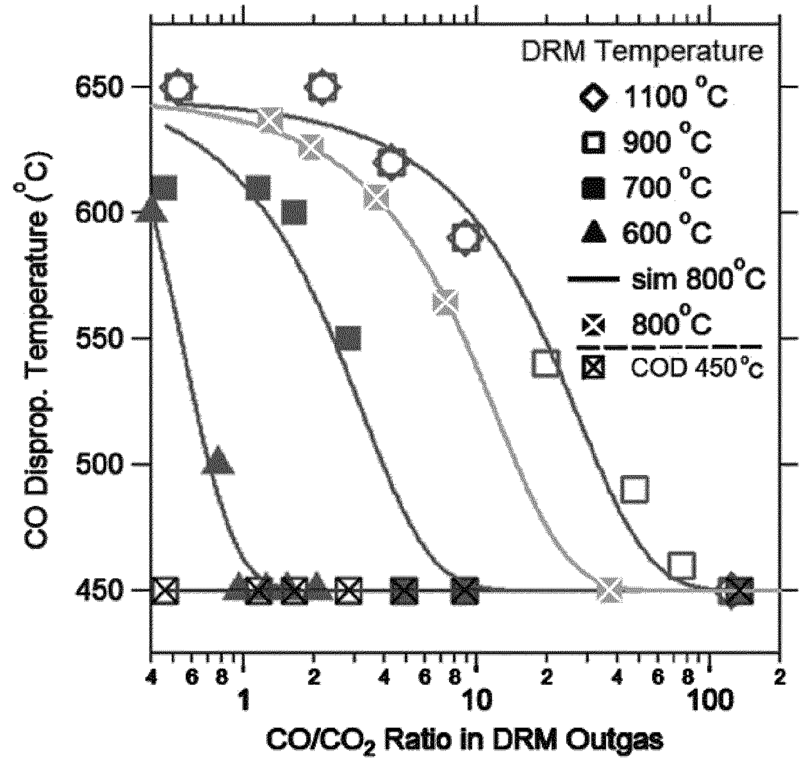

## Description

### TECHNICAL FIELD

The present invention relates to a hydrogen production method and a hydrogen production system.

### BACKGROUND ART

Dry reforming (DRM) methods in which methane and carbon dioxide are reacted and converted into a synthesis gas containing carbon monoxide and hydrogen have been known.

The DRM reaction ($CH_4 + CO_2$ -> $2CO + 2H_2$) may compete with a solid carbon deposition reaction ($CH_4$ -> $C + 2H_2$, $2CO$ -> $C + CO_2$) depending on the reaction conditions, and the precipitated carbon may cause problems such as decreasing the catalytic activity of the catalyst (coking).

As one of the solutions for the above problems, methods that can suppress degradation of catalysts and make them act for longer period of time by continuously performing the dry reforming reaction and the solid carbon capture reaction with separate catalysts have been developed.

NPL 1 describes, as a device capable of performing such methods, a system in which $Ni/Al_2O_3$ is used as a dry reforming catalyst and a stainless steel tube is used as a catalyst for capturing solid carbon, and they are connected in order.

### CITATION LIST

### NON PATENT LITERATURE

NPL 1: Journal of CO2 Utilization, 2017, vol. 22, p. 91-96

### SUMMARY OF INVENTION

### TECHNICAL PROBLEM

The present inventors have considered applying such a system described in NPL 1 to hydrogen production and conceived a device including a hydrogen separator added to the above system, and have advanced developments of a method that can continuously extract hydrogen using methane and carbon dioxide as starting materials.

As a result, the present inventors have found for the first time that a continuous hydrogen (hydrogen gas) production is possible according to the above method; however, by simply combining the three processes of the dry reforming reaction, the solid carbon capture reaction, and a hydrogen separation, more carbon dioxide may have been emitted outside the reaction system than carbon dioxide contained in the source gas introduced into the reaction system.

Reducing carbon dioxide emissions in the hydrogen production process is considered to be one of the important issues in hydrogen utilization. Accordingly, an object of the present invention is to provide a hydrogen production method in which the amount of carbon dioxide emitted outside the system are reduced. Another object of the present invention is to provide a hydrogen production system.

### SOLUTION TO PROBLEM

The present inventors have intensively studied to solve the above problem, and as a result, have found that the above problem can be solved by the following configuration.

[1] A hydrogen production method comprising:

performing a dry reforming reaction to obtain a synthesis gas comprising carbon monoxide and hydrogen from a source gas comprising methane and carbon dioxide in the presence of a dry reforming catalyst;

performing a solid carbon capture reaction by reacting the synthesis gas in the presence of a catalyst for capturing solid carbon to generate solid carbon from the carbon monoxide in the synthesis gas, thereby obtaining the solid carbon and a processed gas; and

separating the processed gas into an emission gas and hydrogen to obtain hydrogen,

wherein a content molar ratio $CO/CO_2$ of a content of the carbon monoxide to a content of the carbon dioxide in the synthesis gas, reaction temperature $T_1$ (°C) of the dry reforming reaction, and reaction temperature $T_2$ (°C) of the solid carbon capture reaction satisfy the following condition (1):

[Formula 1]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2+(-0.130) \times T_1+40.0$ Gradient = $(1.69 \times 10^{-4}) \times (T_1)^2+(-0.205) \times T_1+62.2$

[2] The hydrogen production method according to [1], wherein the reaction temperature $T_2$ is a temperature equal to or higher than an activity onset temperature of the catalyst for capturing solid carbon.
[3] The hydrogen production method according to [1] or [2], wherein the content molar ratio $CH_4/CO_2$ of a content of the methane to a content of the carbon dioxide in the source gas is 0.5 or less.
[4] The hydrogen production method according to any one of [1] to [3], wherein the reaction temperature $T_1$ is a temperature equal to or higher than an activity onset temperature of the dry reforming catalyst.
[5] The hydrogen production method according to any one of [1] to [4], wherein the reaction temperature $T_1$ is 600°C or higher.
[6] The hydrogen production method according to any one of [1] to [5], further comprising recovering heat from the emission gas and using the heat for at least one reaction selected from the group consisting of the dry reforming reaction and the solid carbon capture reaction.
[7] The hydrogen production method according to [6], wherein the recovering is performed by introducing the emission gas into a fuel cell.
[8] The hydrogen production method according to [6], wherein the recovering is performed by combusting the emission gas.
[9] The hydrogen production method according to any one of [1] to [8], wherein the separating the processed gas is performed with a hydrogen separation membrane.
[10] A hydrogen production system comprising:

a dry reforming reactor that performs a dry reforming reaction to obtain a synthesis gas comprising carbon monoxide and hydrogen from a source gas comprising methane and carbon dioxide in the presence of a dry reforming catalyst;
a solid carbon collector that performs a solid carbon capture reaction by reacting the synthesis gas in the presence of a catalyst for capturing solid carbon to generate solid carbon from the carbon monoxide in the synthesis gas, thereby obtaining the solid carbon and a processed gas;
a hydrogen separator that separates the processed gas into an emission gas and hydrogen;
a first thermostat that controls reaction temperature $T_1$ (°C) of the dry reforming reaction;
a second thermostat that controls reaction temperature $T_2$ (°C) of the solid carbon capture reaction;
a source gas controller that controls a composition of the source gas; and
a regulator,
wherein the regulator regulates the first thermostat, the second thermostat, and the source gas controller such that a content molar ratio $CO/CO_2$ of a content of the carbon monoxide to a content of the carbon dioxide in the synthesis gas, the reaction temperature $T_1$ (°C), and the reaction temperature $T_2$ (°C) satisfy the following condition (1):
[Formula 2]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2+(-0.130) \times T_1+40.0$
Gradient = $(1.69 \times 10^{-4}) \times (T_1)^2+(-0.205) \times T_1+62.2$

[11] The hydrogen production system according to [10], wherein the regulator regulates the source gas controller such that a content molar ratio $CH_4/CO_2$ of a content of the methane to a content of the carbon dioxide in the source gas is 0.5 or less.
[12] The hydrogen production system according to [10] or [11], wherein the regulator regulates the first thermostat and the second thermostat to regulate reaction the temperature $T_1$ to a temperature equal to or higher than an activity onset temperature of the dry reforming catalyst and to regulate reaction the temperature $T_2$ to a temperature equal to or higher than an activity onset temperature of the catalyst for capturing solid carbon.
[13] The hydrogen production system according to any one of [10] to [12], further comprising a heat recovery module for recovering heat from the emission gas.
[14] The hydrogen production system according to [13], wherein the heat is used for heating at least one selected from the group consisting of the dry reforming reactor and the solid carbon collector.
[15] The hydrogen production system according to any one of [10] to [14], wherein the hydrogen separator comprises a hydrogen separation membrane.
[16] The hydrogen production system according to [13], wherein the heat recovery module comprises a fuel cell.
[17] A hydrogen production method comprising:

a dry reforming reaction step of obtaining a synthesis gas comprising carbon monoxide and hydrogen from a source gas comprising methane and carbon dioxide in the presence of a dry reforming catalyst;
a solid carbon capture step of introducing the synthesis gas from the dry reforming reaction step to generate solid carbon from the carbon monoxide in the synthesis gas in the presence of a catalyst for capturing solid carbon, thereby obtaining a processed gas; and
a hydrogen separation step of extracting hydrogen from the processed gas from the solid carbon capture step to obtain an emission gas comprising carbon dioxide,
wherein the emission gas from the hydrogen separation step is introduced into the dry reforming reaction step to circulate carbon dioxide without emitting outside.

[18] The hydrogen production method according to [17], wherein methane is combusted to generate heat and carbon dioxide, the generated heat is introduced into the dry reforming reaction step, and the source gas comprising carbon dioxide in an amount equal to the generated carbon dioxide is introduced into the dry reforming reaction step to capture carbon in an amount equal to carbon contained in carbon dioxide and methane in the source gas as solid carbon in the solid carbon capture step.
[19] The hydrogen production method according to [17] or [18], further comprising taking out and combusting a portion of hydrogen separated in the hydrogen separation step and supplying generated heat to the dry reforming reaction step.
[20] The hydrogen production method according to any one of [17] to [19], wherein heat from the emission gas is recovered and supplied to the dry reforming reaction step before introducing the emission gas from the hydrogen separation step into the dry reforming reaction step.
[21] A hydrogen production system comprising:

a dry reforming reactor that obtains a synthesis gas comprising carbon monoxide and hydrogen from a source gas comprising methane and carbon dioxide in the presence of a dry reforming catalyst;
a solid carbon collector that introduces the synthesis gas from the dry reforming reactor to generate solid carbon from the carbon monoxide in the synthesis gas in the presence of a catalyst for capturing solid carbon, thereby obtaining a processed gas;
a hydrogen separator that extracts hydrogen from the processed gas from the solid carbon collector to obtain an emission gas comprising carbon dioxide;
a first flow path that supplies the synthesis gas from the dry reforming reactor to the solid carbon collector;
a second flow path that supplies the processed gas from the solid carbon collector to the hydrogen separator; and
a third flow path that supplies the emission gas from the hydrogen separator to the dry reforming reactor,
wherein carbon dioxide is circulated internally without being emitted outside.

[22] The hydrogen production system according to [21], further comprising a methane combustion furnace and a heat supply path that supplies heat from the methane combustion furnace to the dry reforming reactor.
[23] The hydrogen production system according to [21] or [22], further comprising a hydrogen extraction path that takes out a portion of hydrogen from the hydrogen separator, a hydrogen combustion furnace that combusts the taken-out hydrogen, and a heat supply path that supplies heat from the hydrogen combustion furnace to the dry reforming reactor.
[24] The hydrogen production system according to any one of [21] to [23], wherein a heat recovery module that recovers heat from the emission gas is connected to the middle of the third flow path, and the heat recovered in the heat recovery module is supplied to the dry reforming reactor.

[25] The hydrogen production system according to any one of [21] to [24], further comprising a compressor in the first flow path.

[26] The hydrogen production system according to [25], further comprising a heat exchanger that converts heat generated in the solid carbon collector into steam and supplies the steam to the compressor.

[27] The hydrogen production system according to [25], wherein a pressure control valve is provided at an inlet of the hydrogen separator, and a gas holder and a pressure control valve are provided at an outlet of the hydrogen separator.

[28] The hydrogen production system according to any one of [21] to [27], further comprising a water supply path that supplies water generated in the dry reforming reactor to the solid carbon collector.

[29] The hydrogen production system according to [28], further comprising a compressor in the first flow path, and further comprising a steam supply path that supplies steam generated in the solid carbon collector to the compressor.

[30] The hydrogen production system according to any one of [21] to [29], further comprising a compressor in the first flow path, wherein the first flow path at downstream side of the compressor is branched to have a plurality of the solid carbon collectors arranged in parallel, and valves are provided at an inlet and an outlet of each of the solid carbon collectors.

[31] The hydrogen production system according to [30], further comprising a buffer tank in the first flow path at downstream side of the compressor and upstream side of the branch.

[32] The hydrogen production system according to any one of [21] to [31], further comprising a compressor in the first flow path, wherein a plurality of the solid carbon collectors is arranged in series, and a gas composition controller is provided between each of the solid carbon collectors.

ADVANTAGEOUS EFFECTS OF INVENTION

The present invention can provide a hydrogen production method in which carbon dioxide emissions outside the system are reduced. Typically, a hydrogen production method in which the amount of carbon dioxide derived outside the system is less than the amount of carbon dioxide introduced into the system can be provided. The present invention can also provide a hydrogen production system.

BRIEF DESCRIPTION OF DRAWINGS

[Fig. 1] Fig. 1 is a block diagram of an embodiment of a hydrogen production system that can be used to carry out the production method of the present invention.

[Fig. 2] Fig. 2 shows a thermal equilibrium calculation result of the Boudouard reaction ($2CO \rightarrow CO_2 + C$).

[Fig. 3] Fig. 3 is a diagram showing the relationship of reaction temperature $T_1$, reaction temperature $T_2$, and $CO/CO_2$ in the synthesis gas.

[Fig. 4] Fig. 4 is a diagram showing the relationship of Inflection and Gradient and reaction temperature $T_1$.

[Fig. 5] Fig. 5 is a diagram showing reaction temperature $T_1$ dependency of the relationship between $CH_4/CO_2$ in the source gas and $CO/CO_2$ in the synthesis gas.

[Fig. 6] Fig. 6 is a flow diagram of the hydrogen production method of the present invention.

[Fig. 7] Fig. 7 is a block diagram of a first embodiment of the hydrogen production system of the present invention.

[Fig. 8] Fig. 8 is a flow diagram of hydrogen production with hydrogen production system 200.

[Fig. 9] Fig. 9 is a flow diagram of a regulation process performed by regulator 201.

[Fig. 10] Fig. 10 is a block diagram of a modification example of the hydrogen production system of the present invention.

[Fig. 11] Fig. 11 is a cross-sectional view of the main part of one embodiment of a catalyst for capturing solid carbon.

[Fig. 12] Fig. 12 is a block diagram showing the main part of the hydrogen production method of the present invention.

[Fig. 13] Fig. 13 is a block diagram showing a basic configuration of a hydrogen production system that can be used to carry out the hydrogen production method of the present invention.

[Fig. 14] Fig. 14 is a block diagram showing an embodiment (heat supply from a methane combustion furnace to a dry reforming reaction) of a hydrogen production system that can be used to carry out the hydrogen production method of the present invention.

[Fig. 15] Fig. 15 is a block diagram of another embodiment (heat supply from a hydrogen combustion furnace to a dry reforming reaction) of a hydrogen production system that can be used to carry out the hydrogen production method of the present invention.

[Fig. 16] Fig. 16 is a block diagram of another embodiment (heat recovery from emission gas and heat supply to a dry reforming reaction) of a hydrogen production system that can be used to carry out the hydrogen production method of the present invention.

[Fig. 17] Fig. 17 is a block diagram of another embodiment (heat recovery from emission gas and heat regulation) of a hydrogen production system that can be used to carry out the hydrogen production method of the present invention.

[Fig. 18] Fig. 18 is a block diagram of another embodiment (including a compressor) of a hydrogen production system that can be used to carry out the hydrogen production method of the present invention.

[Fig. 19] Fig. 19 is a block diagram of another embodiment (in which a plurality of solid carbon collectors is arranged in parallel) of a hydrogen production system that can be used to carry out the hydrogen production method of the present invention.

[Fig. 20] Fig. 20 is a block diagram of another embodiment (in which a plurality of solid carbon collectors is arranged in series) of a hydrogen production system that can be used to carry out the hydrogen production method of the present invention.

[Fig. 21] Fig. 21 is a graph showing the gas composition at each temperature in a solid carbon collector.

[Fig. 22] Fig. 22 is a block diagram of another embodiment (temperature regulations of a DRM reaction and a solid carbon capture reaction) of a hydrogen production system that can be used to carry out the hydrogen production method of the present invention.

[Fig. 23] Fig. 23 is a photograph of a hydrogen production system used in a demonstration experiment.

[Fig. 24] Fig. 24 is a result of the demonstration test.

[Fig. 25] Fig. 25 is a schematic diagram showing a simulation of material balance and energy balance of the hydrogen production method of Example 2.

[Fig. 26] Fig. 26 is a schematic diagram showing a simulation of material balance and energy balance of the hydrogen production method of Example 3.

[Fig. 27] Fig. 27 is a schematic diagram showing a simulation of material balance and energy balance of the hydrogen production method of Example 4.

[Fig. 28] Fig. 28 is a schematic diagram showing a simulation of material balance and energy balance of the hydrogen production method of Example 5.

## DESCRIPTION OF EMBODIMENTS

Hereinafter, the present invention is described in detail.

While the configurations may be described below based on the representative embodiments of the present invention, the present invention is not limited to such embodiments.

As used herein, a numerical range represented by using "X to Y" means a range that includes the numerical values represented by X and Y as a lower limit value and an upper limit value, respectively.

In the following description, portions having the same function and/or structure may be given the same reference numerals, and descriptions thereof may be omitted.

### [Hydrogen production method]

The hydrogen production method of the present invention (hereinafter also referred to as "the present production method") includes a step (dry reforming step) of performing a dry reforming reaction to obtain a synthesis gas containing carbon monoxide and hydrogen from a source gas containing methane and carbon dioxide in the presence of a dry reforming catalyst; a step (carbon capture step) of performing a solid carbon capture reaction to react the synthesis gas in the presence of a catalyst for capturing solid carbon to generate solid carbon from the carbon monoxide in the synthesis gas, thereby obtaining the solid carbon and a processed gas; and a step (hydrogen separation step) of separating the processed gas into an emission gas and hydrogen to obtain hydrogen (hydrogen gas).

One of the characteristics of the present invention is to regulate a content molar ratio ($CO/CO_2$) of a content of carbon monoxide to a content of carbon dioxide in the synthesis gas, reaction temperature $T_1$ (°C) of the dry reforming reaction, and reaction temperature $T_2$ (°C) of the solid carbon capture reaction to satisfy the following condition (1) in order to obtain the desired effects.

[Formula 3]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2 + (-0.130) \times T_1 + 40.0$
Gradient = $(1.69 \times 10^{-4}) \times (T_1)^2 + (-0.205) \times T_1 + 62.2$

The following describes, first, an embodiment of hydrogen production system that can be used to carry out the present production method, and then the significance of the above condition (1) and the estimation mechanism where the effect of the present invention is obtained by regulating the relationship between $CO/CO_2$ in the synthesis gas and reaction temperatures $T_1$ and $T_2$ as described above.

Fig. 1 is a block diagram of an embodiment of a hydrogen production system that can be used to carry out the present production method.

Hydrogen production system 100 has dry reforming reactor 103 (hereinafter also referred to as a "DRM reactor"), solid carbon collector 106, and hydrogen separator 107, which are connected in order via flow path 115 for circulating gas.

DRM reactor 103 has dry reforming catalyst 101 (hereinafter also referred to as a "DRM catalyst") and first thermostat 102 for regulating the temperature of the gas circulating in DRM reactor 103 (reaction temperature $T_1$). Solid carbon collector 106 also has catalyst for capturing solid carbon 104 and second thermostat 105 for regulating the temperature of the gas circulating in solid carbon collector 106 (reaction temperature $T_2$).

Source gas 110 containing methane ($CH_4$) and carbon dioxide ($CO_2$) is introduced into hydrogen production system 100 from the upstream side of DRM reactor 103 via flow path 115. Source gas 110 circulates in DRM reactor 103 and is converted to synthesis gas 111 by the DRM reaction (DRM reaction: $CH_4 + CO_2$ -> $2CO + 2H_2$). The resulting synthesis gas 111 contains carbon monoxide (CO) and hydrogen generated by the DRM reaction. The resulting synthesis gas 111 may also contain methane that can be carbon dioxide due to combustion, depending on the DRM reaction temperature $T_1$ (°C).

The structure of dry reforming reactor 103 is not particularly limited as long as source gas 110 (source gas stream) can be contacted with dry reforming catalyst 101 at reaction temperature $T_1$. For example, dry reforming reactor 103 may include a container in which source gas 110 can be circulated, dry reforming catalyst 101 fixed in the container, and first thermostat 102 that is a heater.

Dry reforming catalyst 101 may be a composite including a porous carrier containing alumina and an active ingredient carried on the porous carrier. Examples of the active ingredient may include nickel, cobalt, molybdenum, rhodium, ruthenium, aluminum, zirconium, magnesium, palladium, zinc, potassium, calcium, and an oxide thereof.

In addition to the above, the catalysts described in Japanese Patent Laid-Open No. 2006-055820, Japanese Patent Laid-Open No. 2019-37905, and the like can also be used as dry reforming catalyst 101.

The dry reforming catalyst is preferably "Ni#$Y_2O_3$", a catalyst described in Chemical. Science., 2019, volume 10, p3701-3705, from the viewpoint of obtaining a better effect of the present invention.

"Ni#$Y_2O_3$" is a catalyst in which fibrous metal nickel having a thickness of tens of nanometers and oxygen-deficient $Y_2O_3$ are intertwined to form a rooted structure.

"Ni#$Y_2O_3$" can be made, for example, by the following methods.

First, metal nickel and metal yttrium are dissolved in an argon atmosphere to synthesize a Ni-Y alloy. The powder of this Ni-Y alloy (average particle size of 50 to 60 μm) is then heated with a gas stream consisting of CO, $O_2$, and Ar to synthesize "Ni#$Y_2O_3$".

Synthesis gas 111 is then introduced from the upstream side of solid carbon collector 106. Synthesis gas 111 becomes processed gas 112 by a solid carbon capture reaction while circulating in solid carbon collector 106 (solid carbon capture (Boudoard) reaction: 2CO -> C + $CO_2$).

Fig. 11 is a cross-sectional view of the main part of an embodiment of catalyst for capturing solid carbon 104. Catalyst for capturing solid carbon 104 has tubular substrate 11 and coating layer 12 formed on the inner wall surface of substrate 11.

Since substrate 11 of catalyst for capturing solid carbon 104 is a tubular substrate, synthesis gas 111 can be easily circulated in catalyst for capturing solid carbon 104. It is also an advantage that, as the tubular substrate has less inner structure that interferes with the circulation, less clog due to the deposited solid carbon occurs.

Substrate 11 is not particularly limited as long as it can be coated with a metal-containing component, and may be a stainless steel tube, an aluminum tube, or the like. When substrate 11 is a tubular substrate having an inner wall surface of a circular cross section, the inner diameter thereof is not particularly limited, and may be, for example, 10 to 300 mm, or 10 to 1000 mm.

When substrate 11 is a tubular substrate, the length thereof is not particularly limited, and may be, for example, 20 to 5000 mm. Substrate 11 may be a linearly extending tubular substrate or a twisted tubular substrate.

Coating layer 12 contains at least one metal-containing component selected from the group consisting of iron oxide, cobalt oxide, magnesium oxide, molybdenum oxide, nickel oxide, manganese oxide, metal iron, metal cobalt, metal magnesium, metal molybdenum, metal nickel, and metal manganese as a main component.

Coating layer 12 may contain iron oxide, and in particular, may contain $Fe_3O_4$, $Fe_2O_3$, FeO, or a combination thereof as iron oxide. The content of the metal-containing component in coating layer 12 is preferably 40 mass% or more, more preferably 50 mass% or more, further preferably 60 mass% or more, particularly preferably 70 mass% or more, and preferably 100 mass% or less with respect to the total mass of coating layer 12 of 100 mass%.

Coating layer 12 may contain a carrier containing aluminum oxide ($Al_2O_3$) and metal iron carried thereon. In this case, the content of metal iron may be 40 to 50 mass% with respect to the mass of coating layer 12 of 100 mass%.

Coating layer 12 is formed to cover the entire or a portion of the surface (inner wall surface) of substrate 11. The thickness of coating layer 12 is not particularly limited, and may be, for example, 5 to 2000 μm or 10 to 2000 μm.

From the viewpoint of efficient deposition of solid carbon, coating layer 12 may be porous. The specific surface area of the porous coating layer may be from 5 to 1000 $m^2/g$.

Coating layer 12 can be formed, for example, by a method including adhering a coating solution containing at least one metal-containing component selected from the group consisting of iron oxide, cobalt oxide, magnesium oxide, molybdenum oxide, nickel oxide, manganese oxide, metal iron, metal cobalt, metal magnesium, metal molybdenum, metal nickel, and metal manganese, or a precursor thereof, and a solvent to a surface (e.g., an inner wall surface) of substrate 11; and removing the solvent from the coating solution adhered to the surface of substrate 11. The solvent of the coating solution may be, for example, water, alcohol, acetone, or a combination thereof.

Solid carbon collector 106 includes catalyst for capturing solid carbon 104 and second thermostat 105 for controlling reaction temperature $T_2$.

Specifically, solid carbon collector 106 includes a reaction tube, catalyst for capturing solid carbon 104 contained in the reaction tube, and second thermostat 105 that is a heater disposed around the reaction tube. A flow path for introducing synthesis gas 111 is connected to the upstream (primary) side of the reaction tube, and a flow path for emitting processed gas 112 is connected to the downstream (secondary) side of the reaction tube.

It should be noted that when synthesis gas 111 is introduced into solid carbon collector 106, solid carbon is deposited on coating layer 12 of catalyst for capturing solid carbon 104. The deposited solid carbon can be easily peeled off.

Processed gas 112 is introduced into hydrogen separator 107 from the upstream side thereof and separated into hydrogen 113 and emission gas 114.

Hydrogen separator 107 has the function of separating processed gas 112 into hydrogen 113 and emission gas 114, and may include a hydrogen separation membrane, a pressure swing adsorption mechanism, and the like.

For example, a palladium alloy-based thin membrane can be used as the hydrogen separation membrane. As the palladium alloy-based hydrogen separation membrane, those in which rare earth elements such as yttrium and gadolinium are added to palladium, those in which silver is added to palladium, and the like can be used.

Thin membranes containing mainly niobium, vanadium, titanium, tantalum, zirconium, or the like, instead of palladium can also be used.

Examples of such a hydrogen separation membrane include those described in Japanese Patent Laid-Open No. 2000-159503, Japanese Patent Laid-Open No. 2005-232533, and Japanese Patent Laid-Open No. 2006-43677 or the like.

As hydrogen separation membranes that have both excellent hydrogen permeability and hydrogen embrittlement resistance, those in which at least one metal component selected from the group consisting of chromium, iron, nickel, and cobalt, and further at least one metal component selected from the group consisting of aluminum, scandium, titanium, yttrium, zirconium, niobium, molybdenum, tantalum, lanthanum, cerium, praseodymium, neodymium, promethium, samarium, europium, gadolinium, terbium, dysprosium, holmium, erbium, thulium, ytterbium, and ruthenium are added to vanadium may also be used.

Such hydrogen separation membranes are described, for example, in Japanese Patent Laid-Open No. 2008-55295.

Hydrogen separator 107 including the hydrogen separation membrane typically includes the hydrogen separation membrane, a flow path for supplying processed gas 112 from the upstream (primary) side of the hydrogen separation membrane to the hydrogen separation membrane, a flow path for emitting hydrogen 113 permeated through the hydrogen separation membrane to the downstream (secondary) side, and a flow path for recovering emission gas 114 not permeated through the hydrogen separation membrane after contacting with the hydrogen separation membrane.

As such hydrogen separator 107 including a hydrogen separation membrane, those described in Japanese Patent Laid-Open No. 2019-5684 or the like can be used.

In addition to the above, hydrogen separator 107 using the Pressure Swing Adsorption (PSA) method can also be used. A PSA-type hydrogen separator typically includes an adsorption column filled with adsorbents, a pump, and a flow path connecting them. As the adsorbents, those that adsorb carbon dioxide, carbon monoxide, moisture and the like in processed gas 112 can be used.

As the adsorbents, activated carbon, zeolite, and alumina or the like can be used.

In the PSA-type hydrogen separator, adsorption, desorption, and washing are repeatedly performed as one cycle for each of the adsorption columns.

Adsorption is a step of adsorbing carbon dioxide, carbon monoxide and the like in processed gas 112 to the adsorbent to derive hydrogen.

Desorption is a step of reducing the pressure in the adsorption column to desorb carbon dioxide, carbon monoxide, and the like from the adsorbent and derive them as emission gas 114.

Washing is a step of washing the adsorption column with hydrogen.

In the PSA-type hydrogen separator, a flow path for introducing processed gas 112 is connected to the primary side, and a pipeline for deriving hydrogen 113, and a flow path for deriving emission gas 114 are connected to the secondary side, respectively.

It should be noted that emission gas 114 derived from hydrogen separator 107 contains carbon dioxide, carbon monoxide, unseparated hydrogen, and the like.

Next, the balance between the amount of $CO_2$ introduced as part of source gas 110 and the amount of $CO_2$ derived in emission gas 114 in the hydrogen production using hydrogen production system 100 is described. It should be noted that the amount of $CO_2$ derived is calculated considering the influence of CO that may be contained in emission gas 114 and may generate $CO_2$ by combustion.

First, a case is considered where source gas 110 (135 L/h) mixed with $CH_4$ and $CO_2$ at a rate 100 mmol/min at one atmosphere is introduced into DRM reactor 103 and flowed from the upstream to the downstream of flow path 115 of hydrogen production system 100. Here, DRM reactor 103 is kept at 600°C, i.e., reaction temperature $T_1$ is 600°C.

Assuming a thermodynamic equilibrium is established between DRM catalyst 101 and the gas stream in DRM reactor 103, the composition of synthesis gas 111 can be estimated by thermal equilibrium calculation.

As an example, when the composition of source gas 110 flowing into hydrogen production system 100 is assumed to have a volume ratio $CH_4:CO_2$= 1:9 (14:121 (L/h)), the composition of synthesis gas 111 is to be $CH_4:H_2:CO_2:CO:H_2O$ = 1:13:96:38:12 (L/h). That is, $CO/CO_2$ is 0.396.

When this synthesis gas is subjected to solid carbon capture at $T_2$ = 600°C, and CO and $CH_4$ contained in the emission gas after hydrogen separation are combusted to obtain $CO_2$, the amount of $CO_2$ contained in the gas released outside the system is 121 (L/h).

That is, the amount of $CO_2$ flowed into the hydrogen production system and the amount of $CO_2$ emitted are equal in calculation.

When the reaction temperatures $T_1$ and $T_2$ are set to 600°C similarly to the above, and $CO/CO_2$ in the synthesis gas is 0.953, the emission amount will be 105 L/h with respect to 101 L/h of $CO_2$ flowed into the hydrogen production system. When $CO/CO_2$ is 1.24, the emission amount will be 103 L/h with respect to the inflow amount of 90 L/h, and when $CO/CO_2$ is 1.53, the emission amount will be 102 L/h with respect to the inflow amount of 81 L/h.

On the other hand, when reaction temperature $T_1$ is 600°C and reaction temperature $T_2$ is 451°C, and $CO/CO_2$ in the synthesis gas is 0.396, the amount of $CO_2$ will be 116 L/h. In this case, the emission amount is less compared to the inflow amount of 121 L/h.

An estimation mechanism for obtaining a thermodynamic response as described above is described below.

Fig. 2 shows a thermal equilibrium calculation result of the Boudouard reaction (2CO -> $CO_2$ + C). In Fig. 2, the white (open) circular symbols and the black (closed) circular symbols represent molar fractions of $CO_2$ and CO (vertical axis: left) in processed gas 112 (derived gas, described as "Outgas" in the figure) relative to reaction temperature $T_2$, respectively. The white (open) square symbols represent $CO/CO_2$ (vertical axis: right) in processed gas 112 relative to reaction temperature $T_2$ (°C).

According to Fig. 2, the light-off temperature (activity onset temperature) can theoretically be estimated to be 450°C.

As used herein, the light-off temperature (activity onset temperature) means the lowest temperature at which the amount of CO contained in processed gas 112 reaches a significant value from zero when reaction temperature $T_2$ of the solid carbon capture reaction is gradually raised from 350°C while the mixture gas of CO and $CO_2$ are circulating.

As can be seen from Fig. 2, the equilibrium of the formula: 2CO -> $CO_2$ + C shifts from right to left in accordance with the change of reaction temperature $T_2$ from 350°C to 1200°C, and the molar fraction $CO_2$:CO of CO and $CO_2$ in processed gas 112 changes from about 0.5:0.0 to about 0.0:1.0.

That is, as reaction temperature $T_2$ is gradually raised, the equilibrium of the Boudouard reaction shifts from right to left, so that the amount of CO contained in processed gas 112 increases accordingly.

The content of CO in processed gas 112 affects the final amount of $CO_2$ emitted outside the system. By reducing the amount of CO emission, the final amount of $CO_2$ emission can be reduced.

The amount of $CO_2$ emitted outside the hydrogen production system is also affected by the amount of $CH_4$

contained in processed gas 112. When synthesis gas 111 contains $CH_4$, $CH_4$ is emitted into processed gas 112 because $CH_4$ is not involved in the solid carbon capture reaction. When such processed gas is combusted, $CO_2$ is generated.

The amount of $CH_4$ in synthesis gas 111 can be reworded as the residual $CH_4$ not used in the DRM reaction, and the residual $CH_4$ also needs to be controlled.

The present inventors have investigated conditions under which the amount of $CO_2$ derived becomes less than or equal to the amount of $CO_2$ introduced by regulating reaction temperature $T_2$ and $CO/CO_2$ in synthesis gas 111 to a predetermined range. As a result, the present inventors have focused a certain contiguous region formed by the "range", and further investigated the relationship of reaction temperature $T_1$, reaction temperature $T_2$, and $CO/CO_2$ in synthesis gas 111.

Specifically, the same calculation as above was performed while changing the reaction temperatures $T_1$ and $T_2$, and the relationship was investigated. Fig. 3 is a diagram showing the resulting relationship of reaction temperature $T_1$, reaction temperature $T_2$, and $CO/CO_2$ in synthesis gas 111.

In Fig. 3, "$CO/CO_2$ Ratio in DRM Outgas" on the horizontal axis means $CO/CO_2$ in synthesis gas 111. The vertical axis "CO Disprop. Temperature (°C)" means reaction temperature $T_2$. Each plot is a point at which the amount of $CO_2$ derived is equal to the amount of $CO_2$ introduced in calculation at "DRM Temperature", i.e., reaction temperature $T_1$.

For example, when reaction temperature $T_1$ is 600°C, the amount of $CO_2$ derived becomes less, typically less than the amount of $CO_2$ introduced, in the region inside each plot (in the direction towards origin).

From the results of Fig. 4, it can be seen that as reaction temperature $T_1$ increases, the region defined by each plot at which "the amount of $CO_2$ derived is equal to the amount of $CO_2$ introduced" becomes larger.

In the present invention, we postulated from Fig. 3 that a collection of points at which the amount of $CO_2$ derived is equal to the amount of $CO_2$ introduced at each reaction temperature $T_1$ follows a sigmoid curve. Furthermore, we have focused the fact that, as reaction temperature $T_1$ increases, the slope (absolute value) of this sigmoid curve decreases and the inflection point is shifted in the positive direction of the horizontal axis, and have further investigated.

Specifically, a region where "the amount of $CO_2$ derived is equal to the amount of $CO_2$ introduced" at reaction temperature $T_1$ of 900°C, 700°C, and 600°C was calculated using "COCO" software, and a region where the following condition (1):

[Formula 4]

$$(1)\ 450 < T_2 < 750 - \frac{300}{1 + e^{\left(\frac{\mathrm{Inflection} - (CO/CO_2)}{\mathrm{Gradient}}\right)}}$$

is satisfied was determined. It should be noted that "Inflection" means the inflection point (horizontal axis) of the sigmoid curve, and "Gradient" means the gradient of the slope.

[Table 1]

| Table 1 | Reaction temperature T1 (°C) | | | |
|---|---|---|---|---|
| | 600 | 700 | 900 | 800 |
| Inflection | 0.405 | 1.25 | 9.32 | 3.84 |
| Gradient | 0.190 | 1.68 | 14.8 | 6.36 |

Table 1 represents the Inflection and Gradient at each reaction temperature $T_1$, where the values at 600°C, 700°C, and 900°C were determined by fitting, respectively.

As is clear from the results of Table 1 and Fig. 3, Inflection and Gradient have a relationship that increases in response to an increase in reaction temperature $T_1$, and Fig. 4 is a diagram representing the relationship.

In Fig. 4, the horizontal axis represents reaction temperature $T_1$ (°C). The plot of triangle represents Inflection, and the plot of square represents Gradient. The respective relationships obtained from the fitting of each plot were determined as follows. It should be noted that reaction temperature $T_1$ (°C) is preferably 600°C or higher.

[Formula 5]

$$(2)\ \text{Inflection} = (1.06 \times 10^{-4}) \times (T_1)^2 + (-0.130) \times T_1 + 40.0$$
$$(3)\ \text{Gradient} = (1.69 \times 10^{-4}) \times (T_1)^2 + (-0.205) \times T_1 + 62.2$$

That is, it has been found that the region where the amount of $CO_2$ derived is significantly less, and typically the derived amount is less than that, at each reaction temperature $T_1$ shown in Fig. 4 is a region that satisfies the following condition (1).

[Formula 6]

$$(1)\ 450 < T_2 < 750 - \frac{300}{1 + e^{\left(\frac{\text{Inflection} - (CO/CO_2)}{\text{Gradient}}\right)}}$$

wherein Inflection = $(1.06 \times 10^{-4}) \times (T_1)^2 + (-0.130) \times T_1 + 40.0$

Gradient = $(1.69 \times 10^{-4}) \times (T_1)^2 + (-0.205) \times T_1 + 62.2$

It should be noted that the curve represented by "sim 800°C" in Fig. 3 is a sigmoid curve obtained by determining Inflection and Gradient at reaction temperature $T_1$ of 800°C from the above relationship formulas (2) and (3) (these results are described in Table 1), and obtaining the sigmoid curve at the right hand side of the inequality sign on the right side of the resulting (1). This curve is consistent with the plots obtained by separate calculations, and the above condition settings have been found to be correct.

From the above, it has been found that when the production method satisfies condition (1), the amount of $CO_2$ emitted outside the system is significantly reduced, and typically, the amount of $CO_2$ introduced and the amount of $CO_2$ derived are equal, or the amount of $CO_2$ derived is less.

It should be noted that it is easy for a person skilled in the art to operate hydrogen production system 100 under such conditions. This is because once the temperature of the dry reforming reaction (reaction temperature $T_1$) is determined, $CO/CO_2$ in the DRM outgas (i.e., synthesis gas 111) can be readily controlled by controlling $CH_4/CO_2$ in source gas 110.

Fig. 5 is a diagram showing reaction temperature $T_1$ dependency of the relationship between $CH_4/CO_2$ in the source gas and $CO/CO_2$ in synthesis gas 111.

The horizontal axis of Fig. 5 represents "$CH_4/CO_2$ in DRM InGas", i.e., $CH_4/CO_2$ in source gas 110, and the vertical axis represents "$CO/CO_2$ in DRM OutGas", i.e., $CO/CO_2$ in synthesis gas 111.

As shown in Fig. 5, once reaction temperature $T_1$ is determined, $CO/CO_2$ in the synthesis gas can be controlled to the desired value by simply controlling $CH_4/CO_2$ in the source gas, and the value can be easily determined by calculation.

For condition (1), $CO/CO_2$ is more than 0 and 124 or less, and the lower limit value thereof is preferably 0.20 or more. When $CO/CO_2$ is more than or equal to the above lower limit value, a better effect of the present invention can be obtained.

The upper limit value thereof is preferably 0.50 or less. When $CO/CO_2$ is less than or equal to the above upper limit value, a better effect of the present invention can be obtained.

Fig. 6 is a flow diagram of the present hydrogen production method.

First, as step S10, a dry reforming reaction is performed at reaction temperature $T_1$ (dry reforming reaction step).

The dry reforming reaction can be performed by circulating source gas 110 into dry reforming reactor 103 at reaction temperature $T_1$.

Reaction temperature $T_1$ is not particularly limited, but is preferably equal to or higher than an activity onset temperature of the dry reforming catalyst. In a specific embodiment, reaction temperature $T_1$ is preferably 600°C or higher and is preferably 1100°C or lower, more preferably 900°C or lower.

It should be noted that reaction temperature $T_1$ can be controlled by regulating first thermostat 102 of dry reforming reactor 103.

Methods for controlling the mixing ratio of methane and carbon dioxide in source gas 110 are not particularly limited, and examples thereof include methods for controlling the mixing ratio of methane and carbon dioxide supplied via a flow path, respectively, by a source gas controller having a gas mixer and a mass flow controller.

Once reaction temperature $T_1$ (°C) and $CH_4/CO_2$ in source gas 110 are determined, $CO/CO_2$ in synthesis gas 111 can be calculated.

Next, as step S11, a solid carbon capture reaction is performed such that the above-mentioned condition (1) is satisfied (solid carbon capture reaction step).

The solid carbon capture reaction can be performed by circulating synthesis gas 111 in solid carbon collector 106 at reaction temperature $T_2$.

The solid carbon capture reaction can be performed such that the condition (1) is satisfied, by determining the corresponding reaction temperature $T_2$ (°C) based on $CH_4/CO_2$ of source gas 110 supplied to the dry reforming reaction step and the composition ($CO/CO_2$) of synthesis gas 111 calculated at reaction temperature $T_1$, and regulating second thermostat 105.

Next, as step S12, processed gas 112 generated by the solid carbon capture reaction is separated into emission gas 114 and hydrogen 113 to obtain hydrogen 113 (hydrogen separation step). Hydrogen 113 can be separated by introducing processed gas 112 into hydrogen separator 107 and operating the separator under known conditions.

Next, as step S13, heat is recovered from emission gas 114 (heat recovery step). Since emission gas 114 contains carbon monoxide, hydrogen, and the like, heat can be recovered, for example, by combusting them or the like. The recovered heat is preferably used for the dry reforming reaction and/or solid carbon capture reaction. It should be noted that the hydrogen production method of the present invention may not include this step.

According to the present production method, the amount of $CO_2$ emitted outside the system can be significantly reduced when producing hydrogen from the source gas containing methane and carbon dioxide by controlling $CO/CO_2$ in synthesis gas 111 and reaction temperature $T_2$ to an appropriate range as described above.

[Hydrogen production system (First Embodiment)]

Fig. 7 is a block diagram of a first embodiment of the hydrogen production system of the present invention.

Hydrogen production system 200 has DRM reactor 103, solid carbon collector 106, hydrogen separator 107, heat recovery module 204, and source gas controller 205, which are connected via flow path 115 through which gas can be circulated.

Of these, source gas controller 205, DRM reactor 103, solid carbon collector 106, and hydrogen separator 107 are connected in order (in series), and heat recovery module 204 is connected at its primary side to flow path 115 for emission gas 114 branched from hydrogen separator 107. Flow path 115 connected to the secondary side of heat recovery module 204 is joined between source gas controller 205 and DRM reactor 103.

It should be noted that each part (component) in hydrogen production system 200 is connected by flow path 115 as described above, but the connection form (connection pathway) of each part in the hydrogen production system of the present invention is not limited to the above.

For example, hydrogen separator 107 may be arranged between DRM reactor 103 and solid carbon collector 106. Also, a plurality of one or more types of components may be arranged, where flow path 115 may be branched to have a plurality of same components arranged in parallel or a plurality of same components arranged in series.

In addition to the above, hydrogen production system 200 may further include one or more valves, water vapor removers, pressure controllers (pressure reducing valves, compressors), heat exchangers, or the like within the scope of exerting the effects of the present invention.

It should be noted that DRM reactor 103, solid carbon collector 106, and hydrogen separator 107 included in hydrogen production system 200 are similar to those already described, and descriptions thereof are omitted.

Heat recovery module 204 has the function of recovering heat from methane, carbon monoxide, hydrogen, and the like, which may be contained in emission gas 114 generated by the separation of hydrogen 113 from processed gas 112 by hydrogen separator 107. Specifically, the heat recovery module may be a burner that combusts emission gas 114, a fuel cell using emission gas 114 as a fuel, and the like.

The heat recovered by heat recovery module 204 is preferably used for temperature regulation of DRM reactor 103 and/or solid carbon collector 106 (in the figure, the transfer of heat is indicated by the symbol "Q").

Circulating gas 120 emitted from heat recovery module 204 contains carbon dioxide, which is mixed into source gas 110 and used.

As will be described later, since $CO_2$ generated during hydrogen production is significantly reduced by hydrogen production system 200, and in an embodiment, $CO_2$ contained in circulating gas 120 is less than or equal to the amount of $CO_2$ required in source gas 110, it is even possible to perform circulation operation without emitting $CO_2$ outside hydrogen production system 200 while supplying $CO_2$ from outside of the system.

Source gas controller 205 has the function of mixing methane 121 and carbon dioxide 122 to control the composition of source gas 110. Source gas controller 205 may include a gas mixer that mixes methane 121 supplied through a flow path and carbon dioxide 122 in any ratio, a mass flow controller, and the like.

Hydrogen production system 200 includes regulator 201. Regulator 201 is a computer including processor 202 and memory 203. Regulator 201 intends to regulate DRM reactor 103, solid carbon collector 106, and source gas controller 205.

In addition to the above, regulator 201 may also intend to regulate hydrogen separator 107 and heat recovery module 204.

Regulator 201 has a plurality of sensors for detecting an operating state of hydrogen production system 200. Detection signals from the plurality of sensors are input to regulator 201. Regulator 201 has temperature sensor (TEMP1) 130 that detects reaction temperature $T_1$ of the DRM reaction in DRM reactor 103, temperature sensor (TEMP2) 131 that detects reaction temperature $T_2$ of the solid carbon capture reaction in solid carbon collector 106, and flow sensor (FLOW) 132 that detects the mixing ratio of methane 121 and carbon dioxide 122 in source gas controller 205.

It should be noted that TEMP1 and TEMP2 may directly detect the temperatures of gas in DRM reactor 103 and solid carbon collector 106 or may estimate each temperature from physical quantities such as the outputs of first thermostat 102 and second thermostat 105 and the operating time.

Regulator 201 obtains, for example, the detection signal of temperature sensor (TEMP1) 130 for reaction temperature $T_1$ of the DRM reaction in DRM reactor 103, and controls the output of first thermostat 102 of DRM reactor 103 based on the obtained information.

Regulator 201 may have processor 202, which is a hardware device, and processor 202 may be a processor core that executes a program stored in a memory. Examples of such a processor core include a Central Processing Unit (CPU) and a Graphics Processing Unit (GPU).

Processor 202 may be a hardware logic circuit that includes a programmed logic unit. The digital circuit is a logic circuit array, such as an Application-Specific Integrated Circuit (ASIC), a Field Programmable Gate Array (FPGA), a System on a Chip (SoC), a Programmable Gate Array (PGA), a Complex Programmable Logic Device (CPLD), and the like.

Regulator 201 has memory 203. The memory is a non-transitional and tangible storage medium that non-transitorily stores a program and/or data readable by a processor. The storage medium is provided by a semiconductor memory, a magnetic disk, an optical disk, and the like. The program may be distributed as a program alone or as a storage medium in which the program is stored.

Processor 202 may also be a combination of a processor core and a hardware logic circuit.

Fig. 8 is a flow diagram of hydrogen production with hydrogen production system 200.

At step S20, first thermostat 102 and source gas controller 205 are regulated by regulator 201 to perform the DRM reaction at reaction temperature $T_1$ (°C).

Specifically, the state of $CH_4/CO_2$ at the time of the DRM reaction is obtained by flow sensor (FLOW) 132, and reaction temperature $T_1$ (°C) is obtained by temperature sensor (TEMP1) 130. It should be noted that the gas mixing ratio $CH_4/CO_2$ is controlled by source gas controller 205, and reaction temperature $T_1$ is controlled by first thermostat 102.

It should be noted that when source gas 110 is prepared by merging with circulating gas 120, $CH_4/CO_2$ in source gas controller 205 may be controlled based on the content of $CO_2$ in circulating gas 120.

Although the content of $CO_2$ in circulating gas 120 can be calculated from the composition of source gas 110 used in the production and the like, a sensor measuring the composition of circulating gas 120 may be provided in the middle of flow path 115, regulator 201 may obtain the measurement value, and thereby source gas controller 205 may be regulated.

At this step S20, synthesis gas 111 containing hydrogen and carbon monoxide is obtained from source gas 110 containing methane and carbon dioxide.

Next, at step S21, second thermostat 105 is regulated by regulator 201 to perform a solid carbon capture reaction such that condition (1) is satisfied.

Specifically, regulator 201 determines whether the reaction conditions of the solid carbon capture reaction satisfy condition (1) based on $CO/CO_2$ of synthesis gas 111 calculated from $CH_4/CO_2$ of source gas 110, reaction temperature $T_1$ (°C) obtained by temperature sensor (TEMP1) 130, and reaction temperature $T_2$ (°C) obtained by temperature sensor (TEMP2) 131, regulates the outputs of source gas controller 205, first thermostat 102, and second thermostat 105 such that the condition (1) is satisfied, and controls $CO/CO_2$, reaction temperature $T_1$, and reaction temperature $T_2$.

At this step S21, solid carbon is separated from synthesis gas 111 containing carbon monoxide and processed gas 112 containing carbon dioxide and the like is obtained. It should be noted that processed gas 112 may contain methane, carbon monoxide, water vapor, hydrogen, and the like in addition to carbon dioxide.

Next, at step S22, hydrogen 113 separated from processed gas 112 by hydrogen separator 107 is obtained, and emission gas 114 is also obtained.

Next, at step S23, the heat is recovered from emission gas 114 by heat recovery module 204, and circulating gas 120 is generated. Heat Q generated at step S23 is supplied to DRM reactor 103 and/or solid carbon collector 106 and used to control each reaction temperature.

Circulating gas 120 generated at step S23 is merged through the flow path at the middle of source gas controller 205 and DRM reactor 103 and is used as part of source gas 110.

Fig. 9 is a flow diagram of the regulation process performed by regulator 201 at step S21 described above.

Regulator 201 regulates the reaction conditions of the DRM reaction and the reaction conditions of the solid carbon capture reaction by performing the above regulation processes. The $CO_2$ emissions outside the system is significantly reduced by the above regulation processes.

At step S30, regulator 201 obtains information about the operating state of hydrogen production system 200. Specifically, the temperature of the gas inside DRM reactor 103 (reaction temperature $T_1$) is obtained by temperature sensor (TEMP1) 130. Each flow rate (mixing ratio) of methane and carbon dioxide in source gas controller 205 is also obtained by flow sensor (FLOW) 132.

At step S31, regulator 201 calculates $CO/CO_2$ in the synthesis gas from the $CH_4/CO_2$ ratio in the source gas in DRM reactor 103 and reaction temperature $T_1$ (°C).

The $CO/CO_2$ is calculated by the thermal equilibrium calculation based on $CH_4/CO_2$ in source gas 110 and reaction temperature $T_1$. Software programs such as "COCO" can be used for this calculation.

Next, at step S32, regulator 201 obtains the temperature of the gas in solid carbon collector 106 (reaction temperature $T_2$) by temperature sensor (TEMP2) 131.

Next, at step S33, regulator 201 determines whether the relationship of $CO/CO_2$ in synthesis gas 111 introduced into solid carbon collector 106, reaction temperature $T_1$ (°C), and reaction temperature $T_2$ (°C) satisfies condition (1).

Specifically, at step S33, a determination is made through the following steps.

First, Inflection and Gradient are calculated by Formulas (2) and (3) based on the obtained reaction temperature $T_1$ (°C). Next, from the calculated Inflection and Gradient, the sigmoid curve at the right hand side of the inequality sign on the right side of condition (1) is obtained, and whether they are within the range of the above sigmoid curve is determined based on the calculated $CO/CO_2$ and the obtained reaction temperature $T_2$.

When condition (1) is not satisfied as a result of the above determination (step S33: NO), at steps S34 to S36, reaction temperature $T_1$ is regulated using first thermostat 102 based on the detection signal of temperature sensor (TEMP1) 130 (step S34), each flow rate (mixing ratio) of methane and carbon dioxide in source gas 110 is regulated based on the detection signal of flow sensor (FLOW) 132 using source gas controller 205 (step S35), and reaction temperature $T_2$ is regulated using second thermostat 105 based on the detection signal of temperature sensor (TEMP2) 131 (step S36).

Thereafter, the determination is made at step S33 after performing steps S30 to S32 again, and steps S34 to S36 and S30 to S33 are repeated until condition (1) is satisfied.

When condition (1) is satisfied as a result of the determination at step S33 (step S33: Yes), the regulation process by regulator 201 ends, then returning to Fig. 8, subsequent steps (step S22 and step S23) are performed.

Since hydrogen production system 200 has regulator 201 that regulates each part such that condition (1) for $CO/CO_2$ in synthesis gas 111 and reaction temperature $T_2$ is satisfied, carbon dioxide emitted outside the system when producing hydrogen from the source gas is significantly reduced.

In addition, since hydrogen production system 200 has heat recovery module 204, heat from hydrogen contained in emission gas 114 and carbon monoxide can be recovered and the recovered heat can be used in the DRM reaction and/or the solid carbon capture reaction, thus carbon dioxide emitted by heating or the like (or electricity for heating) can also be reduced.

Hydrogen production system 200 further has a flow path that merges circulating gas 120 with source gas 110. As an embodiment, the content of carbon dioxide contained in circulating gas 120 is less than the (required) content of carbon dioxide contained in the source gas, thereby hydrogen production can be performed without emitting the carbon dioxide used in the process outside the system, in other words, while carbon dioxide is always supplied from outside of the system.

[Hydrogen production system (Modification example)]

Fig. 10 is a block diagram of a modification example of the hydrogen production system of the present invention.

Hydrogen production system 200 described above has DRM reactor 103 that performs a DRM reaction and solid carbon collector 106 that performs a solid carbon capture reaction, while hydrogen production system 300 of Fig. 10 has reactor 301 that serves as both a DRM reactor and a solid carbon collector, instead the above.

Inside reactor 301, DRM catalyst 101 and catalyst for capturing solid carbon 104 are disposed, and source gas 110 introduced from the primary side is first brought into contact with DRM catalyst 101 to generate synthesis gas 111. Synthesis gas 111 is then brought into contact with catalyst for capturing solid carbon 104 to generate processed gas 112. The above reactions are performed in turn in reactor 301.

The temperature in reactor 301 is controlled by third thermostat 302 regulated by regulator 201, and reaction temperature $T_1$ and reaction temperature $T_2$ are obtained by temperature sensor (TEMP1) 130 and temperature sensor (TEMP2) 131.

Examples of the specific forms of reactor 301 include a reactor having a reaction tube, DRM catalyst 101 and catalyst for capturing solid carbon 104 which are filled into the reaction tube in order, and a heater that controls the temperature of the reaction tube.

It should be noted that, although reactor 301 of hydrogen production system 300 has third thermostat 302 that controls the overall temperature, the hydrogen production system may have first thermostat 102 that independently regulates the temperature of the DRM reaction (reaction temperature $T_1$) and second thermostat 105 that independently regulates the temperature of the solid carbon capture reaction (reaction temperature $T_2$), which may be configured to be regulated by regulator 201.

Since hydrogen production system 300 has reactor 301 that serves as both a DRM reactor and a solid carbon collector, and also has a configuration in which the reaction temperature is performed by third thermostat 302, hydrogen production system 300 has an advantage that its structure is simpler and easier to regulate. This trend is more pronounced in particular when reaction temperature $T_1$ and reaction temperature $T_2$ are regulated to 600 to 620°C.

[Hydrogen production method and main parts of system]

Fig. 12 is a block diagram of the main part of a hydrogen production system that can be used to carry out the hydrogen production method of the present invention.

Hydrogen production system 100 has dry reforming reactor 103 (hereinafter also referred to as a "DRM reactor"), solid carbon collector 106, and hydrogen separator 107, which are connected in order via flow path 115 for circulating gas.

Source gas 110 containing methane ($CH_4$) and carbon dioxide ($CO_2$) is introduced into hydrogen production system 100 from the upstream side of DRM reactor 103 via flow path 115. Source gas 110 circulates through DRM reactor 103 and is converted to synthesis gas 111 by the DRM reaction (DRM reaction: $CH_4 + CO_2 \rightarrow 2CO + 2H_2$). The resulting synthesis gas 111 contains carbon monoxide (CO) and hydrogen generated by the DRM reaction. The resulting synthesis gas 111 may also contain methane that can be carbon dioxide by combustion, depending on the DRM reaction temperature $T_1$ (°C).

[Dry reforming reactor]

DRM reactor 103 is not particularly limited as long as source gas 110 (source gas stream) can be contacted with dry reforming catalyst 101, and DRM reactor 103 may include, for example, a container in which source gas 110 can be circulated, dry reforming catalyst 101 (hereinafter also referred to as a "DRM catalyst") fixed in the container, and first thermostat 102 for regulating the temperature of the gas circulating in DRM reactor 103 (reaction temperature $T_1$), as shown in Fig. 12.

Dry reforming catalyst 101 may be a composite including a porous carrier containing alumina and an active ingredient carried on the porous carrier. Examples of the active ingredient may include nickel, cobalt, molybdenum, rhodium, ruthenium, aluminum, zirconium, magnesium, palladium, zinc, potassium, calcium, and an oxide thereof.

In addition to the above, the catalysts described in Japanese Patent Laid-Open No. 2006-055820, Japanese Patent Laid-Open No. 2019-37905, and the like can also be used as dry reforming catalyst 101.

The dry reforming catalyst is preferably "Ni#$Y_2O_3$", a catalyst described in Chemical. Science., 2019, volume 10, p3701-3705, from the viewpoint of obtaining a better effect of the present invention.

"Ni#$Y_2O_3$" is a catalyst in which fibrous metal nickel having a thickness of tens of nanometers and oxygen-deficient $Y_2O_3$ are intertwined to form a rooted structure.

"Ni#$Y_2O_3$" can be made, for example, by the following methods.

First, metal nickel and metal yttrium are dissolved in an argon atmosphere to synthesize a Ni-Y alloy. The powder of this Ni-Y alloy (average particle size of 50 to 60 μm) is then heated with a gas stream consisting of CO, $O_2$, and Ar to synthesize "Ni#$Y_2O_3$".

Synthesis gas 111 is then introduced from the upstream side of solid carbon collector 106. Synthesis gas 111 becomes processed gas 112 by a solid carbon capture reaction while circulating in solid carbon collector 106 (solid carbon capture (Boudoard) reaction: $2CO \rightarrow C + CO_2$).

[Solid carbon collector]

Solid carbon collector 106 is not particularly limited as long as synthesis gas 111 from DRM reactor 103 can be contacted with catalyst for capturing solid carbon 104, and may include catalyst for capturing solid carbon 104 and second thermostat 105 for controlling reaction temperature $T_2$.

Specifically, solid carbon collector 106 includes a reaction tube, catalyst for capturing solid carbon 104 contained in the reaction tube, and second thermostat 105 that is a heater disposed around the reaction tube. First flow path 115a for introducing synthesis gas 111 from DRM reactor 103 is connected to the upstream (primary) side of the reaction tube, and second flow path 115b for emitting processed gas 112 is connected to the downstream (secondary) side of the reaction tube.

As shown in Fig. 11, catalyst for capturing solid carbon 104 can have a configuration having substrate 11 that is a tubular substrate and coating layer 12 formed on the inner wall surface of substrate 11.

When synthesis gas 111 is introduced into solid carbon collector 106, solid carbon is deposited on coating layer 12 of catalyst for capturing solid carbon 104. The deposited solid carbon can be easily peeled off.

Since substrate 11 of catalyst for capturing solid carbon 104 is a tubular substrate, synthesis gas 111 can be easily circulated in catalyst for capturing solid carbon 104. As the tubular substrate has less inner structure that interferes with the circulation, it is also an advantage that less clog due to the deposited solid carbon occurs.

Substrate 11 is not particularly limited as long as it can be coated with a metal-containing component, and may be a stainless steel tube, an aluminum tube, or the like. When substrate 11 is a tubular substrate having an inner wall surface of circular cross section, the inner diameter thereof is not particularly limited and may be, for example, 10 to 300 mm, or 10 to 1000 mm.

When substrate 11 is a tubular substrate, the length thereof is not particularly limited, and may be, for example, 20 to 5000 mm. Substrate 11 may be a linearly extending tubular substrate or a twisted tubular substrate.

Coating layer 12 contains at least one metal-containing component selected from the group consisting of iron oxide, cobalt oxide, magnesium oxide, molybdenum oxide, nickel oxide, manganese oxide, metal iron, metal cobalt, metal magnesium, metal molybdenum, metal nickel, and metal manganese as a main component.

Coating layer 12 may contain iron oxide, and in particular may contain $Fe_3O_4$, $Fe_2O_3$, FeO, or a combination thereof as iron oxide. The content of the metal-containing component in coating layer 12 is preferably 40 mass% or more, more preferably 50 mass% or more, further preferably 60 mass% or more, particularly preferably 70 mass% or more, and preferably 100 mass% or less with respect to the total mass of coating layer 12 of 100 mass%.

Coating layer 12 may contain a carrier containing aluminum oxide ($Al_2O_3$) and metal iron carried thereon. In this case, the content of metal iron may be 40 to 50 mass% with respect to the mass of coating layer 12 of 100 mass%.

Coating layer 12 is formed such that the entire or a portion of the surface (inner wall surface) of substrate 11 is covered. The thickness of coating layer 12 is not particularly limited, and may be, for example, 5 to 2000 $\mu$m or 10 to 2000 $\mu$m.

From the viewpoint of efficient deposition of solid carbon, coating layer 12 may be porous. The specific surface area of the porous coating layer may be from 5 to 1000 $m^2/g$.

Coating layer 12 can be formed, for example, by a method including adhering a coating solution containing at least one metal-containing component selected from the group consisting of iron oxide, cobalt oxide, magnesium oxide, molybdenum oxide, nickel oxide, manganese oxide, metal iron, metal cobalt, metal magnesium, metal molybdenum, metal nickel, and metal manganese, or a precursor thereof, and a solvent to a surface of substrate 11 (e.g., an inner wall surface); and removing the solvent from the coating solution adhered to the surface of substrate 11. The solvent of the coating solution may be, for example, water, alcohol, acetone, or a combination thereof.

[Hydrogen separator]

Processed gas 112 from solid carbon collector 106 is introduced into hydrogen separator 107 from the upstream side via second flow path 115b and separated into hydrogen 113 and emission gas 114.

Emission gas 114 derived from hydrogen separator 107 contains carbon dioxide, carbon monoxide, a trace amount of unseparated hydrogen, and the like.

Hydrogen separator 107 is not particularly limited as long as it has the function of separating processed gas 112 from solid carbon collector 106 into hydrogen 113 and emission gas 114 while circulating the processed gas, and may have a hydrogen separation membrane, a pressure swing adsorption mechanism, and the like.

For example, a palladium alloy-based thin membrane can be used as the hydrogen separation membrane. As the palladium alloy-based hydrogen separation membrane, those in which rare earth elements such as yttrium and gadolinium are added to palladium, those in which silver is added to palladium and the like can be used.

Thin membranes containing mainly niobium, vanadium, titanium, tantalum, zirconium or the like, instead of palladium, can also be used.

Examples of such a hydrogen separation membrane include those described in Japanese Patent Laid-Open No. 2000-159503, Japanese Patent Laid-Open No. 2005-232533, and Japanese Patent Laid-Open No. 2006-43677 or the like.

As hydrogen separation membranes that have both excellent hydrogen permeability and hydrogen embrittlement resistance, those in which at least one metal component selected from the group consisting of chromium, iron, nickel, and cobalt, and further at least one metal component selected from the group consisting of aluminum, scandium, titanium, yttrium, zirconium, niobium, molybdenum, tantalum, lanthanum, cerium, praseodymium, neodymium, promethium, samarium, europium, gadolinium, terbium, dysprosium, holmium, erbium, thulium, ytterbium, and ruthenium are added to vanadium may also be used.

Such hydrogen separation membranes are described, for example, in Japanese Patent Laid-Open No.

2008-55295.

Hydrogen separator 107 including the hydrogen separation membrane typically includes the hydrogen separation membrane, a flow path for supplying processed gas 112 from the upstream (primary) side of the hydrogen separation membrane to the hydrogen separation membrane, a flow path for emitting hydrogen 113 permeated through the hydrogen separation membrane to the downstream (secondary) side, and a flow path for recovering emission gas 114 not permeated through the hydrogen separation membrane after contacting with the hydrogen separation membrane.

As such hydrogen separator 107 including a hydrogen separation membrane, those described in Japanese Patent Laid-Open No. 2019-5684 or the like can be used.

In addition to the above, hydrogen separator 107 using the Pressure Swing Adsorption (PSA) method can also be used. A PSA-type hydrogen separator typically includes an adsorption column filled with adsorbents, a pump, and a flow path connecting them. As the adsorbents, those that adsorb carbon dioxide, carbon monoxide, moisture and the like in processed gas 112 can be used.

As the adsorbents, activated carbon, zeolite, and alumina or the like can be used.

In the PSA-type hydrogen separator, adsorption, desorption, and washing are repeatedly performed as one cycle for each one of the adsorption columns.

Adsorption is a step of adsorbing carbon dioxide, carbon monoxide and the like in processed gas 112 to the adsorbent to derive hydrogen.

Desorption is a step of reducing the pressure in the adsorption column to desorb carbon dioxide, carbon monoxide, and the like from the adsorbent and derive them as emission gas 114.

Washing is a step of washing the adsorption column with hydrogen.

In the PSA-type hydrogen separator, a flow path for introducing processed gas 112 is connected to the primary side, and a pipeline for deriving hydrogen 113 and a flow path for deriving emission gas 114 are connected to the secondary side, respectively.

In the hydrogen production method shown in Fig. 12, a suitable flow shown in Fig. 6 can be performed.

First, as step S10, a dry reforming reaction is performed at reaction temperature $T_1$ (dry reforming reaction step).

The dry reforming reaction can be performed by circulating source gas 110 into dry reforming reactor 103 at reaction temperature $T_1$.

Reaction temperature $T_1$ is not particularly limited, but is preferably equal to or higher than an activity onset temperature of the dry reforming catalyst. In a specific embodiment, reaction temperature $T_1$ is preferably 600°C or higher and is preferably 1100°C or lower, more preferably 900°C or lower.

It should be noted that reaction temperature $T_1$ can be controlled by regulating first thermostat 102 of dry reforming reactor 103.

Methods for controlling the mixing ratio of methane and carbon dioxide in source gas 110 are not particularly limited, and examples thereof include methods for controlling the mixing ratio of methane and carbon dioxide supplied via a flow path, respectively, by a source gas controller having a gas mixer and a mass flow controller.

Once reaction temperature $T_1$ (°C) and $CH_4/CO_2$ in source gas 110 are determined, $CO/CO_2$ in synthesis gas 111 can be calculated.

Next, as step S11, a solid carbon capture reaction is performed (solid carbon capture reaction step). The solid carbon capture reaction can be performed by circulating synthesis gas 111 in solid carbon collector 106 at reaction temperature $T_2$. It is preferable that the solid carbon capture reaction satisfies the following condition (1).

[Formula 7]

(Condition 1)

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2 + (-0.130) \times T_1 + 40.0$

Gradient = $(1.69 \times 10^{-4}) \times (T_1)^2 + (-0.205) \times T_1 + 62.2$

$T_1$: Reaction temperature of dry reforming reaction (°C)

$T_2$: Reaction temperature of solid carbon capture reaction (°C)

The solid carbon capture reaction can be performed such that the condition (1) is satisfied by determining the corresponding reaction temperature $T_2$ (°C) based on $CH_4/CO_2$ of source gas 110 supplied to the dry reforming reaction step and the composition ($CO/CO_2$) of synthesis gas 111 calculated at reaction temperature $T_1$, and regulating second thermostat 105.

Next, as step S12, processed gas 112 generated by the solid carbon capture reaction is separated into emission gas 114 and hydrogen 113 to obtain hydrogen 113 (hydrogen separation step). Hydrogen 113 can be separated by introducing processed gas 112 into hydrogen separator 107 and operating the separator under known conditions.

Next, as step S13, heat is preferably recovered from emission gas 114 (heat recovery step). Since emission gas 114 contains carbon monoxide, hydrogen, and the like, heat can be recovered, for example, by combusting them or the like. The recovered heat is preferably used for the dry reforming reaction and/or solid carbon capture reaction.

However, the regulation of reaction temperature $T_1$ at step S10, condition (1) at step S11, and the heat recovery at step S13 are optional and may not be performed.

According to the flow shown in Fig. 6, the amount of $CO_2$ emitted outside the system can be preferably reduced significantly when producing hydrogen from the source gas containing methane and carbon dioxide by controlling $CO/CO_2$ in synthesis gas 111 and reaction temperature $T_2$ to an appropriate range.

[Second Embodiment (Basic Configuration)]

Fig. 13 shows the basic configuration of a hydrogen production system to carry out the hydrogen production method of the second embodiment.

The hydrogen production method of the present invention includes:

dry reforming reaction step 103 of obtaining synthesis gas 111 containing carbon monoxide and hydrogen from source gas 110 containing methane and carbon dioxide in the presence of a dry reforming catalyst;
solid carbon capture step 106 of introducing synthesis gas 111 from dry reforming reaction step 103 to generate solid carbon from the carbon monoxide in the synthesis gas in the presence of a catalyst for capturing solid carbon, thereby obtaining processed gas 112; and
hydrogen separation step 107 of extracting hydrogen 113 from processed gas 112 from solid carbon capture step 106 to obtain emission gas 114 containing carbon dioxide,
wherein emission gas 114 from hydrogen separation step 107 is introduced into dry reforming reaction step 103 to circulate carbon dioxide without emitting outside.

The hydrogen production system of the second embodiment includes:

dry reforming reactor 103 that obtains a synthesis gas containing carbon monoxide and hydrogen from source gas 110 containing methane and carbon dioxide in the presence of a dry reforming catalyst;
solid carbon collector 106 that introduces synthesis gas 111 from dry reforming reactor 103 to generate solid carbon from the carbon monoxide in the synthesis gas in the presence of a catalyst for capturing solid carbon, thereby obtaining processed gas 112;
hydrogen separator 107 that extracts hydrogen 113 from processed gas 112 from solid carbon collector 106 to obtain emission gas 114 containing carbon dioxide;
first flow path 115a that supplies synthesis gas 111 from dry reforming reactor 103 to solid carbon collector 106;
second flow path 115b that supplies processed gas 112 from solid carbon collector 106 to hydrogen separator 107;
and third flow path 115c that supplies emission gas 114 from hydrogen separator 107 to dry reforming reactor 103,
wherein carbon dioxide is circulated internally without being emitted outside.

Since emission gas 114 containing carbon dioxide is circulated to DRM reactor 103 via third flow path 115c connecting hydrogen separator 107 and DRM reactor 103, the carbon dioxide contained in emission gas 114 is not emitted outside the hydrogen production system. This enables the amount of carbon dioxide emitted outside the system to be reduced.

The hydrogen production method and system according to the second embodiment can produce hydrogen equivalent to or greater than the conventional hydrogen production method and system by circulating carbon dioxide internally without emitting outside and thus reducing the amount of carbon dioxide emitted outside the system compared to the conventional hydrogen production method and system.

[Third Embodiment]

Fig. 14 shows a block diagram of a hydrogen production system to carry out the hydrogen production method of the third embodiment. In the hydrogen production method shown in Fig. 14, methane is combusted to generate heat and carbon dioxide, the generated heat is introduced into the dry reforming reaction step, and the source gas containing carbon dioxide in an amount equal to the generated carbon dioxide is introduced into the dry reforming reaction step to capture carbon in an amount equal to the total amount of carbon contained in carbon dioxide and methane in the source gas as solid carbon in the solid carbon capture step in the hydrogen production method shown in Fig. 13.

The hydrogen production system shown in Fig. 14 further includes methane combustion furnace 108 and heat supply path 108a that supplies heat from methane combustion furnace 108 to dry reforming reactor 103 in the hydrogen production system shown in Fig. 13.

Since the carbon dioxide contained in the source gas and the carbon dioxide emitted outside the system due to the combustion of methane are equal in amount in the hydrogen production method and system shown in Fig. 14, hydrogen production becomes possible without emitting carbon dioxide due to the combustion of methane.

[Fourth Embodiment]

Fig. 15 shows a block diagram of a hydrogen production system to carry out the hydrogen production method of the fourth embodiment. The hydrogen production method shown in Fig. 15 further includes, in the hydrogen production method shown in Fig. 13, taking out and combusting a portion of the separated hydrogen 113 in hydrogen separation step 107 and supplying heat generated to dry reforming reaction step 103.

The hydrogen production system shown in Fig. 15 further includes, in the hydrogen production system shown in Fig. 13, hydrogen extraction path 116 that takes out a portion of hydrogen 113a from hydrogen separator 107, hydrogen combustion furnace 109 that combusts hydrogen, and heat supply path 109a that supplies heat from hydrogen combustion furnace 109 to dry reforming reactor 103.

In the hydrogen production method and system of the present embodiment, at least a portion of carbon dioxide as a source gas is not required and the hydrogen production by methane reforming becomes possible without emitting carbon dioxide.

It should be noted that, although Fig. 15 shows a configuration in which hydrogen combustion furnace 109 and heat supply path 109a are provided in the hydrogen production system of the second embodiment (basic configuration) shown in Fig. 13, those can be additionally provided in the hydrogen production system shown in Fig. 14.

[Fifth Embodiment]

In the hydrogen production method shown in Fig. 16, heat from emission gas 114 is recovered and supplied to dry reforming reaction step 103 before introducing emission gas 114 from hydrogen separation step 107 into dry reforming reaction step 103 in the hydrogen production method shown in Fig. 13.

In the hydrogen production system shown in Fig. 16, heat recovery module 204 that recovers heat from emission gas 114 is connected to the middle of third flow path 115c, and the heat recovered in heat recovery module 204 is supplied to dry reforming reactor 103 in the hydrogen production system shown in Fig. 13. Heat recovery module 204 may be a combustion furnace that introduces oxygen to combust emission gas 114, or a fuel cell.

The hydrogen production method and system of the present embodiment can reduce the energy introduced from outside the system by utilizing the heat recovered by the heat recovery module for the dry reforming reaction.

It should be noted that, although Fig. 16 shows a configuration in which heat recovery module 204 is provided in the hydrogen production system of the second embodiment (basic configuration) shown in Fig. 13, heat recovery module 204 can be additionally provided in the hydrogen production system shown in Fig. 14 or Fig. 15.

[Sixth Embodiment]

Hydrogen production system 200 shown in Fig. 17 includes source gas controller 205 and regulator 201 that regulates the gas flow rate of source gas controller 205, as well as the temperatures of DRM reactor 103 and solid carbon collector 106 in the hydrogen production system shown in Fig. 16.

Of these, source gas controller 205, DRM reactor 103, solid carbon collector 106, and hydrogen separator 107 are connected in order (in series), and heat recovery module 204 is connected in its primary side to third flow path 115c for emission gas 114 branched from hydrogen separator 107. Third flow path 115c connected to the secondary side of heat recovery module 204 is joined between source gas controller 205 and DRM reactor 103.

Heat recovery module 204 has the function of recovering heat from methane, carbon monoxide, hydrogen, and the like, which may be contained in emission gas 114 generated by the separation of hydrogen 113 from processed gas 112 by hydrogen separator 107. Specifically, the heat recovery module may be a burner that combusts emission gas 114, a fuel cell using emission gas 114 as a fuel, and the like.

The heat recovered by heat recovery module 204 is preferably used for temperature regulation of DRM reactor 103 and/or solid carbon collector 106 (in the figure, the transfer of heat is indicated by the symbol "Q").

Circulating gas 120 emitted from heat recovery module 204 contains carbon dioxide, which is mixed into source gas 110 and used.

As will be described later, since $CO_2$ generated during hydrogen production is significantly reduced by hydrogen production system 200, and in an embodiment, $CO_2$ contained in circulating gas 120 is less than or equal to the amount of $CO_2$ required in source gas 110, it is even possible to perform circulation operation without emitting $CO_2$ outside hydrogen production system 200 while $CO_2$ is supplied from outside of the system.

Source gas controller 205 has the function of mixing methane 121 and carbon dioxide 122 to control the composition of source gas 110. Source gas controller 205 may include a gas mixer that mixes methane 121 supplied through a flow path and carbon dioxide 122 in any ratio, a mass flow controller, and the like.

Hydrogen production system 200 includes regulator 201. Regulator 201 is a computer including processor 202 and memory 203. Regulator 201 intends to regulate DRM reactor 103, solid carbon collector 106, and source gas controller 205.

In addition to the above, regulator 201 may also intend to regulate hydrogen separator 107 and heat recovery module 204.

Regulator 201 has a plurality of sensors for detecting an operating state of hydrogen production system 200. Detection signals from the plurality of sensors are input to regulator 201. Regulator 201 has temperature sensor (TEMP1) 130 that detects reaction temperature $T_1$ of the DRM reaction in DRM reactor 103, temperature sensor (TEMP2) 131 that detects reaction temperature $T_2$ of the solid carbon capture reaction in solid carbon collector 106, and flow sensor (FLOW) 132 that detects the mixing ratio of methane 121 and carbon dioxide 122 in source gas controller 205.

It should be noted that TEMP1 and TEMP2 may directly detect the temperatures of gas in DRM reactor 103 and solid carbon collector 106 or may estimate each temperature from physical quantities such as the outputs of first thermostat 102 and second thermostat 105 and the operating time.

Regulator 201 obtains, for example, the detection signal of temperature sensor (TEMP1) 130 for reaction temperature $T_1$ of the DRM reaction in DRM reactor 103, and controls the output of first thermostat 102 of DRM reactor 103 based on the obtained information.

Regulator 201 may have processor 202, which is a hardware device, and processor 202 may be a processor core that executes a program stored in a memory. Examples of such a processor core include a Central Processing Unit (CPU) and a Graphics Processing Unit (GPU).

Processor 202 may be a hardware logic circuit that includes a programmed logic unit. The digital circuit is a logic circuit array, such as an Application-Specific Integrated Circuit (ASIC), a Field Programmable Gate Array (FPGA), a System on a Chip (SoC), a Programmable Gate Array (PGA), a Complex Programmable Logic Device (CPLD), and the like.

Regulator 201 has memory 203. The memory is a non-transitional and tangible storage medium that non-transitorily stores a program and/or data readable by a processor. The storage medium is provided by a semiconductor memory, a magnetic disk, an optical disk, and the like. The program may be distributed as a program alone or as a storage medium in which the program is stored.

Processor 202 may also be a combination of a processor core and a hardware logic circuit.

Hydrogen production system 200 can perform the flow of hydrogen production shown in Fig. 8.

At step S20, first thermostat 102 and source gas controller 205 are regulated by regulator 201 to perform the DRM reaction at reaction temperature $T_1$ (°C).

Specifically, the state of $CH_4/CO_2$ at the time of the DRM reaction is obtained by flow sensor (FLOW) 132, and reaction temperature $T_1$ (°C) is obtained by temperature sensor (TEMP1) 130. It should be noted that the gas mixing ratio $CH_4/CO_2$ is controlled by source gas controller 205, and reaction temperature $T_1$ is controlled by first thermostat 102.

It should be noted that when source gas 110 is prepared by merging with circulating gas 120, $CH_4/CO_2$ in source gas controller 205 may be controlled based on the content of $CO_2$ in circulating gas 120.

Although the content of $CO_2$ in circulating gas 120 can be calculated from the composition of source gas 110 used in the production and the like, a sensor measuring the composition of circulating gas 120 may be provided in the middle of flow path 115, regulator 201 may obtain the measurement value, and thereby source gas controller 205 may be regulated.

At this step S20, synthesis gas 111 containing hydrogen and carbon monoxide is obtained from source gas 110 containing methane and carbon dioxide.

Next, at step S21, second thermostat 105 is regulated by regulator 201 to perform a solid carbon capture reaction such that condition (1) is satisfied.

Specifically, regulator 201 determines whether the reaction conditions of the solid carbon capture reaction satisfy condition (1) based on $CO/CO_2$ of synthesis gas 111 calculated from $CH_4/CO_2$ of source gas 110, reaction temperature $T_1$ (°C) obtained by temperature sensor (TEMP1) 130, and reaction temperature $T_2$ (°C) obtained by temperature sensor (TEMP2) 131, regulates the outputs of source gas controller 205, first thermostat 102, and second thermostat 105 such that the condition (1) is satisfied, and controls $CO/CO_2$, reaction temperature $T_1$, and reaction temperature $T_2$.

At this step S21, solid carbon is separated from synthesis gas 111 containing carbon monoxide and processed gas 112 containing carbon dioxide and the like is obtained. It should be noted that processed gas 112 may contain methane, carbon monoxide, water vapor, hydrogen, and the like in addition to carbon dioxide.

Next, at step S22, hydrogen 113 separated from processed gas 112 by hydrogen separator 107 is obtained, and emission gas 114 is also obtained.

Next, at step S23, the heat is recovered from emission gas 114 by heat recovery module 204, and circulating gas 120 is generated. Heat Q generated at step S23 is supplied to DRM reactor 103 and/or solid carbon collector 106 and used to control each reaction temperature.

Circulating gas 120 generated at step S23 is merged through the flow path at the middle of source gas controller 205 and DRM reactor 103 and is used as part of source gas 110.

The regulation process flow performed by regulator 201 at step S21 described above may be a flow diagram shown in Fig. 9. Regulator 201 regulates the reaction conditions of the DRM reaction and the reaction conditions of the solid carbon capture reaction by performing the above regulation processes. The $CO_2$ emissions outside the system is significantly reduced by the above regulation processes.

At step S30, regulator 201 obtains information about the operating state of hydrogen production system 200. Specifically, the temperature of the gas inside DRM reactor 103 (reaction temperature $T_1$) is obtained by temperature sensor (TEMP1) 130. Each flow rate (mixing ratio) of methane and carbon dioxide in source gas controller 205 is also obtained by flow sensor (FLOW) 132.

At step S31, regulator 201 calculates $CO/CO_2$ in the synthesis gas from the $CH_4/CO_2$ ratio in the source gas in DRM reactor 103 and reaction temperature $T_1$ (°C).

The $CO/CO_2$ is calculated by the thermal equilibrium calculation based on $CH_4/CO_2$ in source gas 110 and reaction temperature $T_1$. Software programs such as "COCO" can be used for this calculation.

Next, at step S32, regulator 201 obtains the temperature of the gas in solid carbon collector 106 (reaction temperature $T_2$) by temperature sensor (TEMP2) 131.

Next, at step S33, regulator 201 determines whether the relationship of $CO/CO_2$ in synthesis gas 111 introduced into solid carbon collector 106, reaction temperature $T_1$ (°C), and reaction temperature $T_2$ (°C) satisfies condition (1).

Specifically, at step S33, a determination is made through the following steps.

First, Inflection and Gradient are calculated by Formulas (2) and (3) based on the obtained reaction temperature $T_1$ (°C). Next, from the calculated Inflection and Gradient, the sigmoid curve at the right hand side of the inequality sign on the right side of condition (1) is obtained, and whether they are within the range of the above sigmoid curve is determined based on the calculated $CO/CO_2$ and the obtained reaction temperature $T_2$.

[Formula 8]

(Condition 1)

$$(1)\ 450 < T_2 < 750 - \frac{300}{1+e^{\left(\frac{\text{Inflection}-(CO/CO_2)}{\text{Gradient}}\right)}}$$

$T_1$: Reaction temperature of dry reforming reaction (°C)

$T_2$: Reaction temperature of solid carbon capture reaction (°C)

[Formula 9]

$$(2)\ \text{Inflection} = (1.06 \times 10^{-4}) \times (T_1)^2 + (-0.130) \times T_1 + 40.0$$

$$(3)\ \text{Gradient} = (1.69 \times 10^{-4}) \times (T_1)^2 + (-0.205) \times T_1 + 62.2$$

When condition (1) is not satisfied as a result of the above determination (step S33: NO), at steps S34 to S36, reaction temperature $T_1$ is regulated using first thermostat 102 based on the detection signal of temperature sensor (TEMP1) 130 (step S34), each flow rate (mixing ratio) of methane and carbon dioxide in source gas 110 is regulated based on the detection signal of flow sensor (FLOW) 132 using source gas controller 205 (step S35), and reaction temperature $T_2$ is regulated using second thermostat 105 based on the detection signal of temperature sensor (TEMP2) 131 (step S36).

Thereafter, the determination is made at step S33 after performing steps S30 to S32 again, and steps S34 to S36 and S30 to S33 are repeated until condition (1) is satisfied.

When condition (1) is satisfied as a result of the determination at step S33 (step S33: Yes), the regulation process by regulator 201 ends, then returning to Fig. 8, subsequent steps (step S22 and step S23) are performed.

Since hydrogen production system 200 has regulator 201 that regulates each part such that condition (1) for $CO/CO_2$ in synthesis gas 111 and reaction temperature $T_2$ is satisfied, carbon dioxide emitted outside the system when producing hydrogen from the source gas is significantly reduced.

In addition, since hydrogen production system 200 has heat recovery module 204, heat from hydrogen contained in emission gas 114 and carbon monoxide can be recovered and the recovered heat can be used in the DRM reaction and/or the solid carbon capture reaction, thus carbon dioxide emitted by heating or the like (or electricity for heating) can also be reduced.

Hydrogen production system 200 further has a flow path that merges circulating gas 120 with source gas 110. As an embodiment, the content of carbon dioxide contained in circulating gas 120 is less than the (required) content of carbon dioxide contained in the source gas, thereby hydrogen production can be performed without emitting the carbon dioxide used in the process outside the system, in other words, while carbon dioxide is always supplied from outside of the system.

It should be noted that each part (component) in hydrogen production system 200 is connected by flow path 115 as described above, but the connection form (connection pathway) of each part in the hydrogen production system 200 of the present invention is not limited to the above.

For example, hydrogen separator 107 may be arranged between DRM reactor 103 and solid carbon collector 106. Also, a plurality of one or more types of components may be arranged, where flow path 115 may be branched to have a plurality of same components arranged in parallel or a plurality of same components arranged in series.

In addition to the above, hydrogen production system 200 may further include one or more valves, water vapor removers, pressure controllers (pressure reducing valves, compressors), heat exchangers, or the like within the scope of exerting the effects of the present invention.

[Seventh Embodiment]

The hydrogen production method or hydrogen production system shown in Fig. 18 further includes compressor 401 in first flow path 115a in the hydrogen production method or hydrogen production system shown in Fig. 13.

When the hydrogen separation membrane described above is used as hydrogen separator 107, a low hydrogen partial pressure results in a low extraction amount of hydrogen. When a PSA-type hydrogen separator described above is used as hydrogen separator 107, a low inlet pressure of the adsorbent in hydrogen separator 107 also results in a low extraction amount of hydrogen. For these respects, since the hydrogen production method or the hydrogen production system of the present embodiment further includes compressor 401 in first flow path 115a, the amount of hydrogen extracted in hydrogen separator 107 can be increased.

Compressor 401 is not particularly limited, and may include or consist of a volumetric compressor, a turbo compressor, or a combination of two or more of these. Among these, the volumetric compressor is preferred. With the volumetric compressor, a high compression ratio can be achieved by a small number of steps.

It is preferable that the hydrogen production method or hydrogen production system shown in Fig. 18 further includes heat exchanger HE that converts heat generated in solid carbon collector 106 into steam and supplies the steam to compressor 401. The heat generated in solid carbon collector 106 can be converted to steam V by heat exchanger HE and steam V can be supplied to compressor 401.

The solid carbon capture reaction is an exothermic reaction, and the heat generated by the reaction can be used to drive compressor 401 to reduce the consumption of driving power.

In the hydrogen production method or hydrogen production system shown in Fig. 18, it is preferable that pressure control valve 402 is provided at an inlet of hydrogen separator 107 in second flow path 115b, and gas holder 403 and pressure control valve 404 are provided in third flow path 115c.

When first flow path 115a includes compressor 401, conditions for the separation and extraction of hydrogen in hydrogen separator 107 can be regulated by providing pressure control valve 402 at the inlet of hydrogen separator 107.

It may be difficult for emission gas 114 from hydrogen separator 107 to merge at the inlet of dry reforming reactor 103 when emission gas 114 remains pressurized. Pressure control valve 404 for depressurizing emission gas 114 and gas holder 403 for holding the gas provided in third flow path 115c can facilitate the merge of emission gas 114 at the inlet of dry reforming reactor 103.

Pressure control valves 402 and 404 are not particularly limited and may be operated by appropriately using primary and secondary valves.

Gas holder 403 is not particularly limited. The gas holder can be used to reduce pressure fluctuation.

It is preferable that the hydrogen production method or hydrogen production system shown in Fig. 18 further includes water supply path W that supplies water generated in dry reforming reactor 103 to solid carbon collector 106.

Since water is generated in the dry reforming reaction, it is necessary to taken out water. The water taken out and condensed from dry reforming reactor 103 can be used as cooling water for regulating the temperature of the solid carbon capture reaction and the consumption of cooling water can thus be reduced.

It is preferable that the hydrogen production method or the hydrogen production system shown in Fig. 18 includes compressor 401 in first flow path 115a, and further includes a steam supply path that supplies steam V generated in solid carbon collector 106 to compressor 401.

The steam generated by the solid carbon capture reaction can be used to drive compressor 401 provided in first flow path 115a to reduce the consumption of the driving power of compressor 401.

Fig. 18 shows a configuration including compressor 401, pressure control valve 402, gas holder 403, and pressure control valve 404, heat exchanger HE, water supply path W, and a steam supply path. However, another configuration only including compressor 401 is also possible and the configuration members other than compressor 401 are preferably provided in a system including compressor 401 and not always required to be provided in their entirety.

Fig. 18 also shows a configuration including compressor 401, pressure control valve 402, gas holder 403, and pressure control valve 404, heat exchanger HE, water supply path W, and a steam supply path based on the basic configuration of the hydrogen production system shown in Fig. 13, but those members can also be provided in each of the hydrogen production systems shown in Figs. 14 to 16.

[Modification example 1 of solid carbon collector]

Fig. 19 shows modification example 1 of the solid carbon collector. When the hydrogen production system includes compressor 401 in first flow path 115a, first flow path 115a at downstream side of compressor 401 may be branched to have a plurality of solid carbon collectors 106 arranged in parallel, and valves 405A, 405B, 405C and valves 406A, 406B, 406C may be provided at the inlet and the outlet of each solid carbon collector 106A, 106B, 106C, respectively. Although Fig. 19 shows three sets of combination of a solid carbon collector and a valve, the number of sets is not limited thereto.

With a plurality of solid carbon collectors being arranged in parallel, a valve for the inlet of at least one of the plurality of solid carbon collectors can be closed to discharge the solid carbon while another solid carbon collector can be continuously operated. Carbon capture is thus possible while the hydrogen production system is continuously operated.

In Fig. 19, at solid carbon collector 106C, inlet valve 405C is closed and outlet valve 406C is open, thus solid carbon is emitted from solid carbon collector 106C. At the same time, solid carbon collectors 106A and 106B operates continuously to capture solid carbon.

In Fig. 19, it is preferable that the hydrogen production system further includes buffer tank 407 in first flow path 115a at downstream side of compressor 401 and upstream side of the branch.

When solid carbon is emitted from at least one of solid carbon collectors 106A, 106B, and 106C, other solid carbon collectors may have pressure fluctuations. Such a pressure fluctuation can be buffered by providing buffer tank 407 in first flow path 115a at downstream side of compressor 401 and upstream side of the branch.

Buffer tank 407 provided in the previous stage of the plurality of solid carbon collectors is not particularly limited.

[Modification example 2 of solid carbon collector]

Fig. 20 shows modification example 2 of the solid carbon collector. As shown in Fig. 20, the hydrogen production system may further include compressor 401 in first flow path 115a, where a plurality of the solid carbon collectors 106D, 106E may be arranged in series, and a gas composition controller 408 may be provided between each of the solid carbon collectors.

The arrangement of the plurality of solid carbon collectors 106D, 106E in series can increase the entire amount of carbon captured in the hydrogen production system. When the plurality of solid carbon collectors 106D, 106E are arranged in series in this way, the concentration of carbon monoxide decreases and the concentration of carbon dioxide increases in the downstream-side solid carbon collector 106E when carbon is captured in the upstream-side solid carbon collector 106D, thus reactions are less likely to occur in the downstream-side solid carbon collector 106E. When gas composition controller 408 is provided at the outlet of each solid carbon collector to control the gas composition to be susceptible to reaction in the downstream-side solid carbon collector, the capture rate at the downstream-side solid carbon collector can be improved.

For example, an inlet gas ($CH4:CO_2:H_2:CO:H_2O$ = 10:30:25:25:5 (molar ratio)) is introduced into solid carbon collector 106D, $2CO \rightarrow C + CO_2$ (reaction (1)) occurs in solid carbon collector 106D. As a result, an outlet gas ($CH_4:CO_2:H_2:CO:H_2O$ = 10:35:25:15:5 (molar ratio)) is released from solid carbon collector 106D, thus the CO concentration is decreased and the $CO_2$ concentration is increased in the outlet gas relative to the inlet gas. When the outlet gas is introduced into solid carbon collector 106E as it is, the reaction (1) in solid carbon collector 106E is less likely to occur than the reaction (1) in solid carbon collector 106D as much as the CO concentration decreases and the $CO_2$ concentration increases. Considering this, at least a portion of $CO_2$ contained in the outlet gas of solid carbon collector 106D is recovered at gas composition controller 408. This reduces the $CO_2$ concentration contained in the outlet gas and relatively increases the CO concentration, which makes the reaction (1) in solid carbon collector 106E more likely to occur, and as a result, the carbon capture rate in solid carbon collector 106E can be improved. The $CO_2$ recovered at the gas composition controller 408 can be reused as a component of source gas 110 to be introduced into DRM reactor 103.

The gas composition controller 408 may include or consist of, but is not particularly limited to, a gas separation membrane, a gas adsorption and desorption system, or a combination of two or more of these. Among these, a gas separation membrane is preferred. The use of gas separation membrane has the effect of reducing footprint and/or optimizing energy costs.

Fig. 21 is a graph showing the carbon deposition equilibrium composition of the synthesis gas at each temperature in a solid carbon collector. In Fig. 21, the horizontal axis represents the ratio of moles of oxygen to moles of carbon (O/C) and the vertical axis represents the ratio of moles of hydrogen to moles of carbon (H/C). In Fig. 21, the temperature (400, 500, 600, or 700°C) represents the temperature in the solid carbon collector. The region on the lower left side of the curve of each temperature in Fig. 21 is the region where the carbon capture reaction occurs, and the region on the upper right side of the curve is the region where the carbon capture reaction does not occur. For example, regarding the curve of 400°C in Fig. 21, when the solid carbon is captured, the mole of C decreases and thus both O/C ratio and the H/C ratio increase and shift occurs from the region where the carbon capture reaction occurs to the region where the carbon capture reaction does not occur, as shown by the arrow in Fig. 21. When such a change occurs in the upstream-side solid carbon collector 106D, the solid carbon capture reaction less likely occurs in the downstream-side solid carbon collector 106E. Considering this, the gas composition is controlled by using gas composition controller 408 in accordance with the temperature in the downstream-side solid carbon collector 106E to ensure that the reaction occur in the downstream-side solid carbon collector 106E.

[Hydrogen production system (Modification example)]

Fig. 22 is a block diagram of a modification example of the hydrogen production system of the present invention. Hydrogen production system 200 described above has DRM reactor 103 that performs a DRM reaction and solid carbon collector 106 that performs a solid carbon capture reaction, while hydrogen production system 300 of Fig. 22 has reactor 301 that serves as both a DRM reactor and a solid carbon collector instead the above.

Inside reactor 301, DRM catalyst 101 and catalyst for capturing solid carbon 104 are disposed, and source gas 110 introduced from the primary side is first brought into contact with DRM catalyst 101 to generate synthesis gas 111. Synthesis gas 111 is then brought into contact with catalyst for capturing solid carbon 104 to generate processed gas 112. The above reactions are performed in turn in reactor 301.

The temperature in reactor 301 is controlled by third thermostat 302 regulated by regulator 201, and reaction temperature $T_1$ and reaction temperature $T_2$ are obtained by temperature sensor (TEMP1) 130 and temperature sensor (TEMP2) 131.

Examples of the specific forms of reactor 301 include a reactor having a reaction tube, DRM catalyst 101 and catalyst for capturing solid carbon 104 which are filled into the reaction tube in order, and a heater that controls the temperature of the reaction tube.

It should be noted that, although reactor 301 of hydrogen production system 300 has third thermostat 302 that controls the overall temperature, the hydrogen production system may have first thermostat 102 that independently regulates the temperature of the DRM reaction (reaction temperature $T_1$) and second thermostat 105 that independently regulates the temperature of the solid carbon capture reaction (reaction temperature $T_2$), which may be configured to be regulated by regulator 201.

Since hydrogen production system 300 has reactor 301 that serves as both a DRM reactor and a solid carbon collector, and also has a configuration in which the reaction temperature is performed by third thermostat 302, hydrogen production system 300 has an advantage that its structure is simpler and easier to regulate. This trend is more pronounced in particular when reaction temperature $T_1$ and reaction temperature $T_2$ are regulated to 600 to 620°C.

[Temperature regulation of dry reforming reaction and solid carbon capture reaction]

In the hydrogen production method of the present invention shown in Fig. 12, it is preferable that the content molar ratio ($CO/CO_2$) of the content of carbon monoxide to the content of carbon dioxide in the synthesis gas, reaction temperature $T_1$ (°C) of the dry reforming reaction, and reaction temperature $T_2$ (°C) of the solid carbon capture reaction are regulated to satisfy the following condition (1).

[Formula 10]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2+(-0.130) \times T_1+40.0$
Gradient = $(1.69 \times 10^{-4}) \times (T_1)^2+ (-0.205) \times T_1+62.2$

The following describes the significance of the above condition (1) and the estimation mechanism where the effect of the present invention is obtained by regulating the relationship between $CO/CO_2$ in the synthesis gas and reaction temperatures $T_1$ and $T_2$ as described above.

In Fig. 12, DRM reactor 103 has dry reforming catalyst 101 (hereinafter also referred to as a "DRM catalyst") and first thermostat 102 for regulating the temperature of the gas circulating in DRM reactor 103 (reaction temperature $T_1$). Solid carbon collector 106 has catalyst for capturing solid carbon 104 and second thermostat 105 for regulating the temperature of the gas circulating in solid carbon collector 106 (reaction temperature $T_2$).

The structure of dry reforming reactor 103 is not particularly limited as long as source gas 110 (source gas stream) can be contacted with dry reforming catalyst 101 at reaction temperature $T_1$. For example, dry reforming reactor 103 may include a container in which source gas 110 can be circulated, dry reforming catalyst 101 fixed in the container, and first thermostat 102 that is a heater.

Solid carbon collector 106 includes catalyst for capturing solid carbon 104 and second thermostat 105 for controlling reaction temperature $T_2$.

Specifically, solid carbon collector 106 includes a reaction tube, catalyst for capturing solid carbon 104 contained in the reaction tube, and second thermostat 105 that is a heater disposed around the reaction tube. First flow path 115a for introducing synthesis gas 111 is connected to the upstream (primary) side of the reaction tube, and second flow path 115b for emitting processed gas 112 is connected to the downstream (secondary) side of the reaction tube.

Next, the balance between the amount of $CO_2$ introduced as part of source gas 110 and the amount of $CO_2$ derived in emission gas 114 in the hydrogen production using hydrogen production system 100 is described. It should be noted that the amount of $CO_2$ derived is calculated considering the influence of CO that can be contained in emission gas 114 and may generate $CO_2$ by combustion.

First, a case is considered where source gas 110 (135 L/h) mixed with $CH_4$ and $CO_2$ at a rate 100 mmol/min at one atmosphere is introduced into DRM reactor 103 and flowed from the upstream to the downstream of flow path 115 of hydrogen production system 100. Here, DRM reactor 103 is kept at 600°C, i.e., reaction temperature $T_1$ is 600°C.

Assuming a thermodynamic equilibrium is established between DRM catalyst 101 and the gas stream in DRM reactor 103, the composition of synthesis gas 111 can be estimated by thermal equilibrium calculation.

As an example, when the composition of source gas 110 flowing into hydrogen production system 100 is assumed to have a volume ratio $CH_4$:$CO_2$= 1:9 (14:121 (L/h)), the composition of synthesis gas 111 is estimated to be $CH_4$:$H_2$:$CO_2$:CO:$H_2O$ = 1:13:96:38:12 (L/h). That is, $CO/CO_2$ is 0.396.

When this synthesis gas is subjected to solid carbon capture at $T_2$ = 600°C, and CO and $CH_4$ contained in the emission gas after hydrogen separation are combusted to obtain $CO_2$, the amount of $CO_2$ contained in the gas released outside the system is 121 (L/h).

That is, the amount of $CO_2$ flowed into the hydrogen production system and the amount of $CO_2$ emitted are equal in calculation.

When the reaction temperatures $T_1$ and $T_2$ are set to 600°C similarly to the above, and $CO/CO_2$ in the synthesis gas is 0.953, the emission amount will be 105 L/h with respect to 101 L/h of $CO_2$ flowed into the hydrogen production system. When $CO/CO_2$ is 1.24, the emission amount will be 103 L/h with respect to the inflow amount of 90 L/h, and when $CO/CO_2$ is 1.53, the emission amount will be 102 L/h with respect to the inflow amount of 81 L/h.

On the other hand, when reaction temperature $T_1$ is 600°C and reaction temperature $T_2$ is 451°C, and $CO/CO_2$ in the synthesis gas is 0.396, the amount of $CO_2$ will be 116 L/h. In this case, the emission amount is less compared to the inflow amount of 121 L/h.

An estimation mechanism for obtaining a thermodynamic response as described above is described below.

Fig. 2 shows a thermal equilibrium calculation result of the Boudouard reaction ($2CO \rightarrow CO_2 + C$). In Fig. 2, the white (open) circular symbols and the black (closed) circular symbols represent molar fractions of $CO_2$ and CO (vertical axis: left) in processed gas 112 (derived gas, described as "Outgas" in the figure) relative to reaction temperature $T_2$, respectively. The white (open) square symbols represent $CO/CO_2$ (vertical axis: right) in processed gas 112 relative to reaction temperature $T_2$ (°C).

According to Fig. 2, the light-off temperature (activity onset temperature) can theoretically be estimated to be 450°C.

As used herein, the light-off temperature (activity onset temperature) means the lowest temperature at which the amount of CO contained in processed gas 112 reaches a significant value from zero when reaction temperature $T_2$ of the solid carbon capture reaction is gradually raised from 350°C while the mixture gas of CO and $CO_2$ are circulating.

As can be seen from Fig. 2, the equilibrium of the formula: $2CO \rightarrow CO_2 + C$ shifts from right to left in accordance with the change of reaction temperature $T_2$ from 350°C to 1200°C, and the molar fraction $CO_2$:CO of CO and $CO_2$ in processed gas 112 changes from about 0.5:0.0 to about 0.0:1.0.

That is, as reaction temperature $T_2$ is gradually raised, the equilibrium of the Boudouard reaction shifts from right to left, so that the amount of CO contained in processed gas 112 increases accordingly.

The content of CO in processed gas 112 affects the final amount of $CO_2$ emitted outside the system. By reducing the amount of CO emission, the final amount of $CO_2$ emission can be reduced.

The amount of $CO_2$ emitted outside the hydrogen production system is also affected by the amount of $CH_4$ contained in processed gas 112. When synthesis gas 111 contains $CH_4$, $CH_4$ is emitted into processed gas 112 because $CH_4$ is not involved in the solid carbon capture reaction. When such processed gas is combusted, $CO_2$ is generated.

The amount of $CH_4$ in synthesis gas 111 can be reworded as the residual $CH_4$ not used in the DRM reaction, and the residual $CH_4$ also needs to be controlled.

The present inventors have investigated conditions under which the amount of $CO_2$ derived becomes less than or equal to the amount of $CO_2$ introduced by regulating reaction temperature $T_2$ and $CO/CO_2$ in synthesis gas 111 to a predetermined range. As a result, the present inventors have focused a certain contiguous region formed by the "range", and further investigated the relationship of reaction temperature $T_1$, reaction temperature $T_2$, and $CO/CO_2$ in synthesis gas 111.

Specifically, the same calculation as above was performed while changing the reaction temperatures $T_1$ and $T_2$, and the relationship was investigated. Fig. 3 is a diagram showing the resulting relationship of reaction temperature $T_1$, reaction temperature $T_2$, and $CO/CO_2$ in synthesis gas 111.

In Fig. 3, "$CO/CO_2$ Ratio in DRM Outgas" on the horizontal axis means $CO/CO_2$ in synthesis gas 111. The vertical axis "CO Disprop. Temperature (°C)" means reaction temperature $T_2$. Each plot is a point at which the amount of $CO_2$ derived is equal to the amount of $CO_2$ introduced in calculation at "DRM Temperature", i.e., reaction temperature $T_1$.

For example, when reaction temperature $T_1$ is 600°C, the amount of $CO_2$ derived becomes less, typically less than the amount of $CO_2$ introduced, in the region inside each plot (in the direction towards origin).

From the results of Fig. 4, it can be seen that as reaction temperature $T_1$ increases, the region where "the amount of $CO_2$ derived is equal to the amount of $CO_2$ introduced" defined by each plot becomes larger.

From Fig. 3, we postulated that a collection of points at which the amount of $CO_2$ derived is equal to the amount of $CO_2$ introduced at each reaction temperature $T_1$ follows a sigmoid curve. Furthermore, we have focused the fact that, as reaction temperature $T_1$ increases, the slope (absolute value) of this sigmoid curve decreases and the inflection point is shifted in the positive direction of the horizontal axis, and have further investigated.

Specifically, a region where "the amount of $CO_2$ derived is equal to the amount of $CO_2$ introduced" at reaction temperature $T_1$ of 900°C, 700°C, and 600°C was calculated using "COCO" software, and a region where the following condition (1):

[Formula 11]

$$(1)\ 450 < T_2 < 750 - \frac{300}{1 + e^{\left(\frac{\text{Inflection} - (CO/CO_2)}{\text{Gradient}}\right)}}$$

is satisfied was determined. It should be noted that "Inflection" means the inflection point (horizontal axis) of the sigmoid curve, and "Gradient" means the gradient of the slope.

[Table 2]

| Table 2 | Reaction temperature $T_1$ (°C) | | | |
|---|---|---|---|---|
| | 600 | 700 | 900 | 800 |
| Inflection | 0.405 | 1.25 | 9.32 | 3.84 |

(continued)

| Table 2 | Reaction temperature $T_1$ (°C) | | | |
|---|---|---|---|---|
| | 600 | 700 | 900 | 800 |
| Gradient | 0.190 | 1.68 | 14.8 | 6.36 |

Table 2 represents the Inflection and Gradient at each reaction temperature $T_1$, where the values at 600°C, 700°C, and 900°C were determined by fitting, respectively.

As is clear from the results of Table 2 and Fig. 3, Inflection and Gradient have a relationship that increases in response to an increase in reaction temperature $T_1$, and Fig. 4 is a diagram representing the relationship.

In Fig. 4, the horizontal axis represents reaction temperature $T_1$ (°C). The plot of the triangle represents Inflection, and the plot of the square represents Gradient. The respective relationships obtained from the fitting of each plot were determined as follows. It should be noted that reaction temperature $T_1$ (°C) is preferably 600°C or higher.

[Formula 12]

$$(2)\ \text{Inflection} = (1.06 \times 10^{-4}) \times (T_1)^2 + (-0.130) \times T_1 + 40.0$$

$$(3)\ \text{Gradient} = (1.69 \times 10^{-4}) \times (T_1)^2 + (-0.205) \times T_1 + 62.2$$

That is, it has been found that the region where the amount of $CO_2$ derived is significantly less, and typically the introduced amount is less than that, at each reaction temperature $T_1$ shown in Fig. 4 is a region that satisfies the following condition (1).

[Formula 13]

$$(1)\ 450 < T_2 < 750 - \frac{300}{1 + e^{\left(\frac{\text{Inflection} - (CO/CO_2)}{\text{Gradient}}\right)}}$$

wherein Inflection = $(1.06 \times 10^{-4}) \times (T_1)^2 + (-0.130) \times T_1 + 40.0$

Gradient = $(1.69 \times 10^{-4}) \times (T_1)^2 + (-0.205) \times T_1 + 62.2$

It should be noted that the curve represented by "sim 800°C" in Fig. 3 is a sigmoid curve obtained by determining Inflection and Gradient at reaction temperature $T_1$ of 800°C from the above relationship formulas (2) and (3) (these results are described in Table 2), and obtaining the sigmoid curve at the right hand side of the inequality sign on the right side of the resulting (1). This curve is consistent with the plots obtained by separate calculations, and the above condition settings have been found to be correct.

From the above, it has been found that when the production method satisfies condition (1), the amount of $CO_2$ emitted outside the system is significantly reduced, and typically, the amount of $CO_2$ introduced and the amount of $CO_2$ derived are equal, or the amount of $CO_2$ derived is less.

It should be noted that it is easy for a person skilled in the art to operate hydrogen production system 100 under such conditions. This is because once the temperature of the dry reforming reaction (reaction temperature $T_1$) is determined, $CO/CO_2$ in the DRM outgas (i.e., synthesis gas 111) can be readily controlled by controlling $CH_4/CO_2$ in source gas 110.

Fig. 5 is a diagram showing reaction temperature $T_1$ dependency of the relationship between $CH_4/CO_2$ in the source gas and $CO/CO_2$ in synthesis gas 111.

The horizontal axis of Fig. 5 represents "$CH_4/CO_2$ in DRM InGas", i.e., $CH_4/CO_2$ in source gas 110, and the vertical axis represents "$CO/CO_2$ in DRM OutGas", i.e., $CO/CO_2$ in synthesis gas 111.

As shown in Fig. 5, once reaction temperature $T_1$ is determined, $CO/CO_2$ in the synthesis gas can be controlled to the desired value by simply controlling $CH_4/CO_2$ in the source gas, and the value can be easily determined by calculation.

For condition (1), $CO/CO_2$ is more than 0 and 124 or less, and the lower limit value thereof is preferably 0.20 or more. When $CO/CO_2$ is more than or equal to the above lower limit value, a better effect of the present invention can be obtained.

The upper limit value thereof is preferably 0.50 or less. When $CO/CO_2$ is less than or equal to the above upper limit value, a better effect of the present invention can be obtained.

In the embodiments of the present invention described in Figs. 13 to 16, temperature regulations in DRM reactor 103 and solid carbon collector 106 are not indispensable, but temperature regulation provides a better effect of the present invention.

EXAMPLES

Hereinafter, the present invention is described by way of Examples, but the present invention is not limited to these.

[Example 1]

[Demonstration test of hydrogen production method]

First, "Ni#$Y_2O_3$", a DRM catalyst, was synthesized with reference to Chemical Science, 2019, 10, 3701-3705 (Topologically immobilized catalysis centre for long-term stable carbon dioxide reforming of methane).

Next, 0.1 g of "Ni#$Y_2O_3$" powder was filled into a quartz reaction tube with an outer diameter of φ3/8 inch (about 9.53 mm). This powder was sandwiched with quartz wool and fixed.

A $Fe_3O_4$ powder was then filled and fixed in a similar manner directly below its downstream side. Next, a PdAg alloy membrane (φ20 mm; thickness 100 μm) was connected in series to the downstream side of the quartz reaction tube in which the "Ni#$Y_2O_3$" powder and the $Fe_3O_4$ powder are sequentially filled.

Bleed gas at the primary side of this membrane was emitted through GC (gas chromatography). Continuous suction was performed at the secondary side of this membrane with pump through a mass flow meter. A branch was made to a Q-Mass (quadrupole mass spectrometer) from directly above this pump and a signal with a mass (m/z) of 2 was continuously monitored. The signal strength of Q-Mass was calibrated according to the indicated value of the mass flow meter.

Fig. 23 is a photograph of a hydrogen production system used in this demonstration experiment. The hydrogen production system of Fig. 23 has a pair of holders 501 for mounting the quartz reaction tube, heater 502, sensor 503 for measuring the temperature in the heater, and PdAg alloy membrane 504 disposed at the downstream side. The source gas flowed from FL1 circulates FL2 ( with the quartz reaction tube not mounted in the figure), FL3, FL4, FL5, and FL6 in order.

First, 5 ml/min of $N_2$ gas was circulated in the quartz reaction tube while the temperature was raised from room temperature to 400°C. $CH_4$ gas and $CO_2$ gas were added thereto at a rate 10 ml/min respectively to make the total inflow amount into the quartz reaction tube to 25 ml/min.

After the temperature of each powder in the quartz reaction tube reached around 470°C, hydrogen was detected at the secondary side of the PdAg alloy membrane due to the start of the DRM reaction.

The hydrogen flow rate at the secondary side of the PdAg alloy membrane increased along with the rising temperature, and the indicated value of the mass flow meter reached 3.1 ml/min at the temperature of 700°C. This value then gradually decreased and became a steady state of around 2.5 ml/min after 15 hours elapsed.

Fig. 24 shows the result of the above demonstration test, where the horizontal axis represents the elapsed time, the vertical axis (left side) represents the amount of hydrogen produced (ml/min), and the vertical axis (right side) represents the total amount of hydrogen produced (L).

From the above results, it was confirmed that the hydrogen production method of the present invention can stably produce hydrogen over a long period of time.

[Example 2]

In the configuration of the hydrogen production system shown in Fig. 25, the material balance and energy balance were determined by simulating the case where the temperature of DRM reactor 103 was regulated to 700°C, the temperature of solid carbon collector 106 was regulated to 450°C, the temperature of hydrogen separator 107 was regulated to 350°C, 15 $Nm^3/h$ of methane was combusted in the air in methane combustion furnace 108 outside the hydrogen production system as part of the heat applied to DRM reactor 103, and 15 $Nm^3/h$ of carbon dioxide was generated.

(1) Source gas introduced into DRM reactor 103 from outside of hydrogen production system

Methane: 43 $Nm^3/h$, carbon dioxide: 15 $Nm^3/h$

(2) Source gas 110 introduced into DRM reactor 103

Methane: 45 $Nm^3/h$, carbon dioxide: 130 $Nm^3/h$, hydrogen: 20 $Nm^3/h$, carbon monoxide:

1 $Nm^3/h$, water: 0 $Nm^3/h$

(3) Synthesis gas 111 emitted from DRM reactor 103

Methane: 2 $Nm^3/h$, carbon dioxide: 59 $Nm^3/h$, hydrogen: 82 $Nm^3/h$, carbon monoxide:

115 $Nm^3/h$, water: 27 $Nm^3/h$

(4) Carbon fixed in solid carbon collector 106: 31 kg/h

(5) Processed gas 112 emitted from solid carbon collector 106 and introduced into hydrogen separator 107

Methane: 2 $Nm^3/h$, carbon dioxide: 115 $Nm^3/h$, hydrogen: 82 $Nm^3/h$, carbon monoxide:

1 $Nm^3/h$, water: 27 $Nm^3/h$

(6) Hydrogen separated and collected in hydrogen separator 107: 62 $Nm^3/h$

(7) Emission gas 114 emitted from hydrogen separator 107

Methane: 2 $Nm^3/h$, carbon dioxide: 115 $Nm^3/h$, hydrogen: 20 $Nm^3/h$, carbon monoxide:

1 $Nm^3/h$, water: 0 $Nm^3/h$

In Example 2, the hydrogen extraction rate (%) can be calculated by calculating the ratio of the flow rate of hydrogen 113 from hydrogen separator 107 to the flow rate of hydrogen in processed gas 112 from solid carbon collector 106. The hydrogen extraction rate resulted in 75% in Example 1, confirming that hydrogen can be extracted at a high rate.

[Example 3]

In the configuration of the hydrogen production system shown in Fig. 26, the material balance and energy balance were determined by simulating the case where the temperature of DRM reactor 103 was regulated to 700°C, the temperature of solid carbon collector 106 was regulated to 450°C, the temperature of hydrogen separator 107 was regulated to 350°C, 15 $Nm^3/h$ of methane was combusted in the air in methane combustion furnace 108 outside the hydrogen production system as part of the heat applied to DRM reactor 103, and 15 $Nm^3/h$ of carbon dioxide was generated.

(1) Source gas introduced into DRM reactor 103 from outside of hydrogen production system
Methane: 43 $Nm^3/h$, carbon dioxide: 15 $Nm^3/h$

(2) Source gas 110 introduced into DRM reactor 103
Methane: 45 $Nm^3/h$, carbon dioxide: 130 $Nm^3/h$, hydrogen: 30 $Nm^3/h$, carbon monoxide:1 $Nm^3/h$, water: 0 $Nm^3/h$

(3) Synthesis gas 111 emitted from DRM reactor 103
Methane: 2 $Nm^3/h$, carbon dioxide: 59 $Nm^3/h$, hydrogen: 89 $Nm^3/h$, carbon monoxide: 114 $Nm^3/h$, water: 27 $Nm^3/h$

(4) Carbon fixed in solid carbon collector 106: 30 kg/h

(5) Processed gas 112 emitted from solid carbon collector 106 and introduced into hydrogen separator 107
Methane: 2 $Nm^3/h$, carbon dioxide: 115 $Nm^3/h$, hydrogen: 89 $Nm^3/h$, carbon monoxide: 1 $Nm^3/h$, water: 27 $Nm^3/h$

(6) Hydrogen separated and collected in hydrogen separator 107: 59 $Nm^3/h$

(7) Emission gas 114 emitted from hydrogen separator 107

Methane: 2 $Nm^3/h$, carbon dioxide: 115 $Nm^3/h$, hydrogen: 30 $Nm^3/h$, carbon monoxide: 1 $Nm^3/h$, water: 0 $Nm^3/h$

In Example 3, the hydrogen extraction rate (%) can be calculated by calculating the ratio of the flow rate of hydrogen 113 from hydrogen separator 107 to the flow rate of hydrogen in processed gas 112 from solid carbon collector 106. The hydrogen extraction rate resulted in 66% in Example 1, confirming that hydrogen can be extracted at a high rate.

[Example 4]

In the configuration of the hydrogen production system shown in Fig. 27, the material balance and energy balance were determined by simulating the case where the temperature of DRM reactor 103 was regulated to 700°C, the temperature of solid carbon collector 106 was regulated to 450°C, the temperature of hydrogen separator 107 was regulated to 350°C, and the hydrogen separated and collected in hydrogen separator 107 was combusted as part of the heat applied to DRM reactor 103.

(1) Source gas introduced into DRM reactor 103 from outside of hydrogen production system

Methane: 42 $Nm^3/h$, carbon dioxide: 10 $Nm^3/h$

(2) Source gas 110 introduced into DRM reactor 103

Methane: 45 $Nm^3/h$, carbon dioxide: 95 $Nm^3/h$, hydrogen: 0 $Nm^3/h$, carbon monoxide:
1 $Nm^3/h$, water: 0 $Nm^3/h$

(3) Synthesis gas 111 emitted from DRM reactor 103

Methane: 3 $Nm^3/h$, carbon dioxide: 37 $Nm^3/h$, hydrogen: 68 $Nm^3/h$, carbon monoxide:
101 $Nm^3/h$, water: 15 $Nm^3/h$

(4) Carbon fixed in solid carbon collector 106: 27 kg/h

(5) Processed gas 112 emitted from solid carbon collector 106 and introduced into hydrogen separator 107

Methane: 3 $Nm^3/h$, carbon dioxide: 85 $Nm^3/h$, hydrogen: 68 $Nm^3/h$, carbon monoxide:
1 $Nm^3/h$, water: 0 $Nm^3/h$

(6) Hydrogen separated and collected in hydrogen separator 107: 68 $Nm^3/h$

(7) Hydrogen used for combustion and heat supply to DRM reactor 103 in hydrogen separated and collected by hydrogen separator 107: 44 $Nm^3/h$

(8) Emission gas 114 emitted from hydrogen separator 107

Methane: 3 $Nm^3/h$, carbon dioxide: 85 $Nm^3/h$, hydrogen: 0 $Nm^3/h$, carbon monoxide:
1 $Nm^3/h$, water: 0 $Nm^3/h$

[Example 5]

In the configuration of the hydrogen production system shown in Fig. 28, the material balance and energy balance were determined by simulating the case where the temperature of DRM reactor 103 was regulated to 700°C, the temperature of solid carbon collector 106 was regulated to 550°C, the temperature of hydrogen separator 107 was regulated to 350°C, the heat from emission gas 114 was recovered as part of the heat applied to DRM reactor 103 before introducing emission gas 114 into DRM reactor 103, and 90 $Nm^3/h$ of carbon dioxide was generated.

(1) Source gas introduced into DRM reactor 103 from outside of hydrogen production system

Methane: 45 $Nm^3/h$

(2) Source gas 110 introduced into DRM reactor 103

Methane: 45 $Nm^3/h$, carbon dioxide: 90 $Nm^3/h$, hydrogen: 0 $Nm^3/h$, carbon monoxide: 0 $Nm^3/h$, water: 0 $Nm^3/h$

(3) Synthesis gas 111 emitted from DRM reactor 103

Methane: 3 $Nm^3/h$, carbon dioxide: 34 $Nm^3/h$, hydrogen: 68 $Nm^3/h$, carbon monoxide: 97 $Nm^3/h$, water: 15 $Nm^3/h$

(4) Carbon fixed in solid carbon collector 106: 24 kg/h

(5) Processed gas 112 emitted from solid carbon collector 106 and introduced into hydrogen separator 107

Methane: 3 $Nm^3/h$, carbon dioxide: 79 $Nm^3/h$, hydrogen: 68 $Nm^3/h$, carbon monoxide: 8 $Nm^3/h$, water: 0 $Nm^3/h$

(6) Hydrogen separated and collected in hydrogen separator 107: 43 $Nm^3/h$

(7) Emission gas 114 emitted from hydrogen separator 107

Methane: 3 $Nm^3/h$, carbon dioxide: 79 $Nm^3/h$, hydrogen: 25 $Nm^3/h$, carbon monoxide: 8 $Nm^3/h$, water: 0 $Nm^3/h$

(8) Circulating gas 120 circulated to DRM reactor 103 through third flow path 115c after the heat is recovered

Methane: 0 $Nm^3/h$, carbon dioxide: 90 $Nm^3/h$, hydrogen: 0 $Nm^3/h$, carbon monoxide: 0 $Nm^3/h$, water: 0 $Nm^3/h$

REFERENCE SIGNS LIST

11: Substrate
12: Coating layer
100, 200, 300: Hydrogen production system
101: Dry reforming catalyst (DRM catalyst)
102: First thermostat
103: Dry reforming reactor (DRM reactor)
104: Catalyst for capturing solid carbon
105: Second thermostat
106: Solid carbon collector
106A, 106B, 106C, 106D, 106E: Solid carbon collector
107: Hydrogen separator
108: Methane combustion furnace
108a, 109a: Heat supply path
109: Hydrogen combustion furnace
110: Source gas
111: Synthesis gas
112: Processed gas
113: Hydrogen
114: Emission gas
115: Flow path
115a: First flow path
115b: Second flow path
115c: Third flow path
116: Hydrogen extraction path
120: Circulating gas
121: Methane
122: Carbon dioxide
201: Regulator
202: Processor
203: Memory

204: Heat recovery module
205: Source gas controller
301: Reactor
302: Third thermostat
401: Compressor
402, 404: Pressure control valve
403: Gas holder
405A, 405B, 405C, 406A, 406B, 406C: Valve
407: Buffer tank
408: Gas composition controller
HE: Heat exchanger
W: Water supply path
V: Steam

## Claims

**1.** A hydrogen production method comprising:

performing a dry reforming reaction to obtain a synthesis gas comprising carbon monoxide and hydrogen from a source gas comprising methane and carbon dioxide in the presence of a dry reforming catalyst;
performing a solid carbon capture reaction by reacting the synthesis gas in the presence of a catalyst for capturing solid carbon to generate solid carbon from the carbon monoxide in the synthesis gas, thereby obtaining the solid carbon and a processed gas; and
separating the processed gas into an emission gas and hydrogen to obtain hydrogen,
wherein a content molar ratio $CO/CO_2$ of a content of the carbon monoxide to a content of the carbon dioxide in the synthesis gas, reaction temperature $T_1$ (°C) of the dry reforming reaction, and reaction temperature $T_2$ (°C) of the solid carbon capture reaction satisfy the following condition (1):
[Formula 1]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2 + (-0.130) \times T,+40.0$
Gradient = $(1.69 \times 10^{-4}) \times (T_1)^2 + (-0.205) \times T_1 + 62.2$

**2.** The hydrogen production method according to claim 1, wherein the reaction temperature $T_2$ is a temperature equal to or higher than an activity onset temperature of the catalyst for capturing solid carbon.

**3.** The hydrogen production method according to claim 1 or 2, wherein the content molar ratio $CH_4/CO_2$ of a content of the methane to a content of the carbon dioxide in the source gas is 0.5 or less.

**4.** The hydrogen production method according to claim 1 or 2, wherein the reaction temperature $T_1$ is a temperature equal to or higher than an activity onset temperature of the dry reforming catalyst.

**5.** The hydrogen production method according to claim 1 or 2, wherein the reaction temperature $T_1$ is 600°C or higher.

**6.** The hydrogen production method according to claim 1 or 2, further comprising recovering heat from the emission gas and using the heat for at least one reaction selected from the group consisting of the dry reforming reaction and the solid carbon capture reaction.

**7.** The hydrogen production method according to claim 6, wherein the recovering is performed by introducing the emission gas into a fuel cell.

**8.** The hydrogen production method according to claim 6, wherein the recovering is performed by combusting the emission gas.

**9.** The hydrogen production method according to claim 1 or 2, wherein the separating the processed gas is performed with a hydrogen separation membrane.

**10.** A hydrogen production system comprising:

a dry reforming reactor that performs a dry reforming reaction to obtain a synthesis gas comprising carbon monoxide and hydrogen from a source gas comprising methane and carbon dioxide in the presence of a dry reforming catalyst;
a solid carbon collector that performs a solid carbon capture reaction by reacting the synthesis gas in the presence of a catalyst for capturing solid carbon to generate solid carbon from the carbon monoxide in the synthesis gas, thereby obtaining the solid carbon and a processed gas;
a hydrogen separator that separates the processed gas into an emission gas and hydrogen;
a first thermostat that controls reaction temperature $T_1$ (°C) of the dry reforming reaction;
a second thermostat that controls reaction temperature $T_2$ (°C) of the solid carbon capture reaction;
a source gas controller that controls a composition of the source gas; and
a regulator,
wherein the regulator regulates the first thermostat, the second thermostat, and the source gas controller such that a content molar ratio $CO/CO_2$ of a content of the carbon monoxide to a content of the carbon dioxide in the synthesis gas, the reaction temperature $T_1$ (°C), and the reaction temperature $T_2$ (°C) satisfy the following condition (1):
[Formula 2]

$$(1)\ 450 < T_2 < 750 - \frac{300}{1+e^{\left(\frac{\text{Inflection}-(CO/CO_2)}{\text{Gradient}}\right)}}$$

wherein Inflection = $(1.06 \times 10^{-4}) \times (T_1)^2 + (-0.130) \times$ T,+40.0
Gradient = $(1.69 \times 10^{-4}) \times (T_1)^2 + (-0.205) \times T_1 + 62.2$

**11.** The hydrogen production system according to claim 10, wherein the regulator regulates the source gas controller such that a content molar ratio $CH_4/CO_2$ of a content of the methane to a content of the carbon dioxide in the source gas is 0.5 or less.

**12.** The hydrogen production system according to claim 10 or 11, wherein the regulator regulates the first thermostat and the second thermostat to regulate the reaction temperature $T_1$ to a temperature equal to or higher than an activity onset temperature of the dry reforming catalyst and to regulate the reaction temperature $T_2$ to a temperature equal to or higher than an activity onset temperature of the catalyst for capturing solid carbon.

**13.** The hydrogen production system according to claim 10 or 11, further comprising a heat recovery module for recovering heat from the emission gas.

**14.** The hydrogen production system according to claim 13, wherein the heat is used for heating at least one selected from the group consisting of the dry reforming reactor and the solid carbon collector.

**15.** The hydrogen production system according to claim 10 or 11, wherein the hydrogen separator comprises a hydrogen separation membrane.

**16.** The hydrogen production system according to claim 13, wherein the heat recovery module comprises a fuel cell.

**17.** A hydrogen production method comprising:

a dry reforming reaction step of obtaining a synthesis gas comprising carbon monoxide and hydrogen from a source gas comprising methane and carbon dioxide in the presence of a dry reforming catalyst;
a solid carbon capture step of introducing the synthesis gas from the dry reforming reaction step to generate solid carbon from the carbon monoxide in the synthesis gas in the presence of a catalyst for capturing solid carbon, thereby obtaining a processed gas; and
a hydrogen separation step of extracting hydrogen from the processed gas from the solid carbon capture step to obtain an emission gas comprising carbon dioxide,
wherein the emission gas from the hydrogen separation step is introduced into the dry reforming reaction step to circulate carbon dioxide without emitting outside.

**18.** The hydrogen production method according to claim 17, wherein methane is combusted to generate heat and carbon dioxide, the generated heat is introduced into the dry reforming reaction step, and the source gas comprising carbon dioxide in an amount equal to the generated carbon dioxide is introduced into the dry reforming reaction step to capture carbon in an amount equal to carbon contained in carbon dioxide and methane in the source gas as solid carbon in the solid carbon capture step.

**19.** The hydrogen production method according to claim 17, further comprising taking out and combusting a portion of hydrogen separated in the hydrogen separation step and supplying generated heat to the dry reforming reaction step.

**20.** The hydrogen production method according to claim 17, wherein heat from the emission gas is recovered and supplied to the dry reforming reaction step before introducing the emission gas from the hydrogen separation step into the dry reforming reaction step.

**21.** A hydrogen production system comprising:

a dry reforming reactor that obtains a synthesis gas comprising carbon monoxide and hydrogen from a source gas comprising methane and carbon dioxide in the presence of a dry reforming catalyst;
a solid carbon collector that introduces the synthesis gas from the dry reforming reactor to generate solid carbon from the carbon monoxide in the synthesis gas in the presence of a catalyst for capturing solid carbon, thereby obtaining a processed gas;
a hydrogen separator that extracts hydrogen from the processed gas from the solid carbon collector to obtain an emission gas comprising carbon dioxide;
a first flow path that supplies the synthesis gas from the dry reforming reactor to the solid carbon collector;
a second flow path that supplies the processed gas from the solid carbon collector to the hydrogen separator; and
a third flow path that supplies the emission gas from the hydrogen separator to the dry reforming reactor,
wherein carbon dioxide is circulated internally without being emitted outside.

**22.** The hydrogen production system according to claim 21, further comprising a methane combustion furnace and a heat supply path that supplies heat from the methane combustion furnace to the dry reforming reactor.

**23.** The hydrogen production system according to claim 21, further comprising a hydrogen extraction path that takes out a portion of hydrogen from the hydrogen separator, a hydrogen combustion furnace that combusts the taken-out hydrogen, and a heat supply path that supplies heat from the hydrogen combustion furnace to the dry reforming reactor.

**24.** The hydrogen production system according to claim 21, wherein a heat recovery module that recovers heat from the emission gas is connected to the middle of the third flow path, and the heat recovered in the heat recovery module is supplied to the dry reforming reactor.

**25.** The hydrogen production system according to claim 21, further comprising a compressor in the first flow path.

**26.** The hydrogen production system according to claim 25, further comprising a heat exchanger that converts heat generated in the solid carbon collector into steam and supplies the steam to the compressor.

**27.** The hydrogen production system according to claim 25, wherein a pressure control valve is provided at an inlet of the hydrogen separator, and a gas holder and a pressure control valve are provided at an outlet of the hydrogen separator.

**28.** The hydrogen production system according to claim 21, further comprising a water supply path that supplies water generated in the dry reforming reactor to the solid carbon collector.

**29.** The hydrogen production system according to claim 28, further comprising a compressor in the first flow path, and further comprising a steam supply path that supplies steam generated in the solid carbon collector to the compressor.

**30.** The hydrogen production system according to claim 21, further comprising a compressor in the first flow path, wherein the first flow path at downstream side of the compressor is branched to have a plurality of the solid carbon collectors arranged in parallel, and valves are provided at an inlet and an outlet of each of the solid carbon collectors.

**31.** The hydrogen production system according to claim 30, further comprising a buffer tank in the first flow path at downstream side of the compressor and upstream side of the branch.

**32.** The hydrogen production system according to claim 21, further comprising a compressor in the first flow path, wherein a plurality of the solid carbon collectors is arranged in series, and a gas composition controller is provided between each of the solid carbon collectors.

Fig. 1

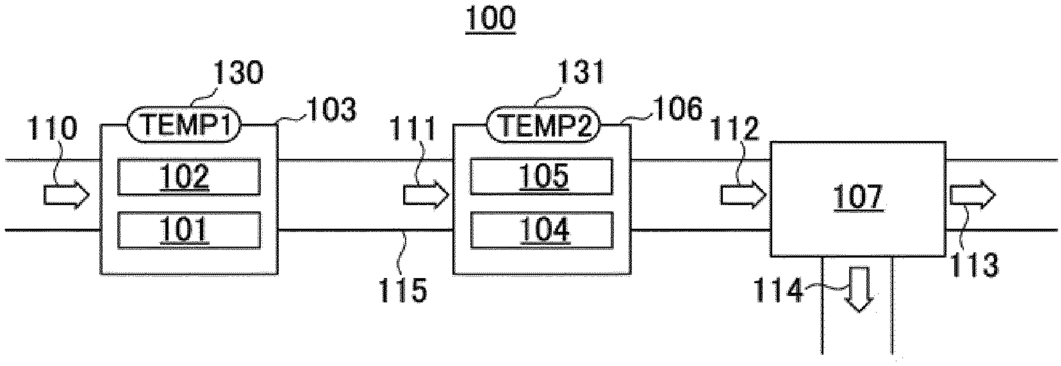
100
130
TEMP1
103
110
102
101
111
131
TEMP2
106
105
104
112
107
113
114
115

Fig. 2

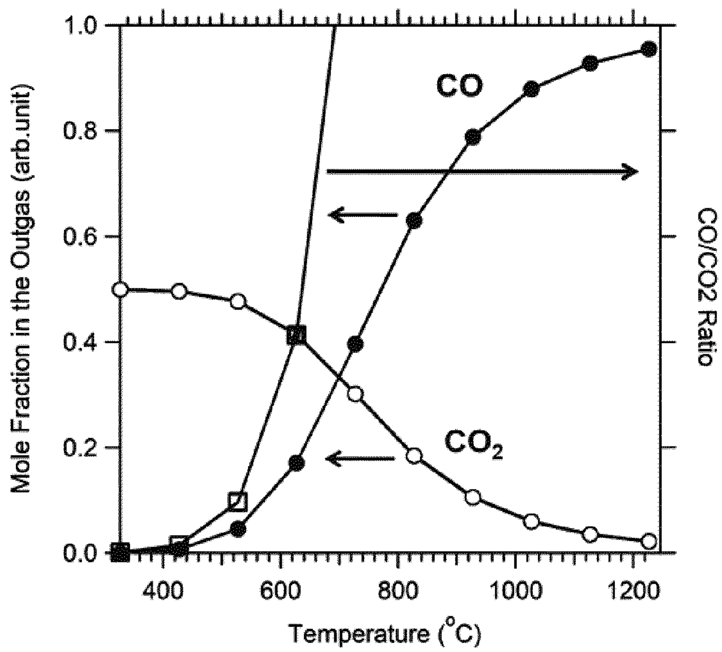
Mole Fraction in the Outgas (arb.unit)
CO/CO2 Ratio
CO
CO2
Temperature (°C)
1.0
0.8
0.6
0.4
0.2
0.0
400
600
800
1000
1200

Fig. 3

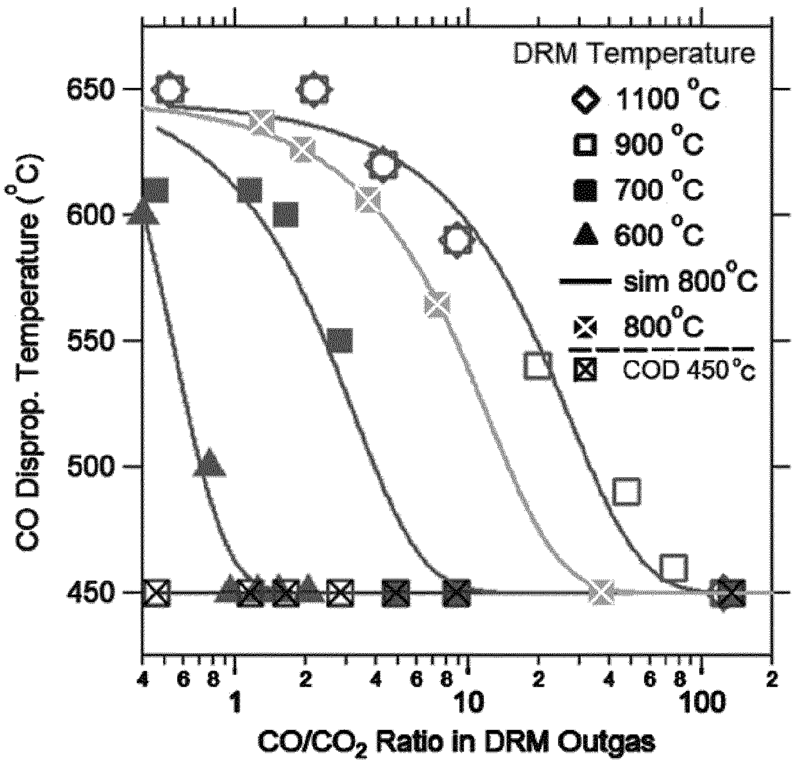
DRM Temperature
1100 °C
900 °C
700 °C
600 °C
sim 800°C
800°C
COD 450°c
CO Disprop. Temperature (°C)
650
600
550
500
450
4 6 8 1 2 4 6 8 10 2 4 6 8 100 2
CO/CO2 Ratio in DRM Outgas

Fig. 4

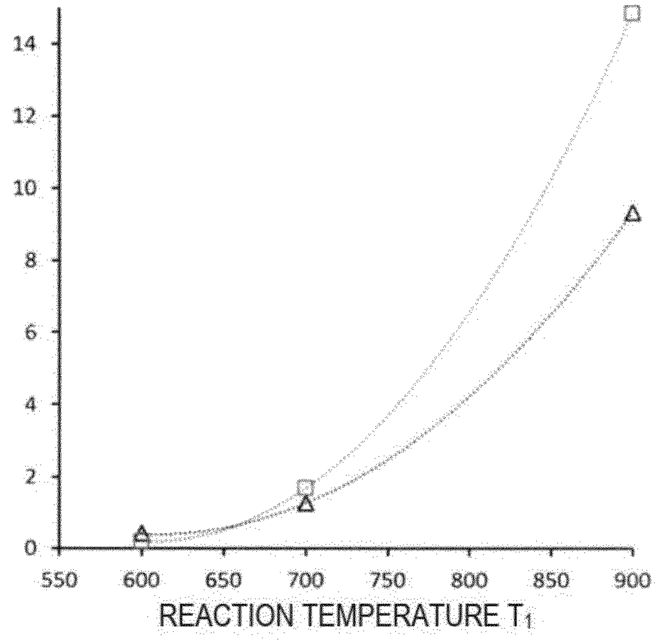
14
12
10
8
6
4
2
0
550
600
650
700
750
800
850
900
REACTION TEMPERATURE T1

Fig. 5

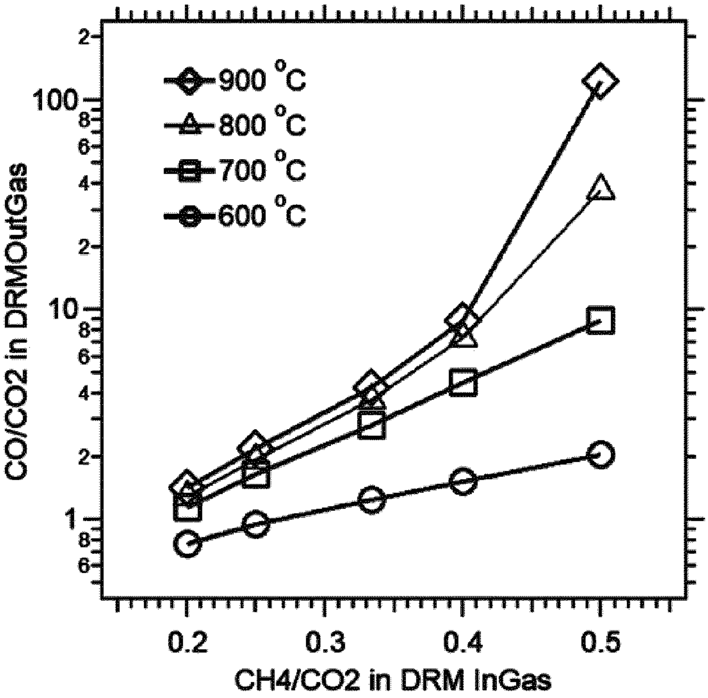
900 °C
800 °C
700 °C
600 °C
CO/CO2 in DRMOutGas
CH4/CO2 in DRM InGas
0.2
0.3
0.4
0.5
1
10
100

Fig. 6

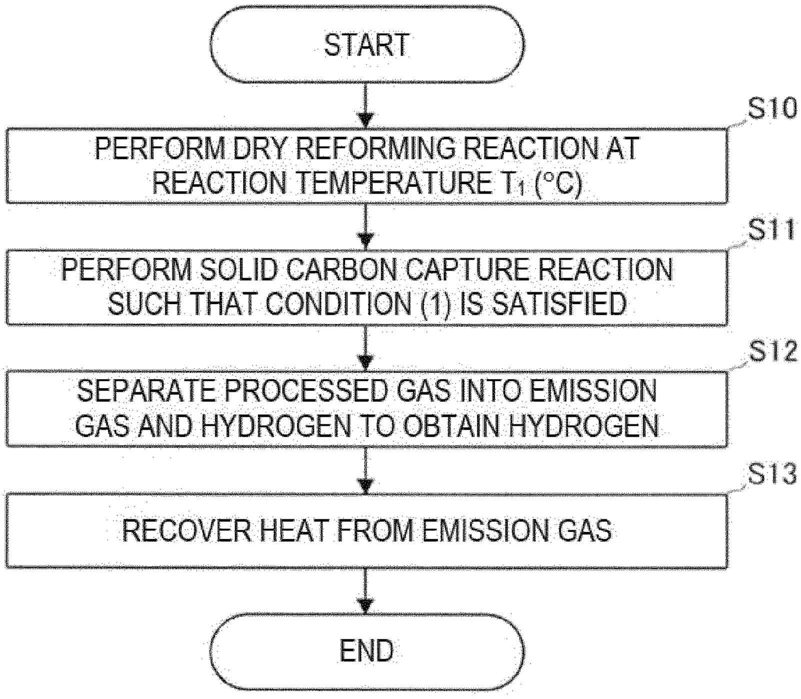
START
S10
PERFORM DRY REFORMING REACTION AT REACTION TEMPERATURE $T_1$ (°C)
S11
PERFORM SOLID CARBON CAPTURE REACTION SUCH THAT CONDITION (1) IS SATISFIED
S12
SEPARATE PROCESSED GAS INTO EMISSION GAS AND HYDROGEN TO OBTAIN HYDROGEN
S13
RECOVER HEAT FROM EMISSION GAS
END

Fig. 7

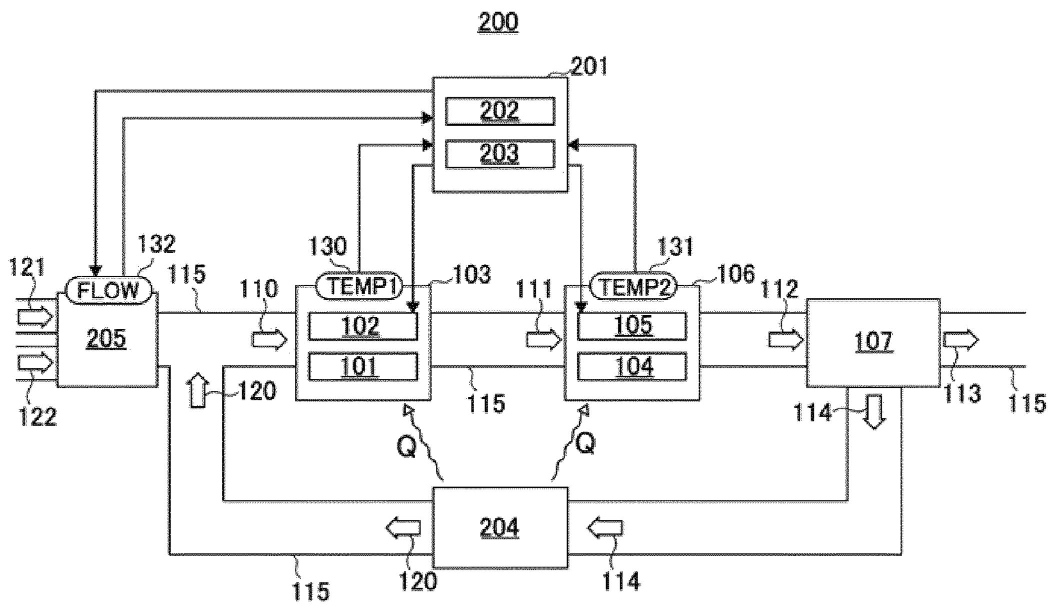
200
201
202
203
132
130
131
121
FLOW
115
110
TEMP1
103
111
TEMP2
106
112
205
102
105
107
101
104
122
120
115
113
115
114
Q
Q
204
120
114
115

Fig. 8

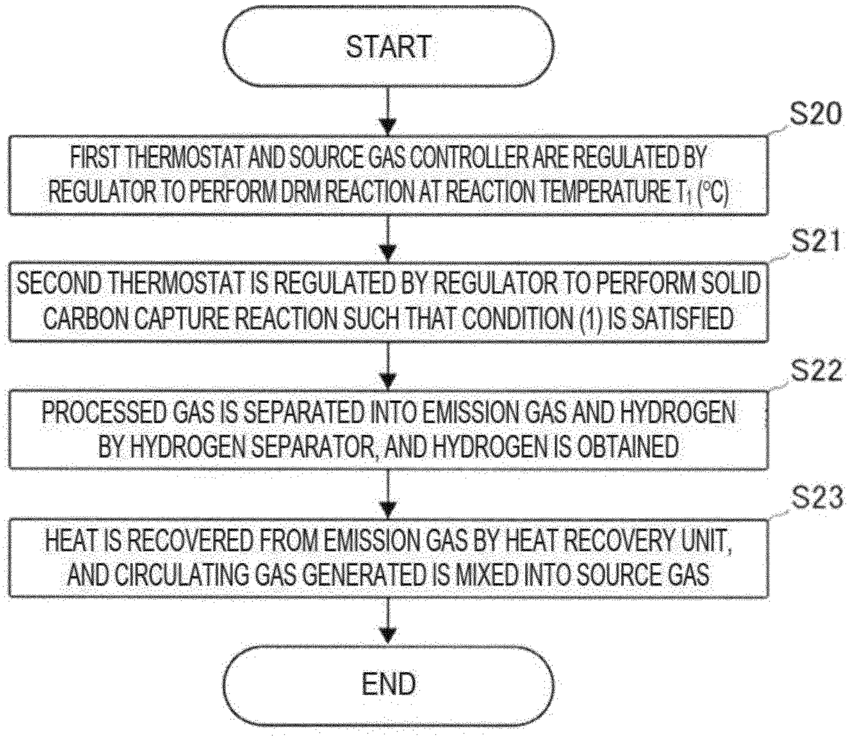
START
S20
FIRST THERMOSTAT AND SOURCE GAS CONTROLLER ARE REGULATED BY REGULATOR TO PERFORM DRM REACTION AT REACTION TEMPERATURE $T_1$ (°C)
S21
SECOND THERMOSTAT IS REGULATED BY REGULATOR TO PERFORM SOLID CARBON CAPTURE REACTION SUCH THAT CONDITION (1) IS SATISFIED
S22
PROCESSED GAS IS SEPARATED INTO EMISSION GAS AND HYDROGEN BY HYDROGEN SEPARATOR, AND HYDROGEN IS OBTAINED
S23
HEAT IS RECOVERED FROM EMISSION GAS BY HEAT RECOVERY UNIT, AND CIRCULATING GAS GENERATED IS MIXED INTO SOURCE GAS
END

Fig. 9

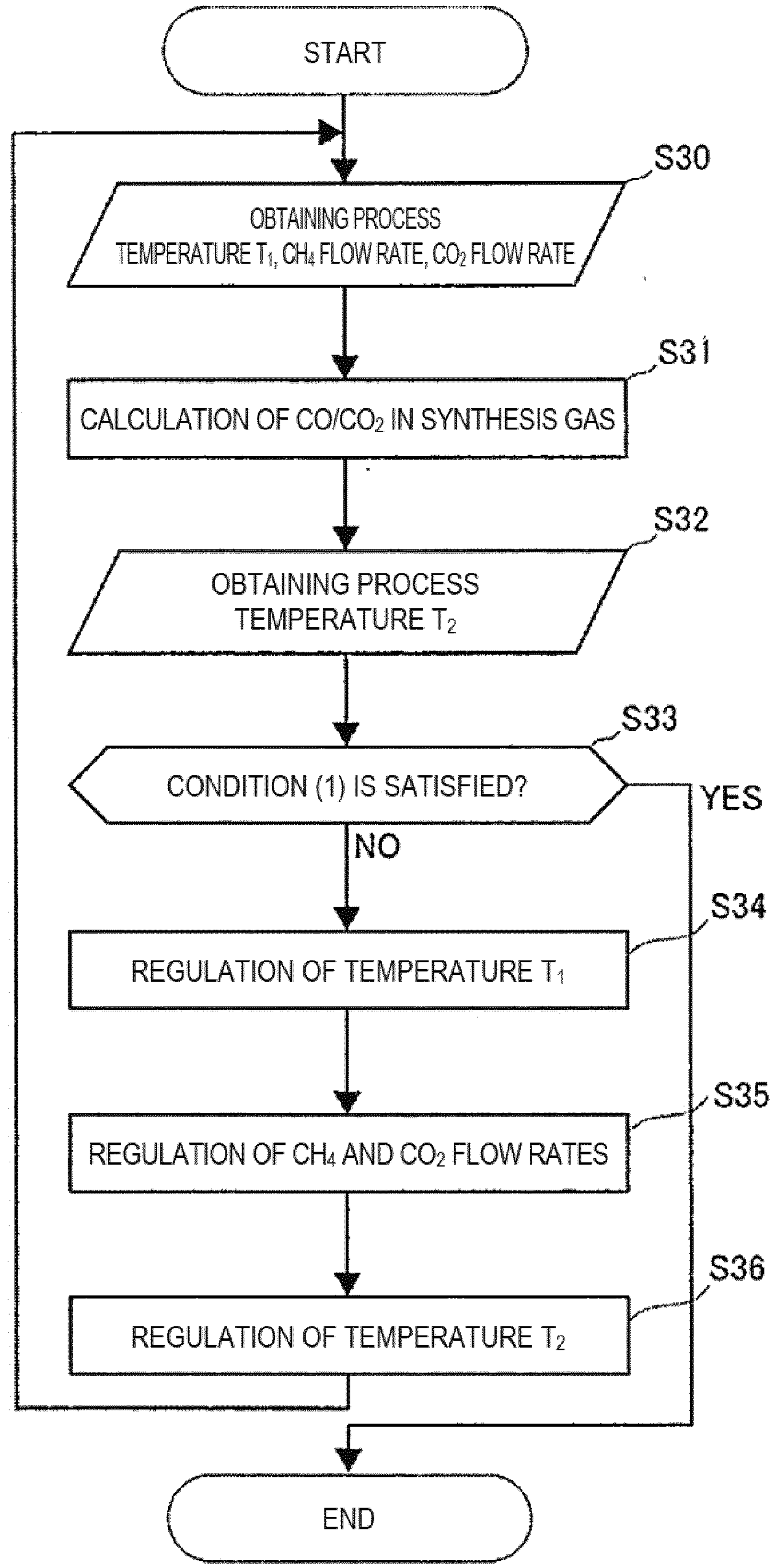
START
S30
OBTAINING PROCESS
TEMPERATURE $T_1$, $CH_4$ FLOW RATE, $CO_2$ FLOW RATE
S31
CALCULATION OF $CO/CO_2$ IN SYNTHESIS GAS
S32
OBTAINING PROCESS
TEMPERATURE $T_2$
S33
CONDITION (1) IS SATISFIED?
YES
NO
S34
REGULATION OF TEMPERATURE $T_1$
S35
REGULATION OF $CH_4$ AND $CO_2$ FLOW RATES
S36
REGULATION OF TEMPERATURE $T_2$
END

Fig. 10

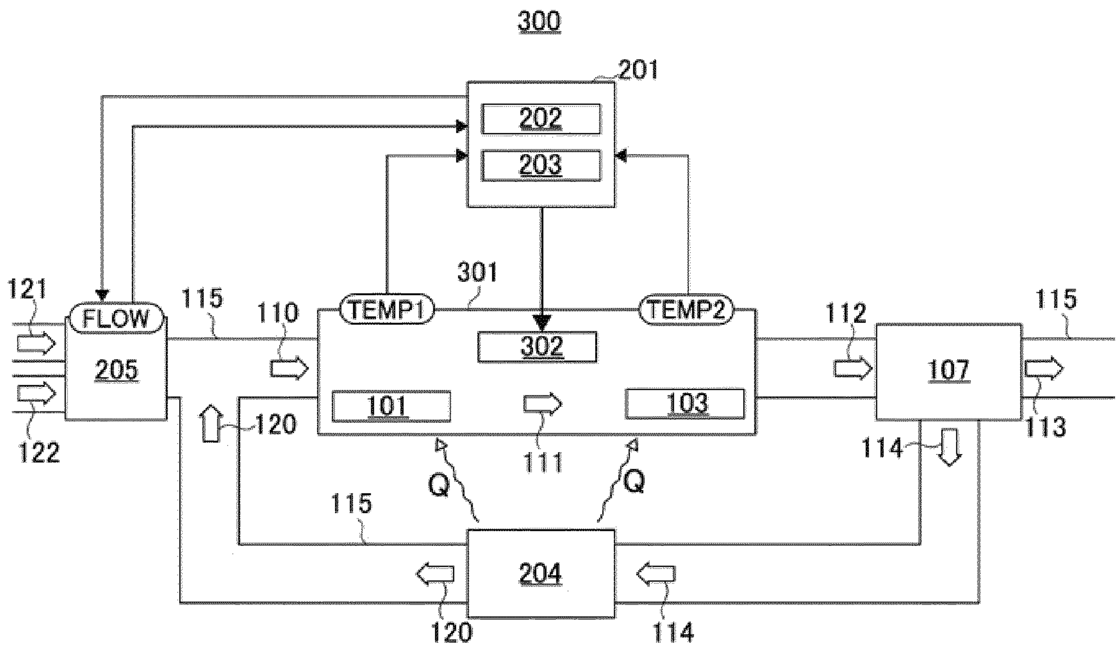
300
201
202
203
121
FLOW
205
115
110
TEMP1
301
302
TEMP2
112
107
115
101
103
113
122
120
111
114
Q
Q
115
204
120
114

Fig. 11

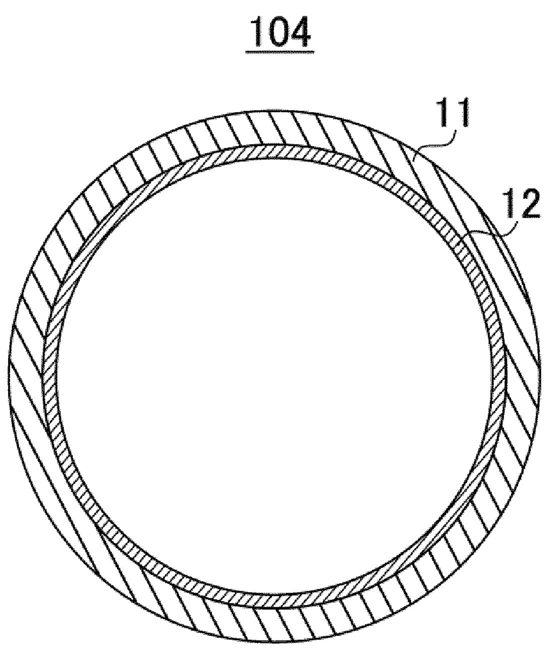
104
11
12

# Fig. 12

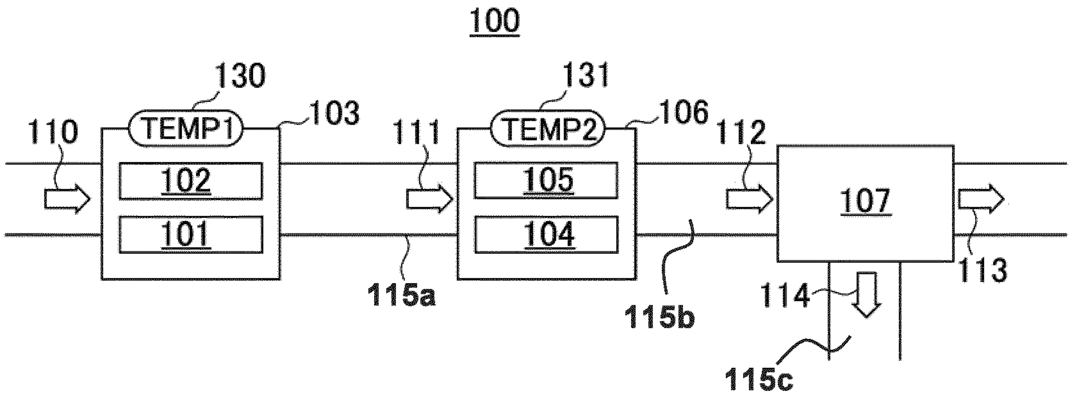
100
130
131
TEMP1
TEMP2
103
106
110
111
112
102
101
105
104
107
115a
115b
114
113
115c

# Fig. 13

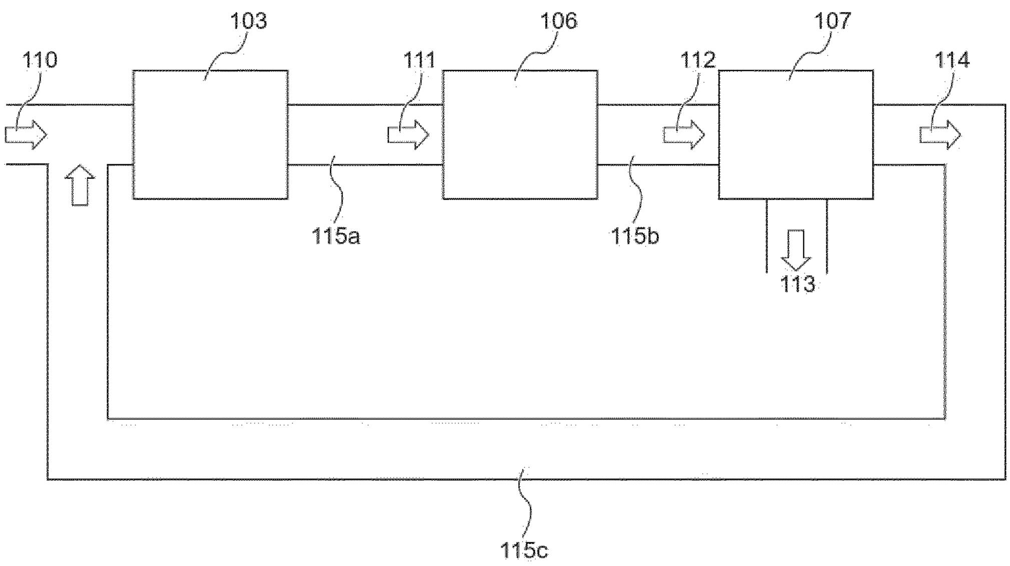
103
106
107
110
111
112
114
115a
115b
113
115c

Fig. 14

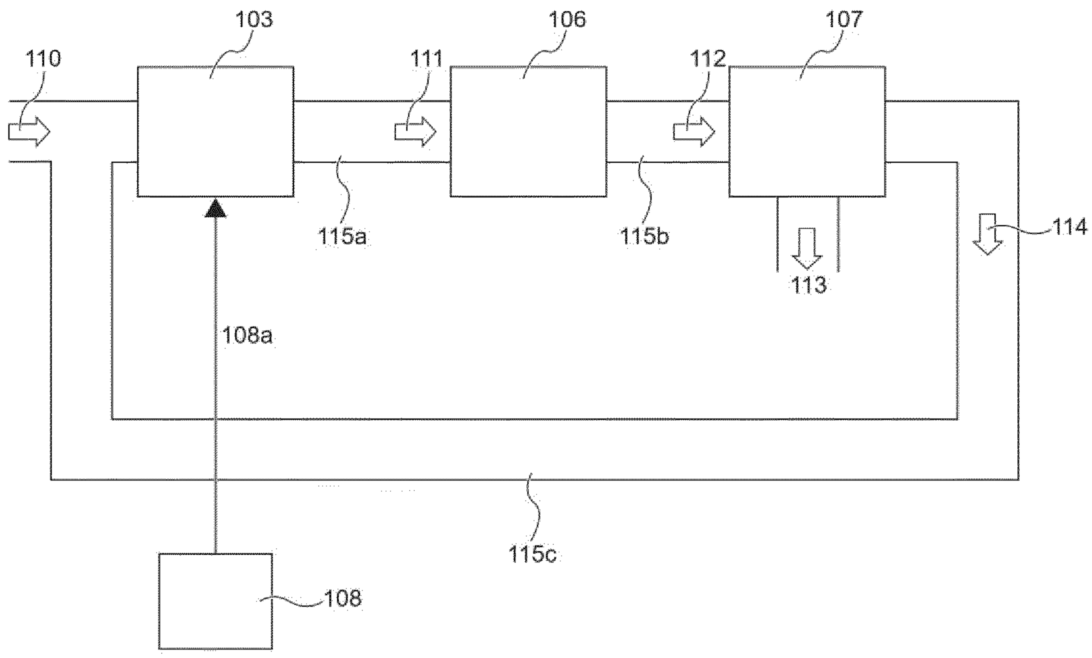
103
106
107
110
111
112
115a
115b
114
113
108a
115c
108

Fig. 15

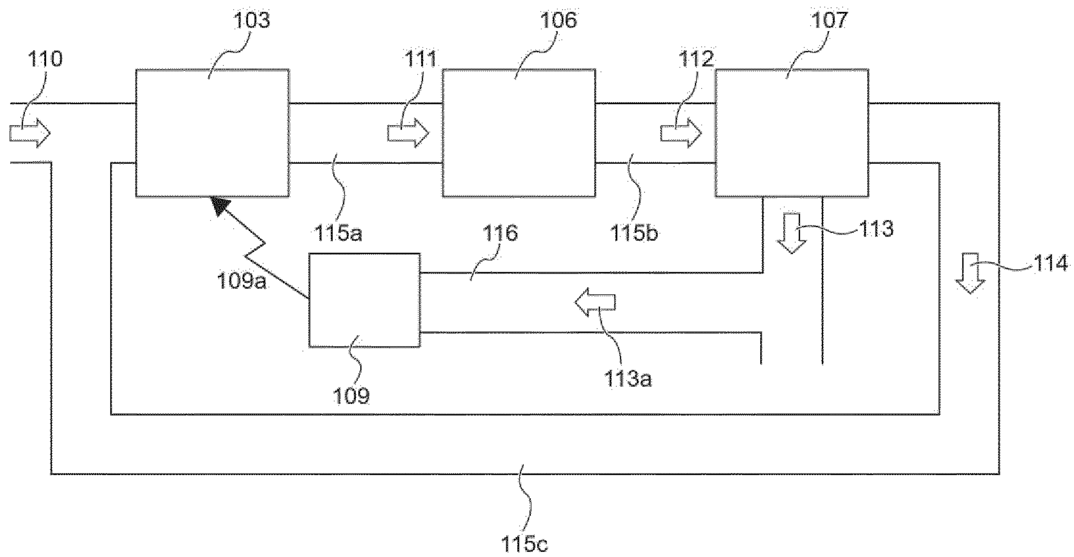
103
106
107
110
111
112
115a
116
115b
113
114
109a
113a
109
115c

Fig. 16

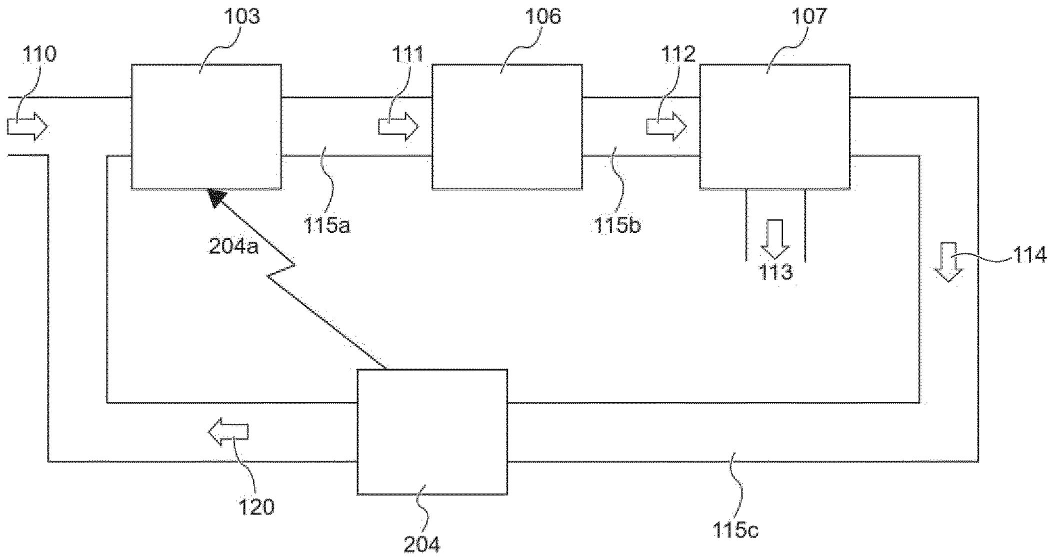
103
106
107
110
111
112
115a
115b
204a
113
114
120
204
115c

Fig. 17

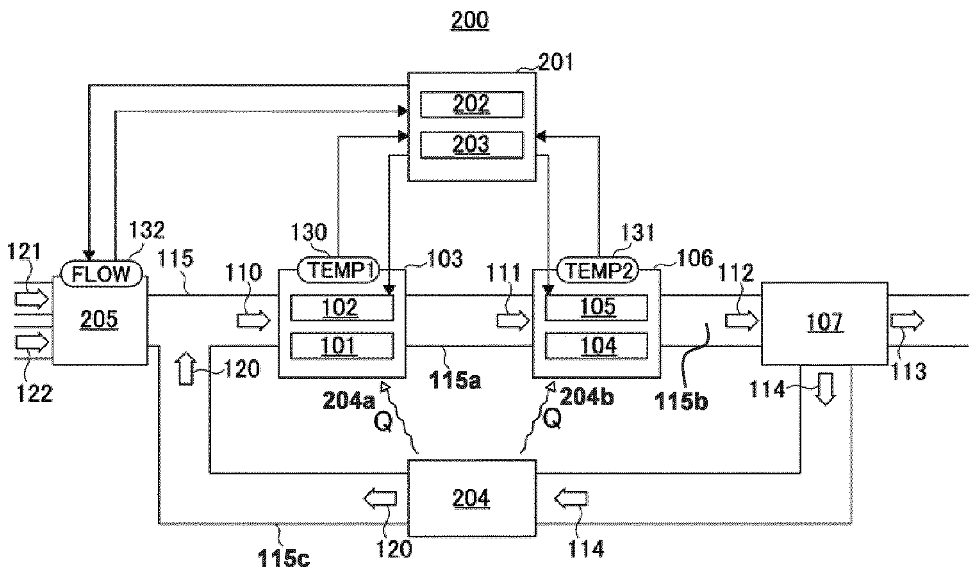
200
201
202
203
121
132
115
FLOW
205
122
130
TEMP1
103
102
101
110
111
131
TEMP2
106
105
104
112
107
113
120
115a
204a
Q
204b
Q
115b
114
204
115c
120
114

Fig. 18

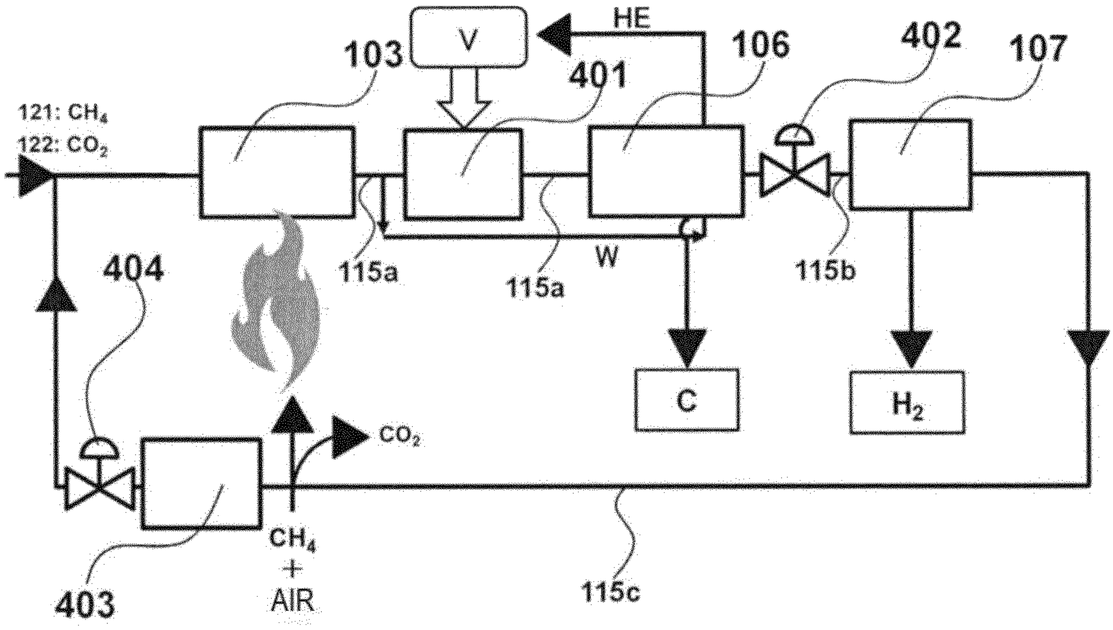
V
HE
103
401
106
402
107
121: CH4
122: CO2
115a
115a
W
115b
404
C
H2
CO2
CH4
+
AIR
403
115c

Fig. 19

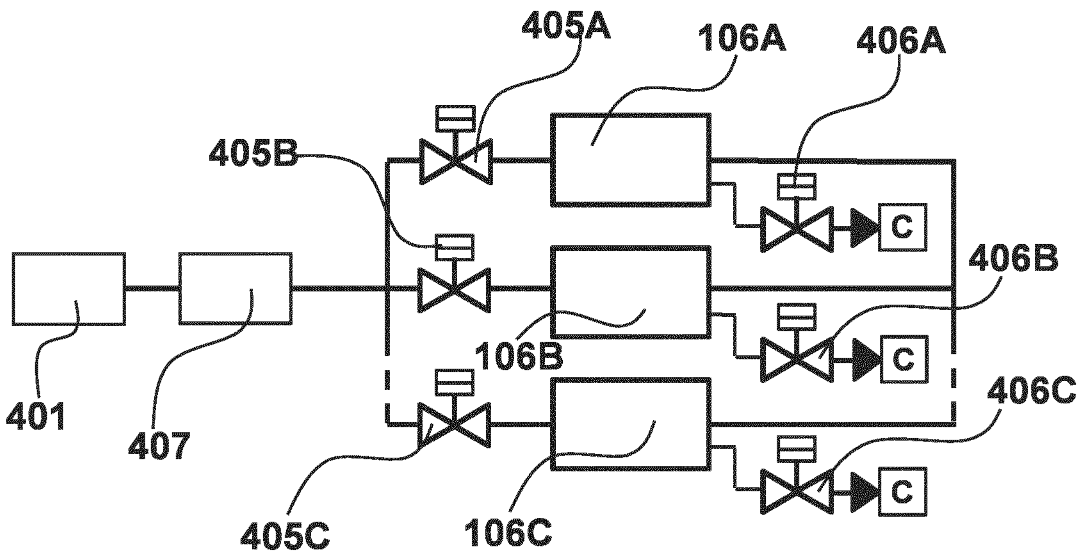
405A
106A
406A
405B
C
406B
C
106B
406C
401
407
C
405C
106C

Fig. 20

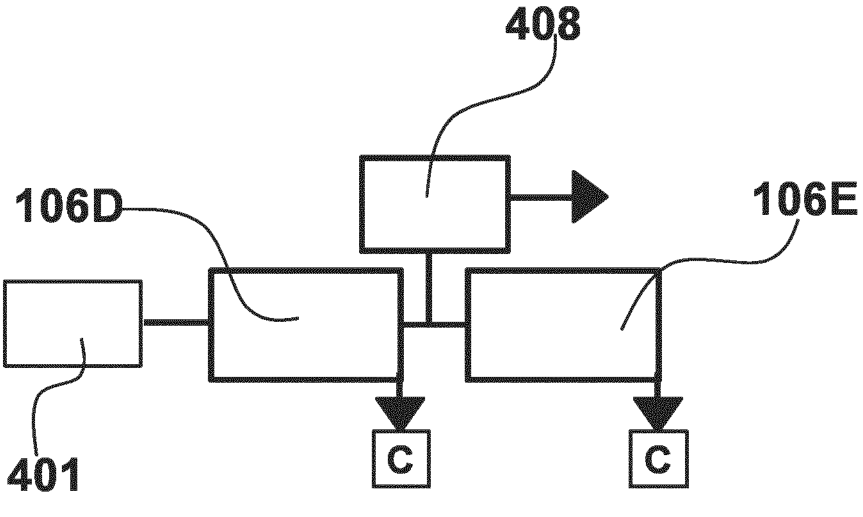
408
106D
106E
401
C
C

Fig. 21

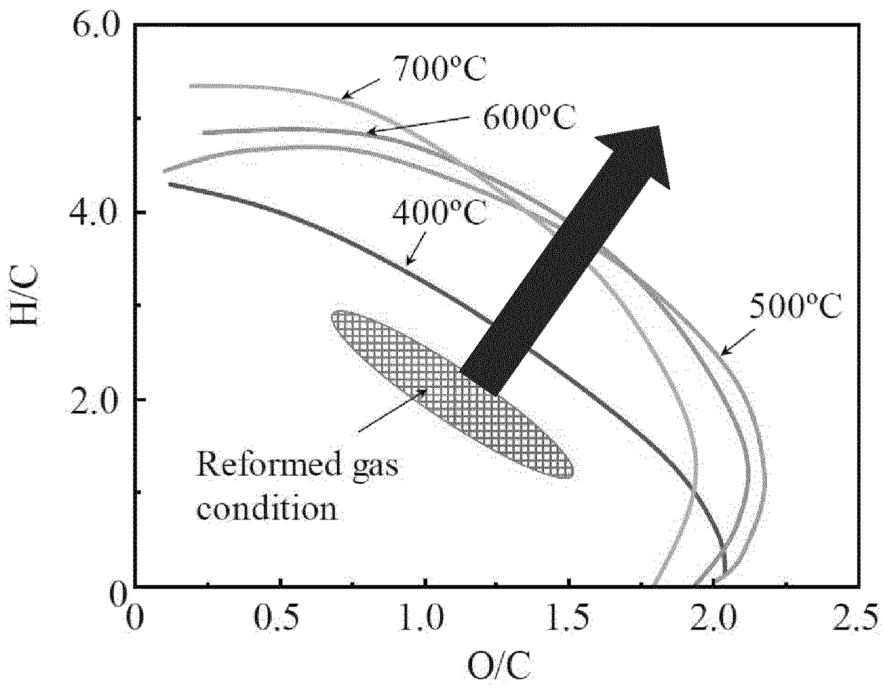
6.0
4.0
2.0
0
H/C
700°C
600°C
400°C
500°C
Reformed gas
condition
0
0.5
1.0
1.5
2.0
2.5
O/C

Fig. 22

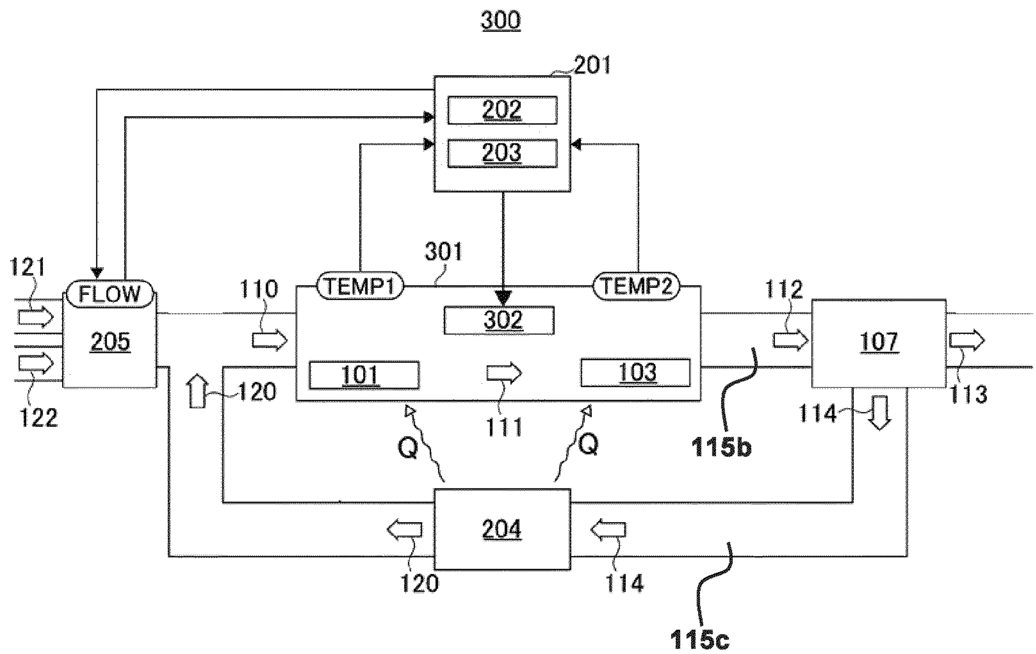
300
201
202
203
121
FLOW
205
122
110
TEMP1
301
302
TEMP2
112
107
113
101
103
120
111
114
115b
Q
Q
204
120
114
115c

Fig. 23

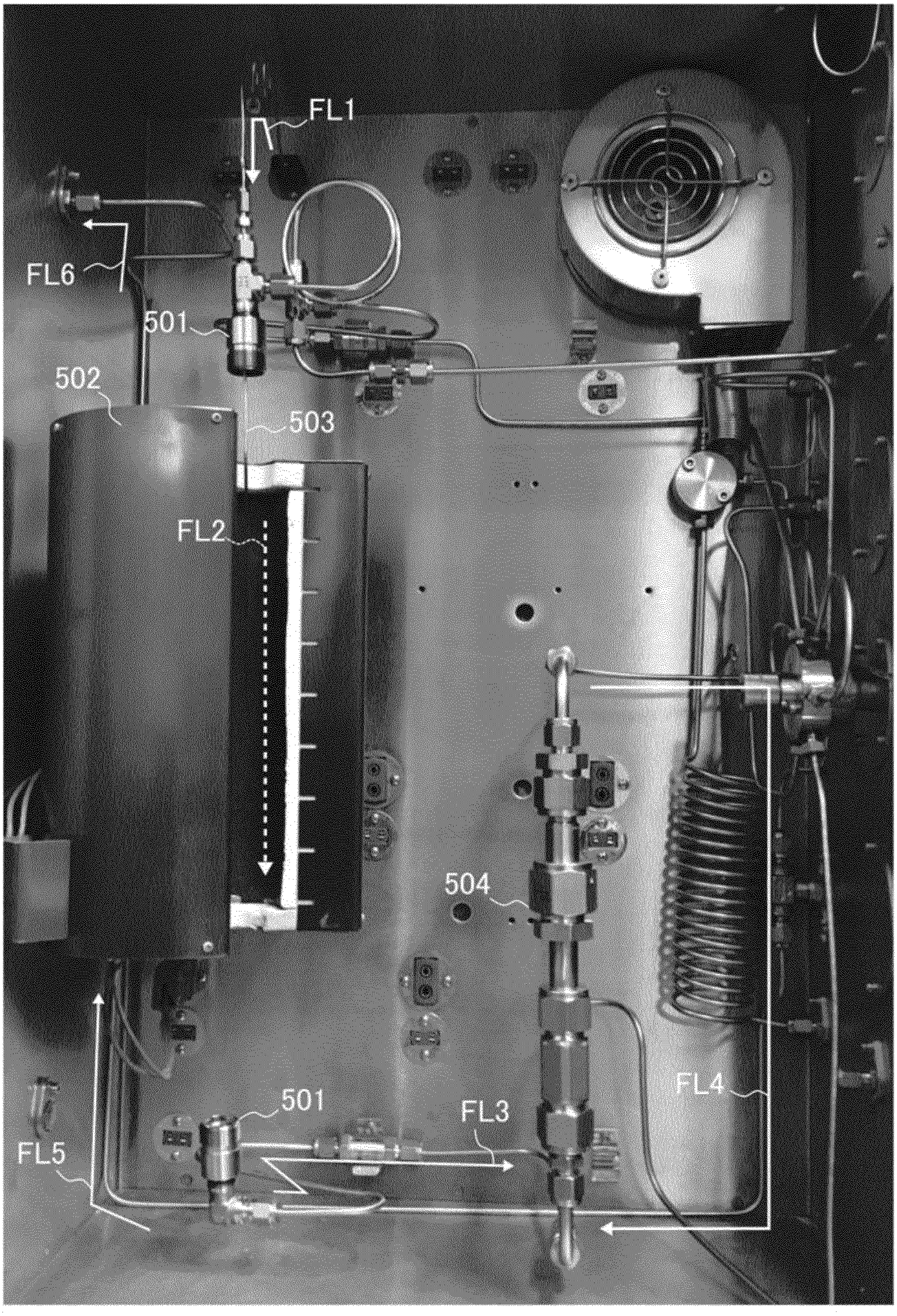

Fig. 24

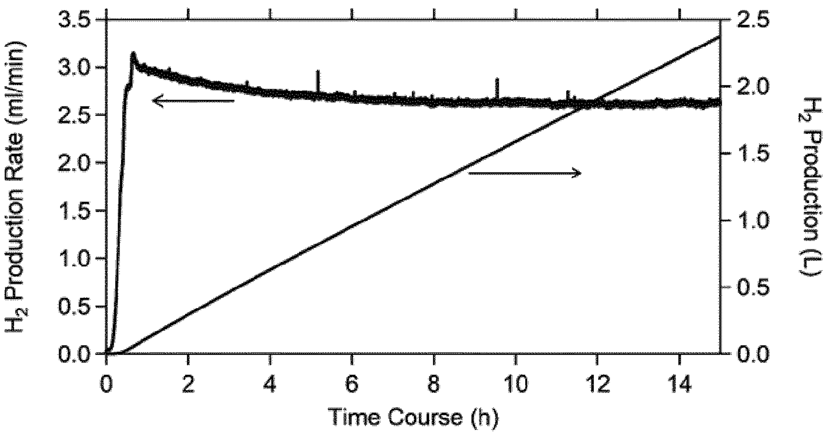
3.5
3.0
2.5
2.0
1.5
1.0
0.5
0.0
$H_2$ Production Rate (ml/min)
0
2
4
6
8
10
12
14
Time Course (h)
2.5
2.0
1.5
1.0
0.5
0.0
$H_2$ Production (L)

Fig. 25

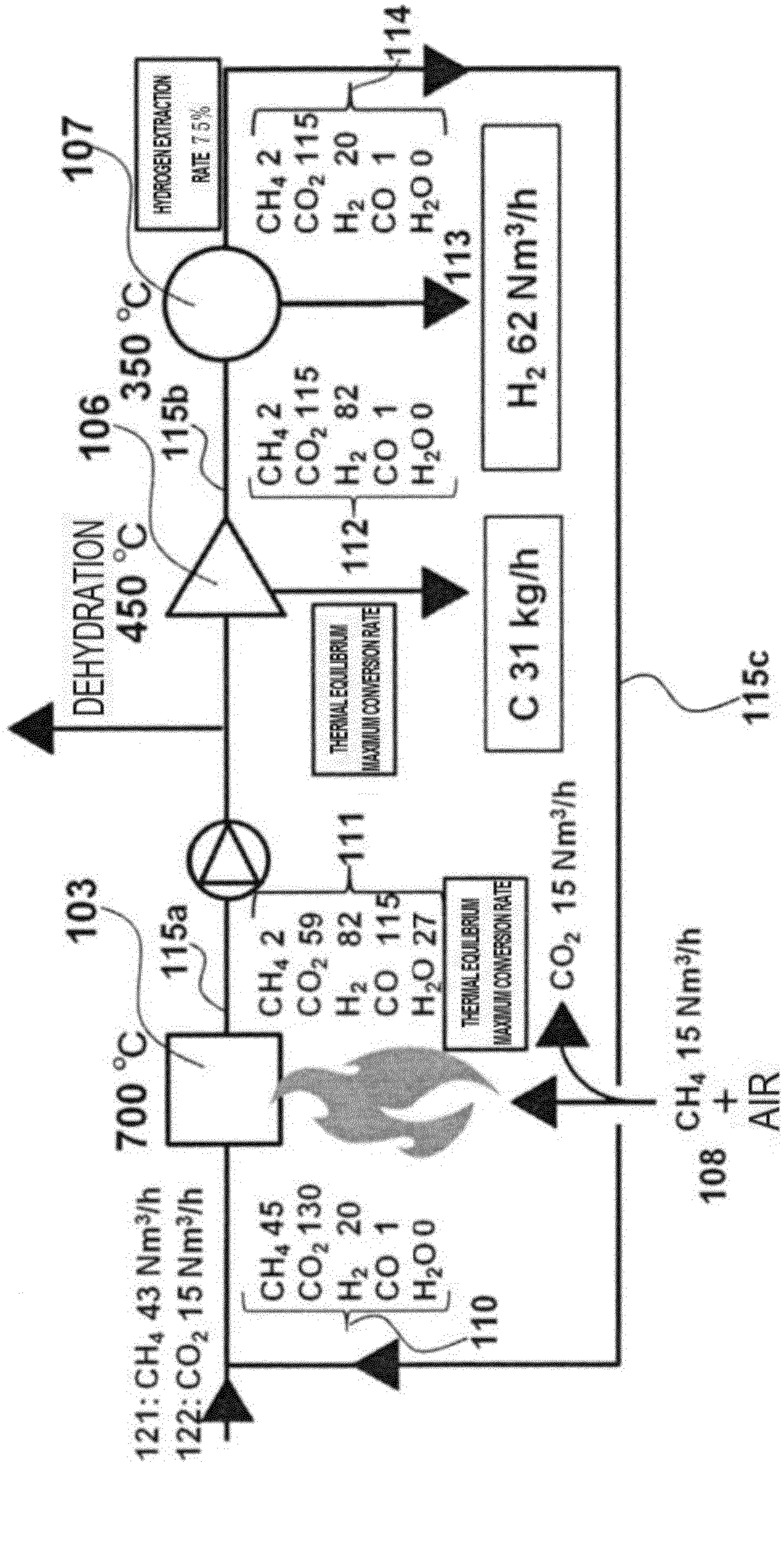
121: $CH_4$ 43 $Nm^3/h$
122: $CO_2$ 15 $Nm^3/h$
110
$CH_4$ 45
$CO_2$ 130
$H_2$ 20
CO 1
$H_2O$ 0
700 °C
103
115a
$CH_4$ 2
$CO_2$ 59
$H_2$ 82
CO 115
$H_2O$ 27
111
THERMAL EQUILIBRIUM MAXIMUM CONVERSION RATE
$CO_2$ 15 $Nm^3/h$
108
$CH_4$ 15 $Nm^3/h$
+
AIR
DEHYDRATION
450 °C
106
115b
THERMAL EQUILIBRIUM MAXIMUM CONVERSION RATE
112
$CH_4$ 2
$CO_2$ 115
$H_2$ 82
CO 1
$H_2O$ 0
C 31 kg/h
350 °C
107
HYDROGEN EXTRACTION RATE 75%
113
$H_2$ 62 $Nm^3/h$
114
$CH_4$ 2
$CO_2$ 115
$H_2$ 20
CO 1
$H_2O$ 0
115c

Fig. 26

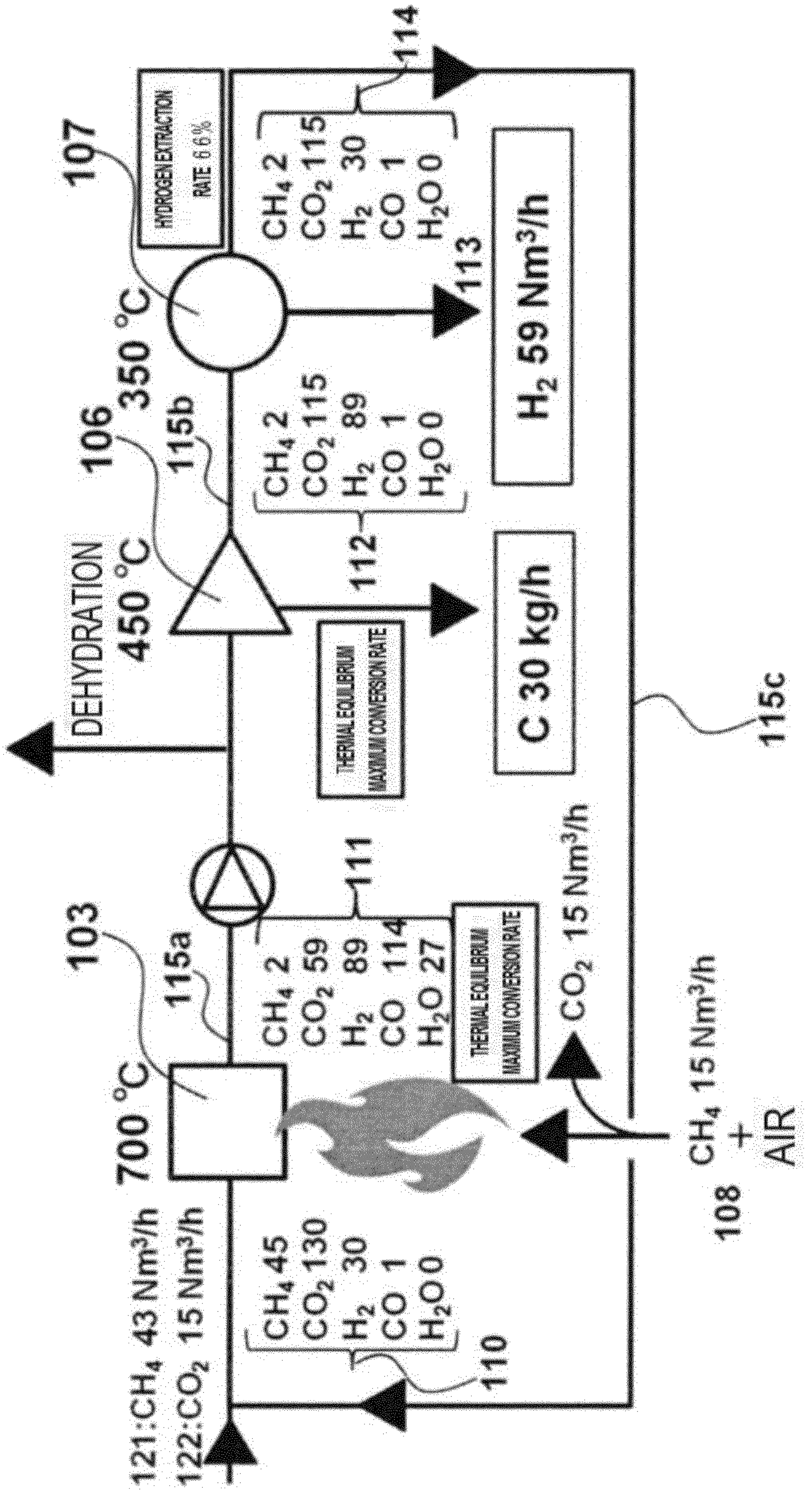
121:$CH_4$ 43 $Nm^3/h$
122:$CO_2$ 15 $Nm^3/h$
$CH_4$ 45
$CO_2$ 130
$H_2$ 30
CO 1
$H_2O$ 0
110
700 °C
103
115a
$CH_4$ 2
$CO_2$ 59
$H_2$ 89
CO 114
$H_2O$ 27
111
THERMAL EQUILIBRIUM MAXIMUM CONVERSION RATE
$CO_2$ 15 $Nm^3/h$
108
$CH_4$ + AIR
$CH_4$ 15 $Nm^3/h$
DEHYDRATION
450 °C
106
THERMAL EQUILIBRIUM MAXIMUM CONVERSION RATE
C 30 kg/h
112
115b
$CH_4$ 2
$CO_2$ 115
$H_2$ 89
CO 1
$H_2O$ 0
350 °C
107
HYDROGEN EXTRACTION RATE 66%
113
$H_2$ 59 $Nm^3/h$
$CH_4$ 2
$CO_2$ 115
$H_2$ 30
CO 1
$H_2O$ 0
114
115c

Fig. 27

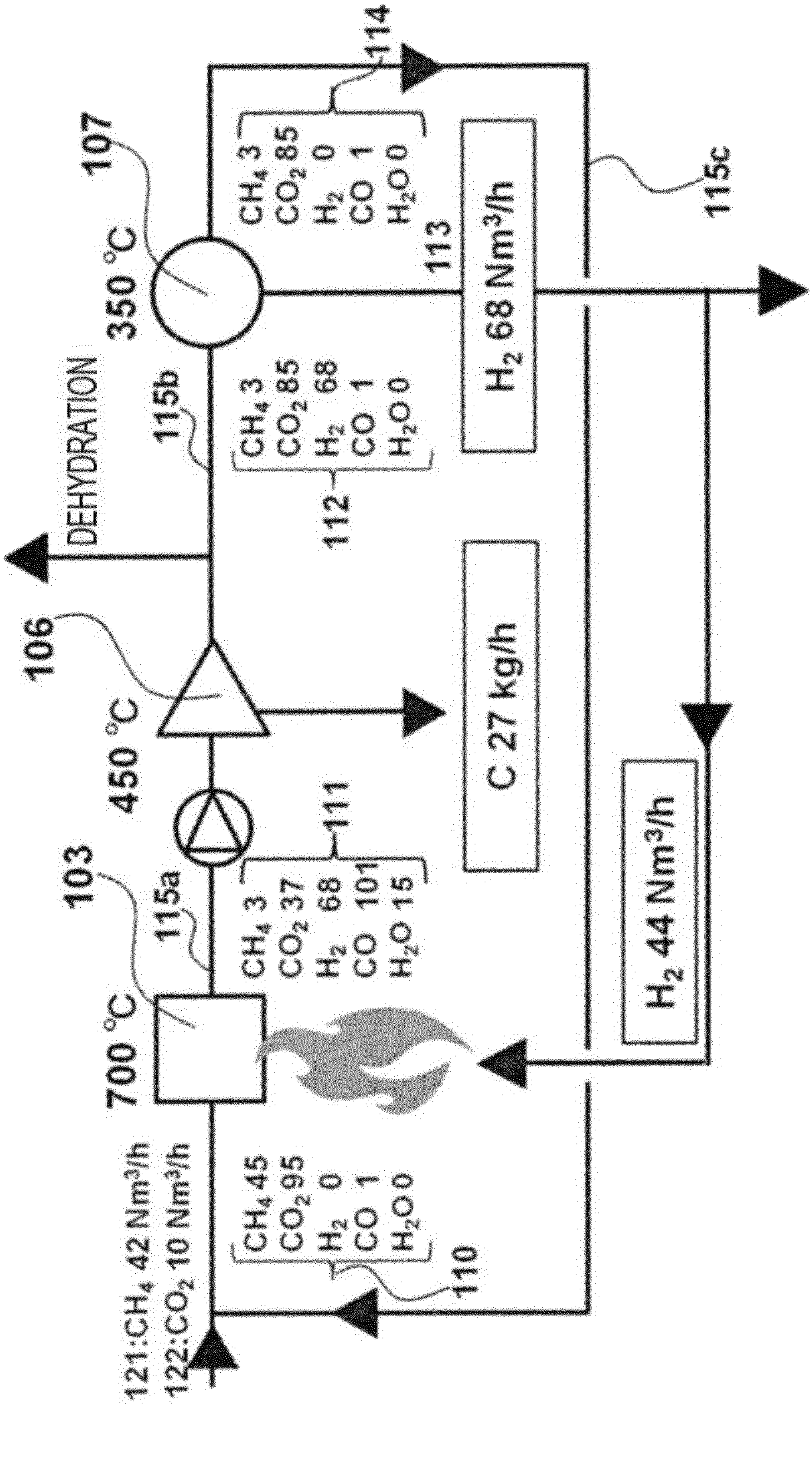
121:CH4 42 Nm3/h
122:CO2 10 Nm3/h
CH4 45
CO2 95
H2 0
CO 1
H2O 0
110
700 °C
103
115a
CH4 3
CO2 37
H2 68
CO 101
H2O 15
111
450 °C
106
C 27 kg/h
H2 44 Nm3/h
DEHYDRATION
115b
CH4 3
CO2 85
H2 68
CO 1
H2O 0
112
350 °C
107
113
H2 68 Nm3/h
CH4 3
CO2 85
H2 0
CO 1
H2O 0
114
115c

Fig. 28

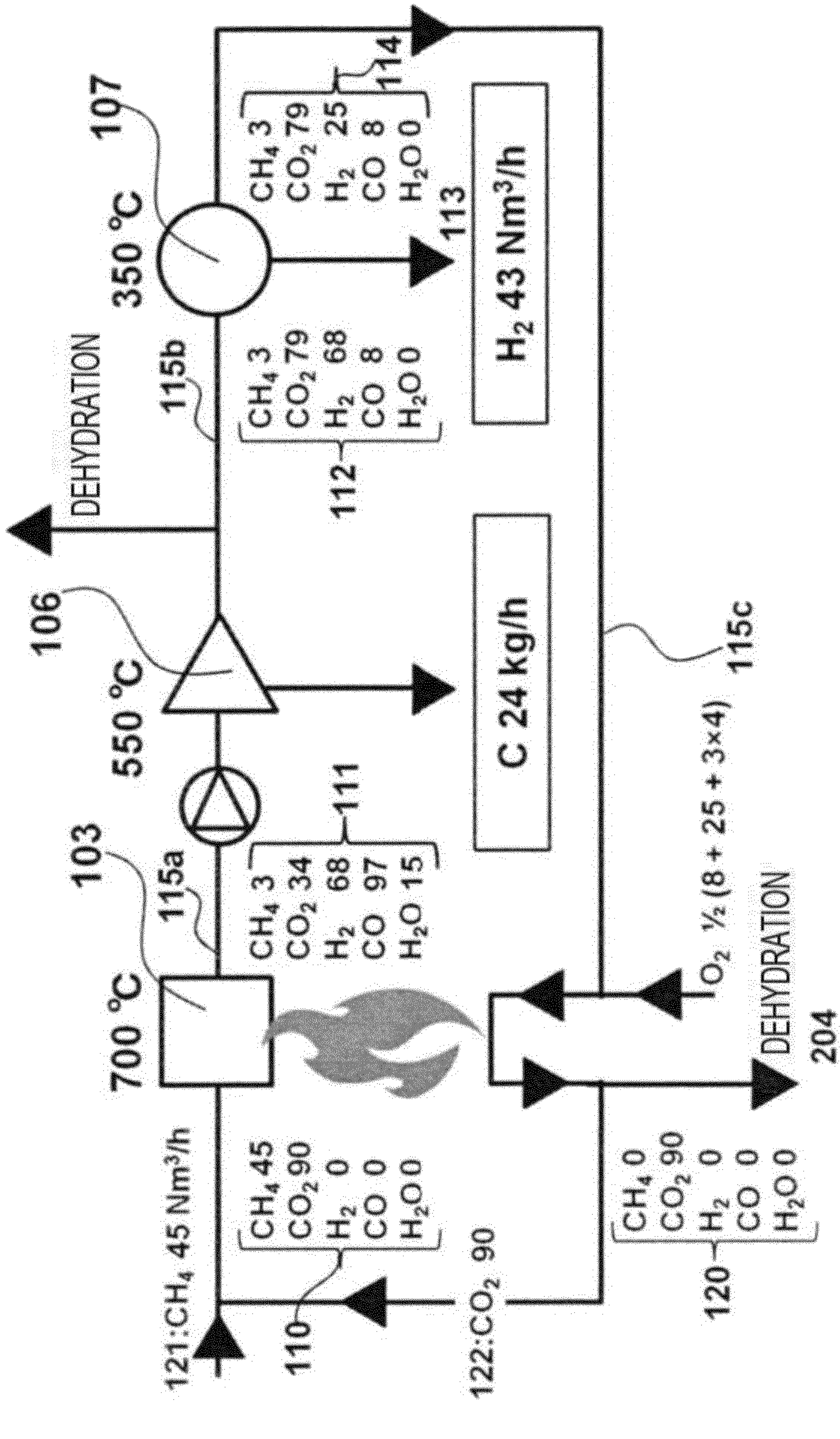

121:CH4 45 Nm3/h
122:CO2 90
110
CH4 45
CO2 90
H2 0
CO 0
H2O 0
700 °C
103
115a
CH4 3
CO2 34
H2 68
CO 97
H2O 15
111
550 °C
106
DEHYDRATION
115b
112
CH4 3
CO2 79
H2 68
CO 8
H2O 0
350 °C
107
CH4 3
CO2 79
H2 25
CO 8
H2O 0
114
113
H2 43 Nm3/h
C 24 kg/h
115c
O2 ½ (8 + 25 + 3×4)
DEHYDRATION
204
120
CH4 0
CO2 90
H2 0
CO 0
H2O 0

## INTERNATIONAL SEARCH REPORT

International application No. **PCT/JP2022/040546**

**A. CLASSIFICATION OF SUBJECT MATTER**

***C01B 3/40***(2006.01)i; ***C01B 3/56***(2006.01)i; ***H01M 8/00***(2016.01)i; ***H01M 8/04***(2016.01)i; ***H01M 8/0612***(2016.01)i; ***B01J 23/83***(2006.01)i
FI: C01B3/40; C01B3/56 Z; B01J23/83 M; H01M8/00 Z; H01M8/04 Z; H01M8/0612

According to International Patent Classification (IPC) or to both national classification and IPC

**B. FIELDS SEARCHED**

Minimum documentation searched (classification system followed by classification symbols)

C01B3/40; C01B3/56; H01M8/00; H01M8/04; H01M8/0612; B01J23/83

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2018-104282 A (SEERSTONE LLC) 05 July 2018 (2018-07-05) entire text, all drawings | 1–32 |
| A | JP 2016-175818 A (SUMITOMO SEIKA CHEMICALS) 06 October 2016 (2016-10-06) entire text, all drawings | 1–32 |
| A | JP 2019-037905 A (NAT INST MATERIALS SCIENCE) 14 March 2019 (2019-03-14) entire text, all drawings | 1–32 |
| A | JP 2017-501958 A (BASF SE) 19 January 2017 (2017-01-19) entire text, all drawings | 1–32 |
| A | 福原長寿, 常温作動のメタン化技術で拓くＣＯ２ガスの資源化と固定炭素化, ペトロテック, 01 May 2021, vol. 44, no. 5, pp. 322-326 3 CO2 treatment by structured catalyst system, 4 Collection of solid carbon, (FUKUHARA, Choji. Petrotech.), non-official translation (Resources of CO2 gas and carbon fixation lead methanation technology that operates at room temperature) | 1–32 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2022** | **27 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/040546**

**C. DOCUMENTS CONSIDERED TO BE RELEVANT**

| Category* | Citation of document, with indication, where appropriate, of the relevant passages | Relevant to claim No. |
|---|---|---|
| P, A | WO 2021/235443 A1 (UNIV SHIZUOKA NAT UNIV CORP) 25 November 2021 (2021-11-25) entire text, all drawings | 1–32 |
| P, X | JP 2022-021242 A (TOKYO GAS CO LTD) 02 February 2022 (2022-02-02) claim 1, paragraphs [0012], [0034], [0042]-[0043], [0060], [0088], fig. 6 | 17-19, 21, 23 |

Form PCT/ISA/210 (second sheet) (January 2015)

**INTERNATIONAL SEARCH REPORT**
**Information on patent family members**

International application No.
**PCT/JP2022/040546**

| Patent document cited in search report | Publication date (day/month/year) | Patent family member(s) | Publication date (day/month/year) |
|---|---|---|---|
| JP 2018-104282 A | 05 July 2018 | WO 2013/158160 A1<br>entire text, all drawings<br>US 2015/0071846 A1<br>EP 2838839 A1<br>CN 104302575 A | |
| JP 2016-175818 A | 06 October 2016 | (Family: none) | |
| JP 2019-037905 A | 14 March 2019 | (Family: none) | |
| JP 2017-501958 A | 19 January 2017 | US 2016/0311684 A1<br>entire text, all drawings<br>WO 2015/091310 A1<br>EP 2886514 A1<br>KR 10-2016-0100327 A<br>CN 106029558 A | |
| WO 2021/235443 A1 | 25 November 2021 | (Family: none) | |
| JP 2022-021242 A | 02 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006055820 A
- JP 2019037905 A
- JP 2000159503 A
- JP 2005232533 A
- JP 2006043677 A
- JP 2008055295 A
- JP 2019005684 A


### Non-patent literature cited in the description


- *Journal of CO2 Utilization,* 2017, vol. 22, 91-96
- *Chemical. Science,* 2019, vol. 10, 3701-3705
- *Chemical. Science.,* 2019, vol. 10, 3701-3705
- *Chemical Science,* 2019, vol. 10, 3701-3705